# EUROPEAN PATENT APPLICATION

(11) **EP 4 399 960 A1**
(43) Date of publication of application: **17.07.2024**
(21) Application number: 24151367.0
(22) Date of filing: 11.01.2024
(51) Int. Cl.: A01G 9/12, A01G 17/08

(54) **BINDING MACHINE**

(30) Priority: 13.01.2023 JP 2023004106; 08.11.2023 JP 2023190918
(71) Applicant: Max Co., Ltd., Tokyo 103-8502 (JP)
(72) Inventor: ASAI, Masatoshi, Tokyo, 1038502 (JP)
(74) Representative: Samson & Partner Patentanwälte mbB

(57) **Abstract**

The invention concerns a binding machine (10) including: a magazine (14) configured to hold a staple (S) that includes a first leg portion (S1) and a second leg portion (S2), and that has an opening between the first leg portion (S1) and the second leg portion (S2); a driver (42) configured to move the staple (S) held by the magazine (14) in a forward direction with the opening at the front; a guiding portion (42B) configured to guide an inside of the first leg portion (S1) when the staple (S) is moved by the driver (42); and a displacement portion (20) configured to bind an object (G) to be bound inserted into the opening by displacing the first leg portion (S) of the staple (S) moved by the driver (42). The guiding portion (42B) is configured for retracting from a guide position for guiding the inside of the first leg portion (S1) when the staple (S) moves by a predetermined distance.

## Description

### TECHNICAL FIELD

The present disclosure relates to a binding machine and a binding method.

### BACKGROUND ART

It is known that a plant and the like are bound with a wire or the like by using a binding tool such as a staple.

Patent Literature 1 describes an example of such a staple. The staple includes a pair of left and right arms and a convex protrusion provided between the arms.

Patent Literature 2 describes an electric binding machine that includes a rechargeable power source detachably connected to a mounting shell. The binding machine described in Patent Literature 2 can perform binding by using the staple described in Patent Literature 1.
Patent Literature 1: European Patent No. 1839482
Patent Literature 2: Chinese Patent Application Publication No. 111903423
Patent Literature 3: JP2023-013317A

The staple and the like described in Patent Literature 1 restrain the relative movement of two objects, that is, a first object and a second object, and thus Patent Literature 1 discloses a binding tool (a staple) for binding the first object and the second object.

Patent Literature 2 discloses a binding machine using the staple disclosed in Patent Literature 1.

However, the invention described in any of Patent Literatures 1 and 2 does not provide means for solving the problem that a tip end portion and the like of the staple are displaced in an unintended direction when the staple held by a magazine is moved to a binding portion.

Therefore, an example of the object of the present disclosure is to provide a binding machine and a binding method that can move a staple held by a magazine to a binding portion while restraining the deformation of the staple when moving the staple to the binding portion.

### SUMMARY OF INVENTION

A binding machine includes: a magazine configured to hold a staple that includes a first leg portion and a second leg portion, and that has an opening between the first leg portion and the second leg portion; a driver configured to move the staple held by the magazine in a forward direction with the opening at the front; a guiding portion configured to guide an inside of the first leg portion when the staple is moved by the driver; and a displacement portion configured to bind an object to be bound inserted into the opening by displacing the first leg portion of the staple moved by the driver. The guiding portion retracts from a guide position for guiding the inside of the first leg portion when the staple moves by a predetermined distance.

The guiding portion may be configured to move in a downward direction and configured to retract from the guide position.

The guiding portion may be configured to come into contact with the staple and configured to move in the downward direction.

The guiding portion may have an inclined surface that is inclined in an upward direction toward a rearward direction and that is configured to be in contact with the staple.

The guiding portion may be configured to move in an upward direction and configured to retract from the guide position.

The guiding portion may be configured to come into contact with the staple and configured to move in the upward direction.

The guiding portion may have an inclined surface that is inclined in a downward direction toward a rearward direction and that is configured to be in contact with the staple.

The guiding portion may be provided above the magazine.

The guiding portion may have a wall surface that is configured to guide the inside of the first leg portion and that is parallel to a forward-rearward direction.

The displacement portion may include a fulcrum portion positioned in an inward direction of the first leg portion, and a bending portion positioned in an outward direction of the first leg portion and configured to bend the first leg portion in the inward direction with the fulcrum portion as a fulcrum. The predetermined distance may be at least a distance by which a tip end of the first leg portion passes through the fulcrum portion.

The displacement portion may include a fulcrum portion positioned in an inward direction of the first leg portion, and a bending portion positioned in an outward direction of the first leg portion and configured to bend the first leg portion in the inward direction with the fulcrum portion as a fulcrum. The bending portion may include an engagement portion that is configured to be engaged with the first leg portion and that is configured to bend back the first leg portion bent in the inward direction. The predetermined distance may be at least a distance by which a tip end of the first leg portion passes through the engagement portion.

The binding machine may further include: a second guiding portion configured to move in the forward direction together with the driver and configured to guide an inside of the second leg portion.

The binding machine may further include: a slider configured to move in the forward direction together with the driver and configured to cause the displacement portion to operate. The second guiding portion may be provided in the slider and moves in the forward direction as the slider moves in the forward direction.

The binding machine may further include: a movable support wall configured to move to a position in a rearward direction with respect to the second guiding portion moved in the forward direction, and configured to guide the inside of the second leg portion by the movement thereof.

The guiding portion may be positioned at a front of a main body portion of the staple, the main body portion connecting the first leg portion and the second leg portion.

The binding machine may further include: a biasing member configured to bias the guiding portion in a direction opposite to a direction in which the guiding portion retracts.

### BRIEF DESCRIPTION OF DRAWINGS

FIG. 1A is a diagram illustrating an example of a staple before binding in a top view;
FIG. 1B is a diagram illustrating an example of the staple after the binding in the top view;
FIG. 1C is a diagram illustrating an example of the staple after the binding in a front view;
FIG. 2 is a schematic diagram of a binding method using a binding machine according to an embodiment;
FIG. 3 is a cross-sectional view of the binding machine according to the embodiment in a right side view;
FIG. 4A is a cross-sectional view of the binding machine according to the embodiment in the top view;
FIG. 4B is a cross-sectional view of the binding machine according to the embodiment in the front view;
FIG. 5 is a partially enlarged view (a perspective view) illustrating a front-end side of the binding machine according to the embodiment;
FIG. 6A is a perspective view of a driver according to the embodiment;
FIG. 6B is a plan view of the driver according to the embodiment in the top view;
FIG. 7A is a perspective view of a slider according to the embodiment;
FIG. 7B is a plan view of the slider according to the embodiment in the top view;
FIG. 8A is a partially enlarged view of a cross section of the binding machine according to the embodiment in a side view;
FIG. 8B is a partially enlarged view of a cross section of the binding machine according to the embodiment in a rear view;
FIG. 9 is a partially enlarged view (a perspective cross-sectional view) illustrating a nut part and the like of the binding machine according to the embodiment;
FIG. 10 is a cross-sectional view illustrating a detachment portion and the like of the binding machine according to the embodiment;
FIG. 11A is a partially enlarged view illustrating an initial state of the binding machine according to the embodiment in the front view;
FIG. 11B is a partially enlarged view illustrating the initial state of the binding machine according to the embodiment in the top view;
FIG. 12A is a partially enlarged view illustrating a plastic deformation start time of the binding machine according to the embodiment in the top view;
FIG. 12B is a partially enlarged view illustrating the plastic deformation start time of the binding machine according to the embodiment in a side view;
FIG. 12C is a partially enlarged perspective view illustrating a front end portion of the binding machine according to the embodiment;
FIG. 13 is a perspective view of a contact member 24 (a claw member) according to the embodiment;
FIG. 14 is a cross-sectional view in the front view during plastic deformation by the contact member 24 (the claw member) according to the embodiment;
FIG. 15 is a perspective view of a second arm according to the embodiment;
FIG. 16A is a plan view of the second arm according to the embodiment;
FIG. 16B is a rear view of the second arm according to the embodiment;
FIG. 17A is a partially enlarged view illustrating a driver movement start time of the binding machine according to the embodiment in the front view;
FIG. 17B is a partially enlarged view illustrating the driver movement start time of the binding machine according to the embodiment in the top view;
FIG. 18 is a partially enlarged view illustrating a state in which the separated staple is advanced by the binding machine according to the embodiment in the top view;
FIG. 19 is a partially enlarged view illustrating a state in which the staple has passed through a first outer wall portion by the binding machine according to the embodiment in the top view;
FIG. 20 is a partially enlarged view illustrating a state in which the staple has reached a displacement start position by the binding machine according to the embodiment in the top view;
FIG. 21A is a partially enlarged view illustrating the front end portion of the binding machine in the front view when a user inserts a first object into a first insertion portion and inserts a second object into a second insertion portion;
FIG. 21B is a partially enlarged view illustrating the front end portion of the binding machine in the top view when the user inserts the first object into the first insertion portion and inserts the second object into the second insertion portion;
FIG. 22A is a partially enlarged view illustrating the front end portion of the binding machine in the front view when the slider restarts advancing after the first object and the second object are inserted;
FIG. 22B is a partially enlarged view illustrating the front end portion of the binding machine in the top view when the slider restarts advancing after the first object and the second object are inserted;
FIG. 23A is a partially enlarged view illustrating the front end portion of the binding machine in the front view when the slider advances and a second leg portion is deformed;
FIG. 23B is a partially enlarged view illustrating the front end portion of the binding machine in the top view when the slider advances and the second leg portion is deformed;
FIG. 24A is a partially enlarged view illustrating the front end portion of the binding machine in the front view immediately before the slider most advances;
FIG. 24B is a partially enlarged view illustrating the front end portion of the binding machine in the top view immediately before the slider most advances;
FIG. 25A is a partially enlarged view and an enlarged perspective view of the front end portion of the binding machine in the front view after the slider starts retracting;
FIG. 25B is a partially enlarged view and an enlarged perspective view of the front end portion of the binding machine in the top view after the slider starts retracting;
FIG. 25C is a partially enlarged perspective view of the front end portion of the binding machine after the slider starts retracting;
FIG. 26A is a partially enlarged view and an enlarged perspective view of the front end portion of the binding machine in the front view when the slider further retracts;
FIG. 26B is a partially enlarged view and an enlarged perspective view of the front end portion of the binding machine in the top view when the slider further retracts;
FIG. 26C is a partially enlarged perspective view of the front end portion of the binding machine when the slider further retracts;
FIG. 27 is a diagram illustrating an example of a staple before binding in a top view;
FIG. 28 is a cross-sectional view of a binding machine according to an embodiment in a right side view;
FIG. 29 is a perspective view of the binding machine according to the embodiment as viewed obliquely in an upward direction;
FIG. 30 is a partially enlarged perspective view of the binding machine according to the embodiment as viewed obliquely in the upward direction;
FIG. 31 is a partially enlarged perspective view of the binding machine according to the embodiment as viewed obliquely in the upward direction;
FIG. 32 is a partially enlarged perspective view illustrating a state in which the staple is in contact with a movable wall in the binding machine according to the embodiment;
FIG. 33 is a perspective cross-sectional view illustrating one movable wall in the binding machine according to the embodiment;
FIG. 34 is a perspective cross-sectional view illustrating one movable wall in the binding machine according to the embodiment;
FIG. 35 is a partially enlarged perspective view illustrating the state in which the staple is in contact with the movable wall in the binding machine according to the embodiment;
FIG. 36 is a perspective view of a front end portion of a binding machine 101 in an initial state (a standby state) as viewed from a forward direction X1;
FIG. 37 is a perspective view of the front end portion of the binding machine 101 as viewed from the forward direction X1 when a first moving operation ends; and
FIG. 38 is a perspective view illustrating an internal configuration of a first inner wall portion 641 during a binding operation in a second moving operation.
FIG. 39A is a plan view of a staple according to an embodiment;
FIG. 39B is a plan view of the staple according to the embodiment;
FIG. 40 is a right side view of a binding machine according to the embodiment;
FIG. 41 is a cross-sectional view of the binding machine according to the embodiment in a top view;
FIG. 42A is a perspective view of a front end portion of the binding machine according to the embodiment;
FIG. 42B is a perspective view of the front end portion of the binding machine according to the embodiment;
FIG. 43A is a plan view illustrating a binding method of the binding machine according to the embodiment;
FIG. 43B is a plan view illustrating the binding method of the binding machine according to the embodiment;
FIG. 43C is a plan view illustrating the binding method of the binding machine according to the embodiment;
FIG. 43D is a plan view illustrating the binding method of the binding machine according to the embodiment;
FIG. 43E is a plan view illustrating the binding method of the binding machine according to the embodiment;
FIG. 43F is a plan view illustrating the binding method of the binding machine according to the embodiment; and
FIG. 44 is a perspective view of the binding machine according to the embodiment as viewed from a rearward direction.

### DESCRIPTION OF EMBODIMENTS

Hereinafter, embodiments of the present disclosure will be described with reference to the drawings. The following embodiments are examples for explaining the present disclosure, and it is not intended to limit the present disclosure only to the embodiments.

### Configuration of Staple S

First, a configuration of a staple S according to the present embodiment will be described. The staple S is formed of a plastic deformable wire material that has plasticity. The staple S may be referred to as a wire or a clip. The staple S includes, for example, a metal wire material or a metallic wire (including one whose surface is coated by using a plating process or a resin).

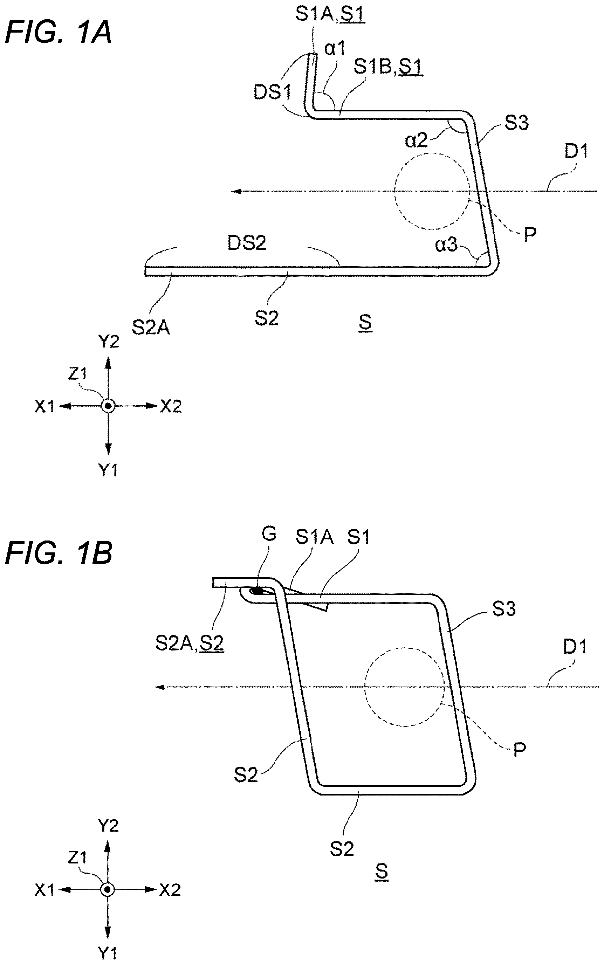

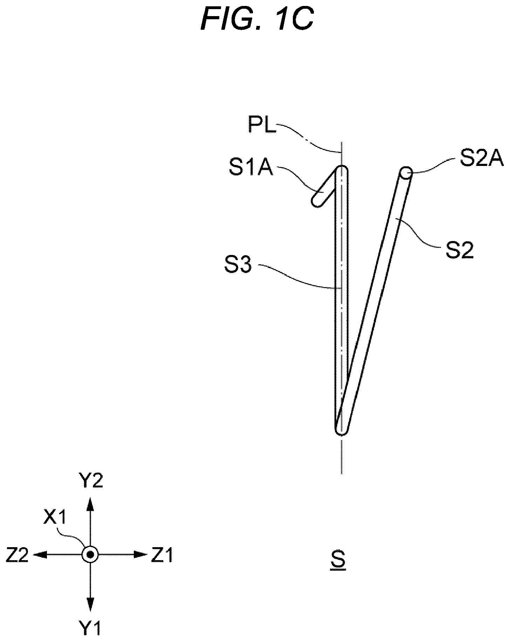

FIG. 1A illustrates the staple S before binding according to the present embodiment, and FIGS. 1B and 1C respectively illustrate a top view and a front view of the staple S in a bound state after the binding (however, for convenience of description, parts unnecessary for description such as a first object G and a second object P are omitted in FIG. 1C).

The staple S includes a first leg portion S1, a second leg portion S2, and a main body portion S3 connecting the first leg portion S1 and the second leg portion S2.

In a state before the binding, the first leg portion S1 and the second leg portion S2 of the staple S are separately provided, and thus an opening is provided between the first leg portion S1 and the second leg portion S2. A direction from a closed portion of the main body portion S3 toward the opening (a leftward direction of a paper surface in FIG. 1A) is referred to as an opening direction D1. When the staple S is set in a binding machine 10, the opening direction D1 of the staple S coincides with a forward direction X1 to be described later.

The first leg portion S1 is a portion including one end portion of the staple S, and includes a first portion S 1B extending in the opening direction D1 and a tip end portion S1A bent from the first portion S 1B and extending outward. An angle formed by the first portion S1B and the tip end portion S1A is referred to as a bending angle α1, and a portion of the tip end portion S1A that is bent to be connected to the first portion S 1B is referred to as a bent portion. In the present embodiment, the bending angle α1 is 90 degrees or less.

The second leg portion S2 is a portion including the other end portion of the staple S, and includes a second portion extending in the opening direction D1. In the top view (FIG. 1B) illustrating the bound state, the second leg portion S2 is bent to intersect the first leg portion S1 and closes the opening. Accordingly, the second leg portion S2 according to the present embodiment is formed to be longer than a width of the opening, that is, a distance between the first leg portion S1 and the second leg portion S2. In addition, the second leg portion S2 is formed to be longer than the first leg portion S1.

The main body portion S3 is a portion connecting the first leg portion S1 and the second leg portion S2. The main body portion S3 according to the present embodiment includes a side portion extending linearly. However, a shape of the main body portion S3 is not limited thereto, and the main body portion S3 may include, for example, a curved portion that is curved in an outward direction, or may include one or more side portions and one or more curved portions.

In the bound state illustrated in FIG. 1B, the tip end portion S1A of the first leg portion S1 of the staple S is bent substantially clockwise (Hereinafter, in the top view, a substantially clockwise direction may be referred to as a "first rotation direction R1", and a substantially counterclockwise direction may be referred to as a "second rotation direction R2".) in FIG. 1B, and intersects the first leg portion S1 in the top view. Accordingly, it is possible to sandwich the first object G with the first leg portion S1. As illustrated in FIG. 1C, the tip end portion S1A of the first leg portion S1 is bent such that a tip end thereof advances toward a downward direction Z2 separated from a plane PL penetrating through the first leg portion S1, the second leg portion S2, and the main body portion S3 before the binding.

On the other hand, a part of the second leg portion S2 of the staple S closes the opening by being folded in the first rotation direction R1. Since the opening is closed, it is possible to restrain the staple S from being disengaged from the second object P surrounded by the staple S. Further, as illustrated in FIG. 1C, a tip end portion S2A of the second leg portion S2 is bent such that a tip end thereof advances in an upward direction Z1 separated from the plane PL penetrating through the first leg portion S1, the second leg portion S2, and the main body portion S3 before the binding. In this way, the tip end of the first leg portion S1 is bent to advance in the downward direction Z2 and is engaged with the first object G, and the tip end of the second leg portion S2 is bent to advance in the upward direction Z1 and is engaged with the second object P, and thus it is possible to easily generate tension in a region from an engagement position of the first object G with the first leg portion S 1 to an engagement position of the second object P with the second leg portion S2. Accordingly, it is possible to restrain the first object G from being bent and the staple S from falling off and the like.

In addition, the second leg portion S2 is folded to a position at which the second leg portion S2 intersects the first leg portion S1 in the first rotation direction R1 toward an inward direction of the staple S so as to close the opening in the top view. At this time, the tip end portion S2A of the second leg portion S2 passes through a gap between the first object G and the second object P. Thereafter, the second leg portion S2 is displaced in the second rotation direction R2 opposite to the first rotation direction R1 in the top view, which causes the tip end portion S2A of the second leg portion S2 passing through the gap between the first object G and the second object P to be engaged with the first object G. As a result, the first object G can be engaged so as to be sandwiched between the tip end portion S1A of the first leg portion S 1 and the tip end portion S2A of the second leg portion S2. Even when the second object P grows, the first leg portion S1 and the second leg portion S2 are respectively bent in directions in which a force for sandwiching the first object G is strengthened. Accordingly, even when the second object P grows, the staple S is less likely to be disengaged from the first object G.

When the second leg portion S2 is displaced in the first rotation direction R1, it is preferable to bend the second leg portion S2 in the first rotation direction R1 and bend the tip end portion S2A of the second leg portion S2 in the second rotation direction R2 opposite to the first rotation direction R1. According to such a configuration, it is possible to easily engage the tip end portion S2A of the second leg portion S2 with the first object G by displacing the tip end portion S2A of the second leg portion S2 that has passed through the gap between the first object G and the second object P in the second rotation direction R2.

As is clear from a comparison between FIG. 1A illustrating the state of the staple S before the binding, and FIGS. 1B and 1C illustrating the state of the staple S after the binding, when a distance from the tip end of the first leg portion S1 to the displaced portion of the first leg portion S1 is set to a first distance DS1 and a distance from the tip end of the second leg portion S2 to the displaced portion of the second leg portion S2 is set to a second distance DS2, the second distance DS2 is larger than the first distance DS1, and for example, the second distance DS2 is larger than twice the first distance DS1. In this way, by bending the staple S in a non-symmetrical manner, it is possible to suitably engage the second leg portion S2 with the first object G held adjacently to the first leg portion S1.

Further, as illustrated in FIG. 1A, a boundary position between the displaced portion and a non-displaced portion of the first leg portion S 1, which corresponds to a position from the tip end of the first leg portion S1 by the first distance DS1, corresponds to a position advanced in the opening direction D1 with respect to a boundary position between the displaced portion and a non-displaced portion of the second leg portion S2, which corresponds to a position from the tip end of the second leg portion S2 by the second distance DS2.

According to such a configuration, when a slider 44 is advanced in the opening direction D 1, it is possible to first start the displacement of the second leg portion S2, and start the displacement of the first leg portion S 1 after the displacement of the second leg portion S2 is started. Therefore, it is possible to restrain a large load from being applied to the binding machine 10 at the same time.

A shape of the staple S is not limited to that illustrated in FIG. 1A. For example, it will be understood by a person skilled in the art that the first leg portion S1 and the second leg portion S2 are not necessarily parallel to each other, and for example, even when the width of the opening becomes narrower toward the tip end, or the width of the opening becomes wider toward the tip end, it is possible to bend the staple S such that at least a part of the technical effects described above is exhibited. In addition, it will be understood by a person skilled in the art that even when the first leg portion S1 and the second leg portion S2 have the same length, the tip end of the first leg portion S 1 is surplus, but it is possible to bend the staple S such that at least a part of the technical effects described above is exhibited.

A method of bending the staple S is not limited to those illustrated in FIGS. 1B and 1C. For example, the tip end portion S2A of the second leg portion S2 may not be bent. It will be understood by a person skilled in the art that even when the tip end portion S2A of the second leg portion S2 is not bent, the second leg portion S2 can be engaged with the first object G, and thus at least a part of the technical effects described above is exhibited.

An example of a configuration of the binding machine 10 for bending the staple S illustrated in FIG. 1A as illustrated in FIGS. 1B and 1C will be described below.

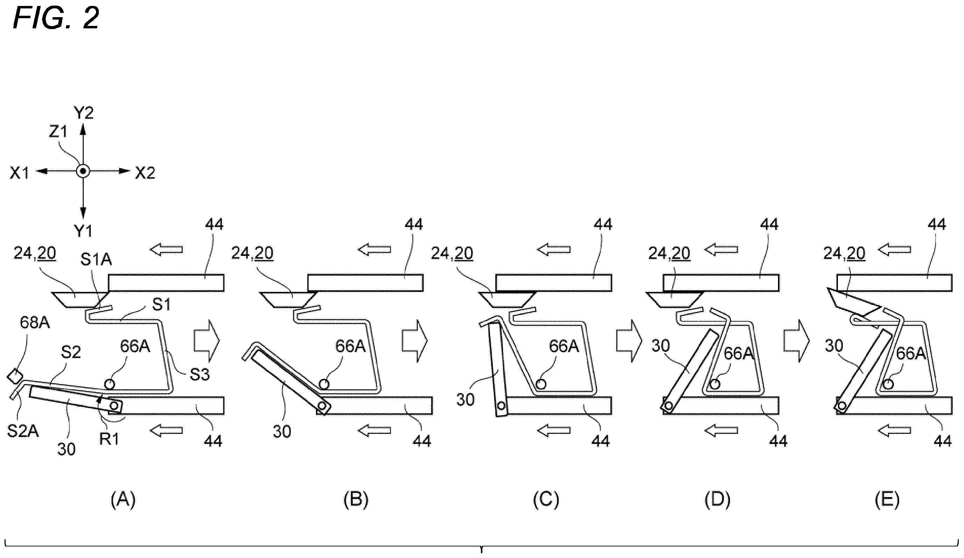

(A) to (E) of FIG. 2 are schematic diagrams illustrating the configuration of the binding machine 10 according to the embodiment of the present disclosure and states of the staple S bent by the binding machine 10, respectively. In (A) to (E) of FIG. 2, the main body portion S3 of the staple S is static.

In order to describe a relation between relative directions, for the sake of convenience, a leftward direction of the paper surface in FIG. 2 may be referred to as the forward direction X1, a rightward direction of the paper surface may be referred to as a rearward direction X2, a near-side direction perpendicular to the paper surface may be referred to as the upward direction Z1, a far-side direction perpendicular to the paper surface may be referred to as the downward direction Z2, a lower side of the paper surface may be referred to as a rightward direction Y1, and an upper side of the paper surface may be referred to as a leftward direction Y2. The top view refers to a viewpoint when the binding machine 10 and the like are seen from a position at the upward direction Z1 toward the downward direction Z2, the front view refers to a viewpoint when the binding machine 10 and the like are seen from a position at the forward direction X1 toward the rearward direction X2, and the side view refers to a viewpoint when the binding machine 10 and the like are seen toward the rightward direction Y1 or the leftward direction Y2.

Further, when the staple S to be described later is set in the binding machine 10, a direction from a region surrounded by the staple S (a region into which the second object P to be described later is inserted) toward an outer side of the staple S may be referred to as an outward direction, and a direction from the outer side of the staple S toward the region surrounded by the staple S may be referred to as an inward direction, with the staple S as a reference.

As illustrated in (A) of FIG. 2 and the like, the binding machine 10 includes the slider 44 as an example of a movement part that moves in the forward direction X1. The binding machine 10 further includes a first displacement portion 20 for displacing the first leg portion S1 of the staple S. The first displacement portion 20 displaces the first leg portion S1 of the staple S so as to be engageable with the first object G by moving different parts in different directions based on the movement of the slider 44 toward the forward direction X1.

The slider 44 may be integrally formed, or may be composed of a plurality of parts that move in an interlocked manner.

The first displacement portion 20 according to the present embodiment includes a contact member 24 that moves in a direction inclined toward the inward direction of the staple S (the rightward direction Y1) and the rearward direction X2 based on the movement of the slider 44 toward the forward direction X1. The contact member 24 comes into contact with a region of the tip end portion S1A of the staple S and bends the tip end portion S1A to plastically deform, and thus the contact member 24 may be referred to as a gripping portion.

The first displacement portion 20 may include a part that moves in a direction substantially perpendicular to the forward direction X1, which is the inward direction of the staple S (the rightward direction Y1), based on the movement of the slider 44 toward the forward direction X1 so as to come into contact with the tip end portion S 1A of the staple S and bend the tip end portion S1A.

Instead of this, the first displacement portion 20 may include a part that moves in the outward direction of the staple S (the leftward direction Y2) based on the movement of the slider 44 toward the forward direction X1 so as to come into contact with the tip end portion S1A of the staple S and bend the tip end portion S1A.

Instead of this, the first displacement portion 20 may include a part that moves the staple S in the first rotation direction R1 based on the movement of the slider 44 toward the forward direction X1 so as to come into contact with the tip end portion S1A of the staple S and bend the tip end portion S1A.

Instead of this, the first displacement portion 20 may include a part that moves the staple S in the second rotation direction R2 based on the movement of the slider 44 toward the forward direction X1 so as to come into contact with the tip end portion S1A of the staple S and bend the tip end portion S1A.

As a mechanism for moving the parts such as the contact member 24 in different directions based on the movement of the movement part such as the slider 44 toward the forward direction X1, a mechanism disclosed in the present embodiment or other mechanisms may be used.

As a mechanism for rotating the parts such as the contact member 24 in the first rotation direction R1 or the second rotation direction R2 based on the movement of the movement part such as the slider 44 toward the forward direction X1, the mechanism disclosed in the present embodiment or other mechanisms may be used.

The binding machine 10 further includes a second displacement portion 30 for displacing the second leg portion S2 of the staple S. The second displacement portion 30 displaces the second leg portion S2 of the staple S so as to be engageable with the first object G by moving different parts in different directions based on the movement of the slider 44 toward the forward direction X1.

The second displacement portion 30 according to the present embodiment includes an arm (may also referred to as a second arm) that bends the second leg portion S2 to plastically deform by rotating in the first rotation direction R1 based on the movement of the slider 44 toward the forward direction X1. In the present embodiment, since the arm comes into contact with the second leg portion S2 of the staple S and bends the second leg portion S2 in a direction inclined toward the upward direction Z1 while bending the second leg portion S2 in a direction approaching the first leg portion S1, and thus the arm may be referred to as an obliquely bending portion.

In (A) of FIG. 2, the second displacement portion 30 is connected to the slider 44 and rotates with a front end portion of the slider 44 as a fulcrum. However, as described in an embodiment to be described later, the second displacement portion 30 may not be connected to the slider 44. For example, the second displacement portion 30 may be not connected to the slider 44, and may include a second arm 32 that bends the second leg portion S2 to plastically deform the second leg portion S2 by rotating in the first rotation direction R1 by a second front end portion 44A2 of the slider 44.

The second displacement portion 30 may include a part that moves in a direction substantially perpendicular to the forward direction X1, which is the inward direction of the staple S (the leftward direction Y2), based on the movement of the slider 44 toward the forward direction X1 so as to come into contact with the second leg portion S2 of the staple S and bend the second leg portion S2.

Instead of this, the second displacement portion 30 may include a part that moves in the outward direction of the staple S (the rightward direction Y1) based on the movement of the slider 44 toward the forward direction X1 so as to come into contact with the second leg portion S2 of the staple S and bend the second leg portion S2.

Instead of this, the second displacement portion 30 may include a part that moves the staple S in the second rotation direction R2 based on the movement of the slider 44 toward the forward direction X1 so as to come into contact with the second leg portion S2 of the staple S and bend the second leg portion S2.

Further, the second displacement portion 30 according to the present embodiment additionally includes a support wall portion 68A that bends the tip end portion S2A of the second leg portion S2 in an opposite direction (the outward direction) by causing the tip end portion S2A of the second leg portion S2 to pass therethrough while bringing the tip end portion S2A into contact therewith. Since the support wall portion 68A bends the tip end portion S2A of the second leg portion S2, the support wall portion 68A may be referred to as a tip end-bending portion.

However, in the case of using a staple having a tip end portion bent in the outward direction in advance, the binding machine may not include the support wall portion 68A.

Further, the binding machine 10 according to the present embodiment additionally includes a fulcrum 66A functioning as a bending fulcrum of the second leg portion S2. In the present embodiment, a front end of a second inner wall portion 66 functions as the fulcrum 66A. In addition, a distance from a portion of the second leg portion S2, which is in contact with the fulcrum 66A, to the tip end thereof corresponds to the second distance DS2.
(A) of FIG. 2 is a schematic diagram illustrating a state immediately after the start of the bending of the staple S in the top view. As illustrated in (A) of FIG. 2, the second displacement portion 30 starts rotating in the first rotation direction R1 by the slider 44 moving in the forward direction. Therefore, the second leg portion S2 of the staple S that is in contact with the second displacement portion 30 starts bending with the fulcrum 66A as a fulcrum. At the same time, the tip end portion S2A of the second leg portion S2 passes through the support wall portion 68A while being in contact with the support wall portion 68A. Accordingly, it is possible to bend the tip end portion S2A of the second leg portion S2 in the second rotation direction R2 corresponding to the outward direction of the staple S while bending the second leg portion S2 in the first rotation direction R1 corresponding to the inward direction of the staple S.
(B) and (C) of FIG. 2 are schematic diagrams respectively illustrating the states after the start of the bending of the staple S in the top view. As illustrated in (B) and (C) of FIG. 2, the second displacement portion 30 further rotates in the first rotation direction R1 by the slider 44 further moving in the forward direction. Therefore, the second displacement portion 30 further bends the second leg portion S2 in the first rotation direction R1 with the fulcrum 66A as a fulcrum.
(D) of FIG. 2 is a schematic diagram illustrating a state in which the second leg portion S2 of the staple S is bent and intersects the first leg portion S1 in the top view. In the present embodiment, since the second leg portion S2 is bent in the direction inclined toward the upward direction Z1 while being bent in the direction approaching the first leg portion S1, the second leg portion S2 does not intersect the first leg portion S1. As illustrated in (D) of FIG. 2, since the second displacement portion 30 further rotates in the first rotation direction R1 by the slider 44 further moving in the forward direction and rotates by 90 degrees or more, the second displacement portion 30 can bend the second leg portion S2 to the position at which the second leg portion S2 intersects the first leg portion S 1 in the top view.
(E) of FIG. 2 is a schematic diagram illustrating a state in which the first leg portion S1 of the staple S is bent in the top view. As illustrated in (E) of FIG. 2, the contact member 24 of the first displacement portion 20 moves in the direction inclined toward the inward direction (the rightward direction Y1) and the rearward direction X2 by the slider 44 moving in the forward direction, and bends the tip end portion S1A of the first leg portion S1. As illustrated in (E) of FIG. 2, the tip end portion S1A may be folded in the upward direction Z1 or may be folded in the downward direction Z2 with respect to the first leg portion S 1. By bending the tip end portion S1A of the first leg portion S1 in this manner, it is possible to sandwich the first object G with the first leg portion S1.

Further, in the present embodiment, by disposing the first displacement portion 20 and the second displacement portion 30 such that a timing at which the first displacement portion 20 comes into contact with the slider 44 and a timing at which the second displacement portion 30 comes into contact with the slider 44 are different, a timing at which the bending of the first leg portion S 1 of the staple S starts and a timing at which the bending of the second leg portion S2 of the staple S starts are deviated. According to such a configuration, it is possible to restrain a large load from being simultaneously generated in the binding machine 10. In addition, by first starting the bending of the second leg portion S2 having a large bending amount, it is possible to restrain a large deviation between a timing at which the bending of the first leg portion S1 ends and a timing at which the bending of the second leg portion S2 ends.

### First Embodiment

Hereinafter, the detailed configuration of the binding machine 10 according to a first embodiment will be described.

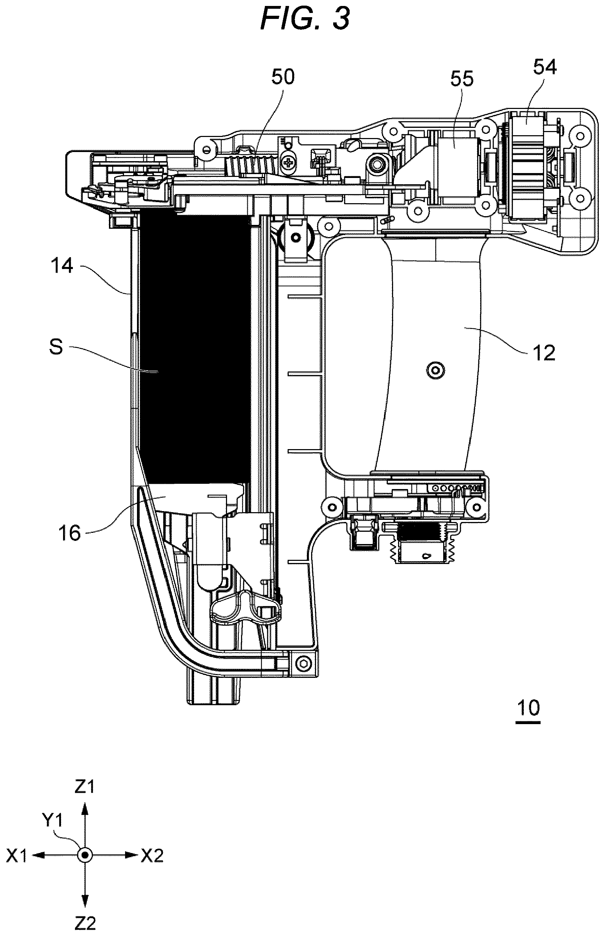

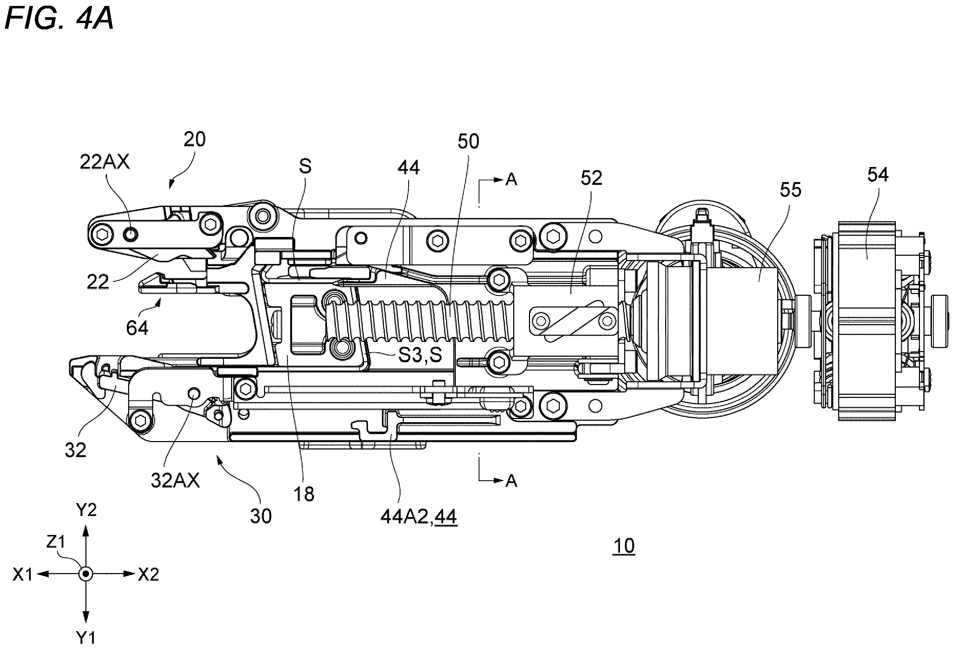

FIG. 3 is a cross-sectional view of the binding machine 10 in a right side view. FIG. 4A is a cross-sectional view of the binding machine 10 in the top view (However, for the sake of convenience, FIG. 4A is rotated by 90 degrees. Hereinafter, the drawings may be rotated in the same manner for the sake of convenience. Further, configurations not described in order to make the description easier to understand (for example, a housing of the binding machine 10) are omitted (hereinafter, some configurations may be omitted in the drawings for the same reason)).

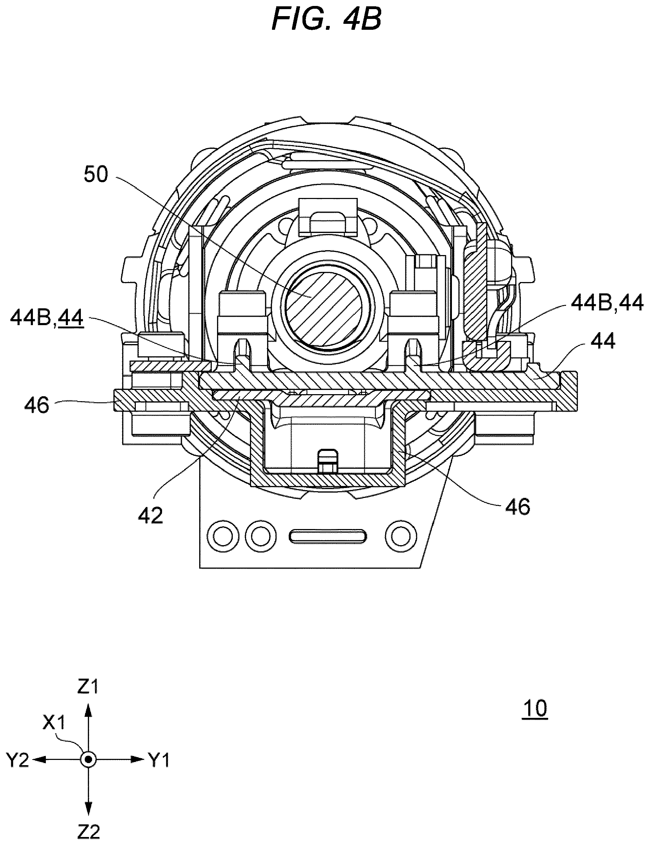

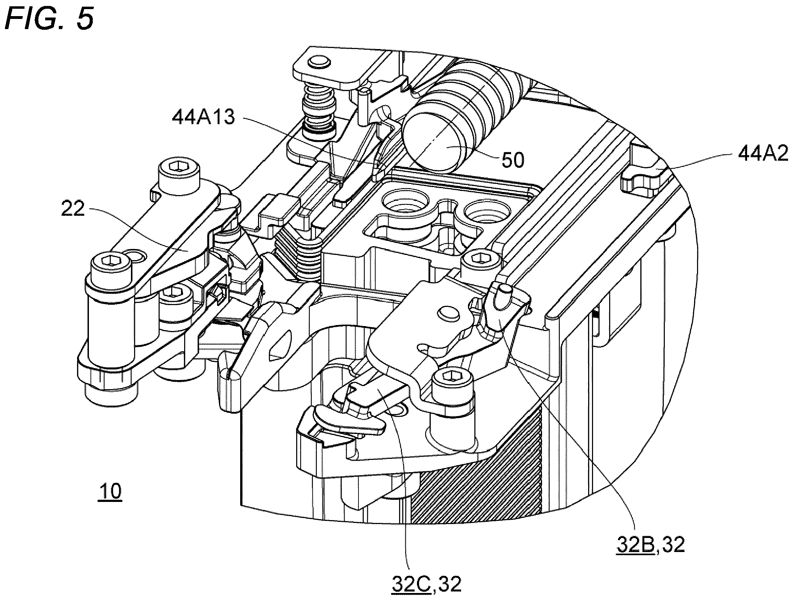

FIG. 4B is a cross-sectional view of the binding machine 10 in the front view, which is obtained by cutting the binding machine 10 along an A-A cross section in FIG. 4A. FIG. 5 is an enlarged perspective view of a front end portion of the binding machine 10.

### Schematic Configuration of Binding Machine 10

The binding machine 10 binds the first object G and the second object P by using the staple S having the formed opening. The configuration of the staple S (FIGS. 1A and 1B) according to the embodiment is described above.

The first object G is, for example, a wire, a beam, a string, a rod, a pipe, or a branch of a tree. The first object G may be referred to as a guide element. The second object P is, for example, a stem, a vine, a branch, or a fruit of a plant or a tree. The binding machine 10 restricts the movement of the second object P with respect to the first object G and binds the first object G and the second object P by displacing the first leg portion S1 of the staple S so as to engage with the first object G, and displacing the second leg portion S2 thereof so as to engage with the first object G such that the staple S surrounds the second object P.

The binding machine 10 includes the first displacement portion 20 that displaces the first leg portion S1 of the staple S so as to be engageable with the first object G, and the second displacement portion 30 that displaces the second leg portion S2 of the staple S so as to be engageable with the first object G. The second displacement portion 30 can bind the first object G and the second object P by engaging the tip end portion S2A of the second leg portion S2 with the first object G in a state in which the second object P is surrounded by the first leg portion S 1, the second leg portion S2, and the main body portion S3 of the staple S.

More specifically, the binding machine 10 includes a grip 12 extending in an up-down direction so as to be gripped by a user and provided with a switch for driving the binding machine 10, a magazine 14 (FIG. 3) that can accommodate a plurality of staples S stacked in the up-down direction, a pusher 16 that biases the plurality of staples S accommodated in the magazine 14 toward the upward direction Z1, a driver 42 that pushes the staple S positioned at an upper end toward the forward direction X1 to separate the staple S positioned at the upper end from another staple S and move the staple S in the forward direction X1, a movement mechanism for moving the driver 42 and the slider 44, the first displacement portion 20 for displacing the first leg portion S1 of the staple S by the slider 44, the second displacement portion 30 for displacing the second leg portion S2 of the staple S by the slider 44, and a detachment portion 56 that provides a movement path when the staple S is detached from the another staple S.

Here, the first displacement portion 20 includes a first outer wall portion 62 and a first inner wall portion 64 for displacing the tip end portion S1A by the tip end portion S1A of the first leg portion S1 passing through the first outer wall portion 62 and the first inner wall portion 64 while being in contact therewith when the staple S moves in the forward direction X1 by the driver 42.

Further, the first displacement portion 20 includes a first arm 22 that rotates by being pushed by a first front end portion 44A1 of the slider 44 moving in the forward direction X1, and the contact member 24 that bends the tip end portion S 1A of the first leg portion S1 by moving toward the inward direction of the staple S while being in contact with the tip end portion S1A of the first leg portion S1 as the first arm 22 rotates. The contact member 24 may be referred to as a claw member.

The second displacement portion 30 includes the second arm 32 that rotates by being pushed by the second front end portion 44A2 of the slider 44 moving in the forward direction X1. The second arm 32 can bend the second leg portion S2 by rotating while being in contact with the second leg portion S2 of the staple S. At this time, as described above, since the second object P is surrounded by the first leg portion S1, the second leg portion S2, and the main body portion S3 of the staple S, and the second leg portion S2 is engaged with the first object G, it is possible to bind the first object G and the second object P.

The binding machine 10 according to the present embodiment respectively displaces the first leg portion S1 and the second leg portion S2 of the staple S by moving the parts such as the slider 44 in a translational motion toward the forward direction X1 and pushing the first arm 22 and the second arm 32 by the parts in the translational motion to convert the translational motion into a rotational motion. However, a means for displacing the first leg portion S1 or the second leg portion S2 is not limited thereto. For example, as the means for displacing the first leg portion S1, a means for displacing the tip end portion S1A in an arc shape when the tip end portion S1A of the first leg portion S 1 advances by the driver 42 or the slider 44, may be mounted. In addition, another means for converting the translational motion into the rotational motion may be adopted as a configuration for converting the translational motion into the rotational motion. Further, in the present embodiment, the first arm 22 and the second arm 32 are rotated together in the same direction in the top view to displace the first leg portion S1 and the second leg portion S2, but the present disclosure is not limited thereto, for example, the second arm 32 may rotate in the opposite direction to displace the second leg portion S2.

Hereinafter, the detailed configuration of the binding machine 10 according to the present embodiment will be described.

### Movement Mechanism (Feeding Mechanism) of Driver and Slider

The driver 42 of the binding machine 10 has a function of moving in the forward direction X1 to move the staple S in the forward direction X1. The driver 42 moves the staple S positioned at the upper end, which is connected to the another staple S, toward the forward direction X1 so as to separate the staple S from the another staple S, and further displaces the tip end portion S1A of the first leg portion S 1 by moving the staple S toward the forward direction X1 and causing the tip end portion S1A of the first leg portion S 1 to pass through the first outer wall portion 62 provided in the first displacement portion 20 while being in contact therewith.

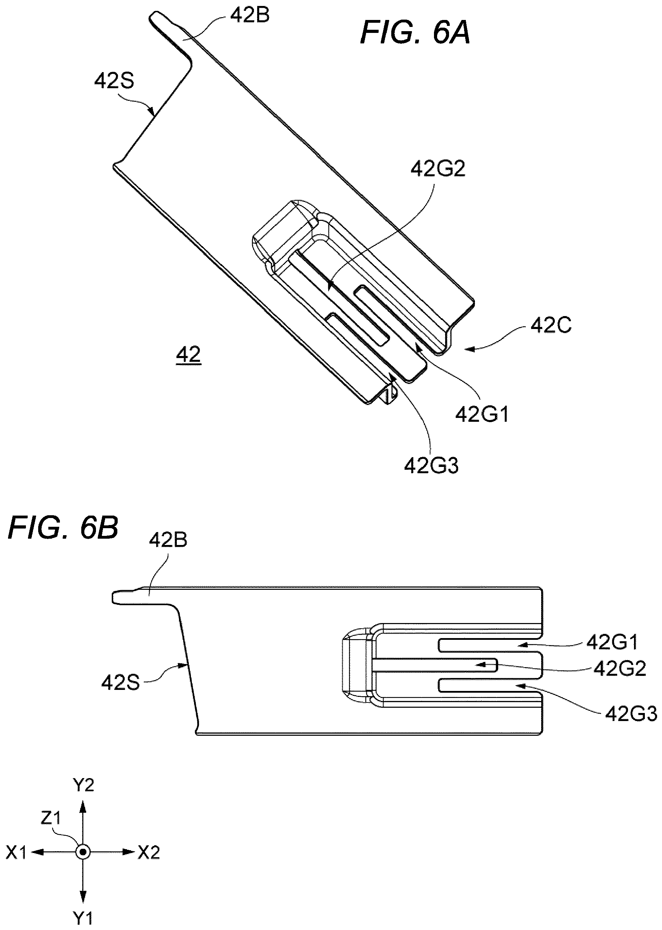

FIG. 6A is a perspective view of the driver 42 according to the present embodiment, and FIG. 6B is a plan view of the driver 42 in the top view. As illustrated in FIGS. 6A and 6B, the driver 42 is formed in a plate shape, and includes a front end portion having a front end surface 42S in contact with the main body portion S3 of the staple S, and a rear end portion provided in the rearward direction X2 with respect to the front end portion and having a protruded portion 42C for driver protruding in the downward direction Z2.

The front end portion of the driver 42 includes the front end surface 42S that conforms to the shape of the main body portion S3 of the staple S and is provided to be inclined with respect to a front-rear direction.

Further, a left end of the front end portion of the driver 42 has a protruding end portion 42B extending in the forward direction X1 so as to have a wall surface extending in the forward direction X1 in order to support the first leg portion S1 by coming into contact with the first portion S 1B of the first leg portion S1 corresponding to a left end of the staple S and with a portion of the main body portion S3 connected to the first leg portion S 1 from the leftward direction Y2 which is the outward direction.

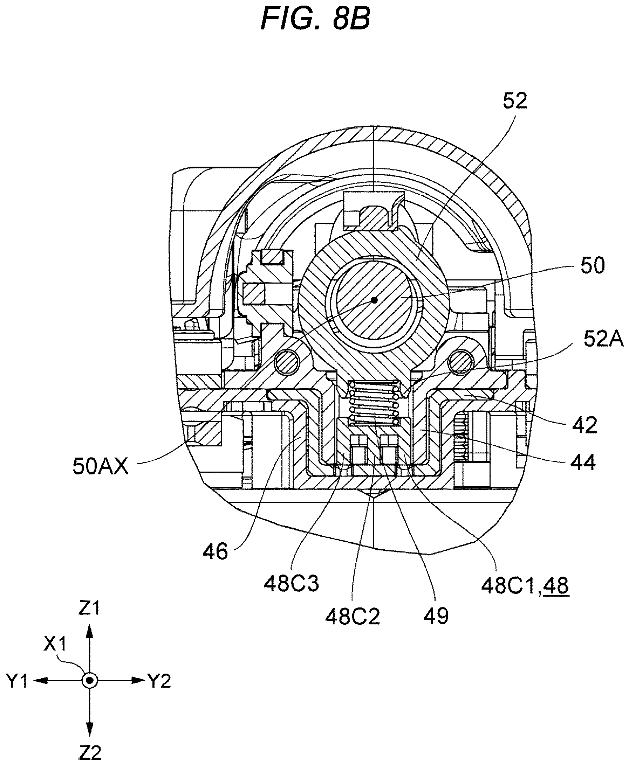

As illustrated in FIGS. 4B and 8B, the driver 42 is guided to move in the front-rear direction by being fitted into a recessed portion provided in a base 46. Since an upper surface of the driver 42 is in contact with a bottom surface of the slider 44 fitted into the recessed portion provided in the base 46, the movement of the driver 42 toward the upward direction Z1 is restricted. In addition, since left and right side surfaces of the driver 42 are respectively in contact with left and right wall surfaces of the base 46 provided to extend in the front-rear direction, the leftward and rightward movement of the driver 42 is restricted. Further, the protruded portion 42C for driver formed at the rear end portion of the driver 42 and protruding in the downward direction Z2 is inserted into the recessed portion of the base 46. Left and right wall surfaces and a bottom surface of the protruded portion 42C for driver respectively face the wall surfaces and an upper surface of the base 46. According to the above configuration, the driver 42 is guided to move in the front-rear direction.

Three grooves are formed in a bottom portion of the protruded portion 42C for driver protruding toward the downward direction Z2. Specifically, a first groove 42G1 for moving toward the forward direction X1 by being pushed toward the forward direction X1 by a first claw portion 48C1 of a switching block 48 (an example of a "block") to be described later, a second groove 42G2 for moving toward the rearward direction X2 by being pushed toward the rearward direction X2 by a second claw portion 48C2, and a third groove 42G3 for moving toward the forward direction X1 by being pushed toward the forward direction X1 by a third claw portion 48C3 are formed. As illustrated in FIGS. 4B and 8B, the first groove 42G1, the second groove 42G2, and the third groove 42G3 are provided to be parallel to one another and extend in the front-rear direction. In addition, front ends of the first groove 42G1 and the third groove 42G3 (groove side surfaces of the first groove 42G1 and the third groove 42G3 facing the rearward direction X2) are provided at the same position in the front-rear direction. In addition, a rear end of the second groove 42G2 (a groove side surface of the second groove 42G2 facing the forward direction X1) is provided in the rearward direction X2 with respect to the front ends of the first groove 42G1 and the third groove 42G3 (the groove side surfaces of the first groove 42G1 and the third groove 42G3 facing the rearward direction X2). On the other hand, the first groove 42G1 and the third groove 42G3 are provided to extend in the rearward direction X2 with respect to the rear end of the second groove 42G2.

As will be described later, a configuration is adopted in which the driver 42 is advanced by using two grooves, that is, the first groove 42G1 and the third groove 42G3 at the time of advance, the driver 42 is retracted by using one groove, that is, the second groove 42G2 at the time of retraction, and thus the driver 42 can suitably move in the forward direction X1 at the time of advance having a relatively high load. Further, in the top view, the second groove 42G2 is provided to overlap with a central axis of a ball screw 50, and the first groove 42G1 and the third groove 42G3 are provided to sandwich the second groove 42G2, and thus the driver 42 can advance and retract in a well-balanced manner.

The driver 42 is placed on the base 46 of the binding machine 10 and can move in the front-rear direction on the base 46. Therefore, a part of the upper surface of the base 46 is exposed in the upward direction Z1 by forming the first groove 42G1, the second groove 42G2, and the third groove 42G3.

The slider 44 of the binding machine 10 has a function of moving in the forward direction X1 and pushing the first displacement portion 20 and the second displacement portion 30 toward the forward direction X1 so as to displace the first leg portion S1 and the second leg portion S2 of the staple S, respectively. The slider 44 according to the present embodiment includes the first front end portion 44A1 that pushes the first arm 22 of the first displacement portion 20 toward the forward direction X1 to rotate the first arm 22, and the second front end portion 44A2 that pushes the second arm 32 of the second displacement portion 30 toward the forward direction X1 to rotate the second arm 32.

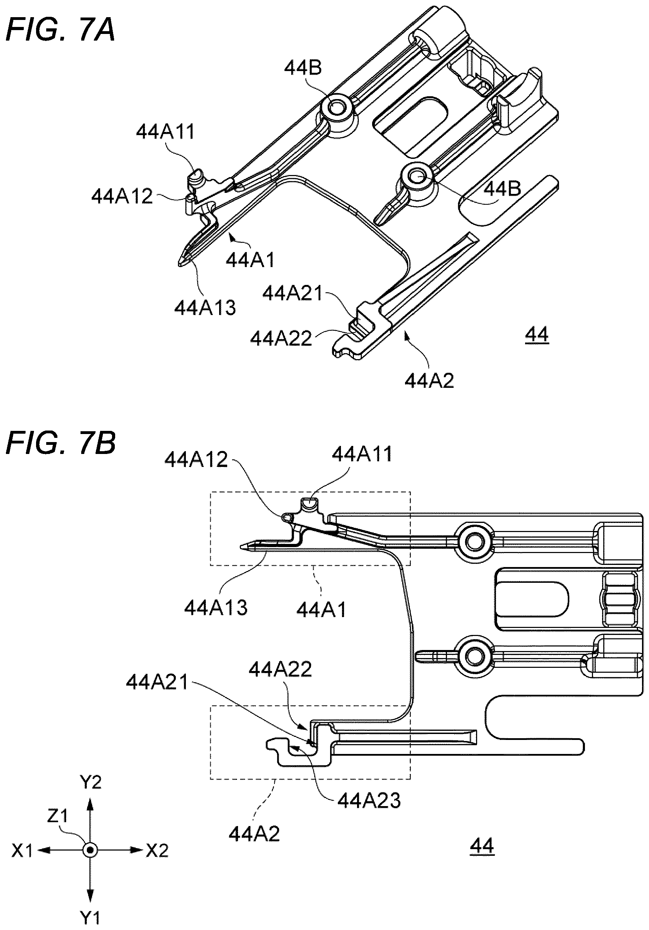

FIG. 7A is a perspective view of the slider 44 according to the present embodiment, and FIG. 7B is a plan view of the slider 44 in the top view. As illustrated in FIGS. 7A and 7B, the slider 44 is formed in a plate shape, and includes the first front end portion 44A1 that extends in the forward direction X1 on a left side on which the first leg portion S1 of the staple S is disposed, and the second front end portion 44A2 that is separated from the first front end portion 44A1 and extends in the forward direction X1 on a side on which the second leg portion S2 of the staple S is disposed.

The slider 44 further includes fixing portions 44B for being fixed to a nut part 52 to be described later by using bolts.

As illustrated in FIG. 4B, the slider 44 is guided to move in the front-rear direction by being fitted into the recessed portion provided in the base 46. An upper surface of the slider 44 comes into contact with the base 46 or a guide fixed to the housing so as to restrict the movement toward the upward direction Z1. Further, left and right side surfaces of the slider 44 come into contact with the left and right wall surfaces of the base 46 provided to extend in the front-rear direction so as to restrict the leftward and rightward movement. Further, the bottom surface of the slider 44 is supported by the upper surface of the base 46 and the upper surface of the driver 42. According to such a configuration, the slider 44 (and the driver 42 on which the slider 44 is stacked) is guided to move in the front-rear direction.

Configurations of the first front end portion 44A1 and the second front end portion 44A2 of the slider 44 will be described later.

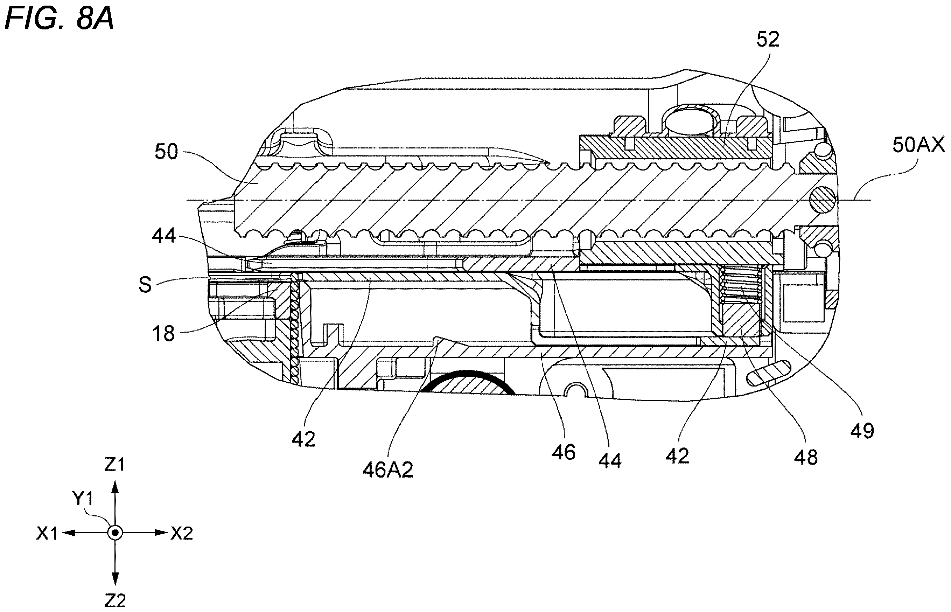

The nut part 52 of the binding machine 10 (for example, FIGS. 4A, 8A, and 8B) has a function of moving the driver 42 and the slider 44 in the forward direction X1 and the rearward direction X2. The nut part 52 according to the present embodiment is formed with a female screw that is screwed to a male screw of the ball screw 50 via a ball member (not shown). Therefore, the nut part 52 moves in the forward direction X1 when the ball screw 50 rotates clockwise, and the nut part 52 moves in the rearward direction X2 when the ball screw 50 rotates counterclockwise. The nut part 52 is fixed to the slider 44. Further, as illustrated in FIG. 8A, a front end surface of the nut part 52 is in contact with a rear end surface of the slider 44. Therefore, the nut part 52 and the slider 44 can integrally move in the forward direction X1 and the rearward direction X2 in a state in which a rotational moment is restrained.

Further, the nut part 52 includes an annular holding portion 52A protruding in the downward direction Z2 in order to hold the switching block 48 (FIG. 8B) provided with the first claw portion 48C1, the second claw portion 48C2, and the third claw portion 48C3. The nut part 52 and the switching block 48 held by the nut part 52 can integrally move in the forward direction X1 and the rearward direction X2. The holding portion 52A holds the switching block 48 such that the first claw portion 48C1 can be inserted into the first groove 42G1, the second claw portion 48C2 can be inserted into the second groove 42G2, and the third claw portion 48C3 can be inserted into the third groove 42G3.

The nut part 52, the slider 44, and the driver 42 can move in the forward direction X1 and the rearward direction X2, and thus the nut part 52, the slider 44, and the driver 42 may be referred to as movement portions.

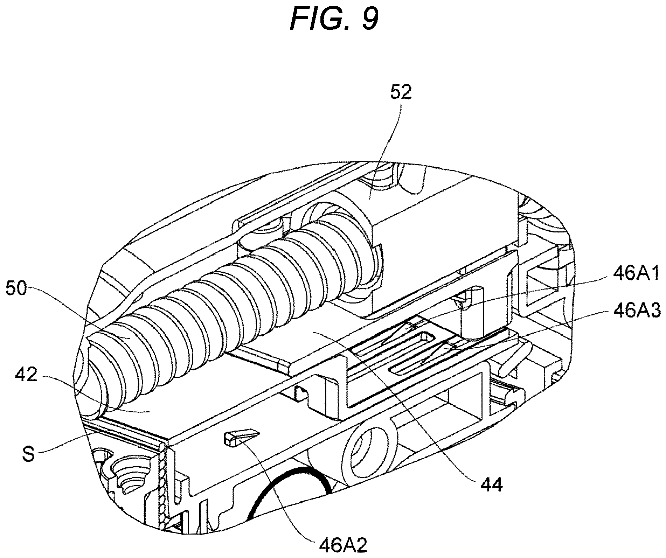

FIG. 8A is a partially enlarged view obtained by cutting the binding machine 10 along a vertical cross section including the central axis 50AX of the ball screw 50 in a side view obtained by seeing the binding machine 10 from a side surface. FIG. 8B is a partially enlarged view obtained by cutting the binding machine 10 along a vertical cross section perpendicular to the central axis 50AX of the ball screw 50 in a rear view obtained by seeing the binding machine 10 from the rearward direction X2. FIG. 9 is a partially enlarged view illustrating the nut part 52 and the like in a perspective cross-sectional view of the binding machine 10.

As illustrated in FIG. 8B, an elastic member 49 for generating an elastic force for pressing a bottom surface of the switching block 48 against the surface of the base 46 is inserted between the nut part 52 and the switching block 48. Accordingly, the switching block 48 can move in the up-down direction, and a distance in the up-down direction between the nut part 52 and the switching block 48 varies according to a surface shape of the base 46 through which the switching block 48 passes.

In the present embodiment, the nut part 52 can move in the forward direction X1 and the rearward direction X2 by a motor 54 and the ball screw 50.

The motor 54 (FIG. 4A) rotates the ball screw 50. The motor 54 is provided at a rear end portion of the binding machine 10. The binding machine 10 may include a battery that is detachably provided, and the motor 54 may be rotationally driven by a power source of the battery. The binding machine 10 according to the present embodiment further includes a speed reducer 55, and the motor 54 increases a torque by the speed reducer 55 to rotate the ball screw 50. In addition, a printed wiring board on which a CPU corresponding to a control device for controlling the motor 54 is mounted is mounted on the rear end portion of the binding machine 10.

The ball screw 50 (FIGS. 4A, 8A, and 8B) is provided by extending a substantially central portion of the binding machine 10 in the front-rear direction. As described above, the ball screw 50 is formed with the male screw that is screwed to the female screw of the nut part 52 via the ball member (not shown).

The base 46 (FIGS. 4B, 8A, and 8B) supports the driver 42 and the slider 44. As illustrated in FIG. 4B, the base 46 includes a support surface that comes into contact with or faces the bottom surface of the driver 42 so as to support the driver 42 from the downward direction Z2, and a wall portion extending in the front-rear direction in order to come into contact with or face the left side surface of the driver 42 so as to support the driver 42 from the leftward direction Y2. Further, the base 46 includes a wall portion extending in the front-rear direction in order to come into contact with or face a right end of the driver 42 so as to support the driver 42 from the rightward direction Y1. According to such a configuration, the base 46 guides the driver 42 to move in the front-rear direction.

Further, the base 46 includes a support surface that comes into contact with or faces the bottom surface of the slider 44 placed on the driver 42 so as to support the slider 44 from the downward direction Z2, and a wall portion extending in the front-rear direction in order to come into contact with or face a left end of the slider 44 so as to support the slider 44 from the leftward direction Y2. Further, the base 46 includes a wall portion extending in the front-rear direction in order to come into contact with or face a right end of the slider 44 so as to support the slider 44 from the rightward direction Y1. According to such a configuration, the base 46 guides the slider 44 to move in the front-rear direction.

As illustrated in FIG. 9, the base 46 is formed with a first protrusion 46A1 provided with a taper that protrudes in the upward direction Z1 as advancing in the rearward direction X2, a second protrusion 46A2 provided with a taper that protrudes in the upward direction Z1 as advancing in the forward direction X1, and a third protrusion 46A3 provided with a taper that protrudes in the upward direction Z1 as advancing in the rearward direction X2.

The first protrusion 46A1 is provided on a path of the first claw portion 48C1 (inside the first groove 42G1) when the driver 42 moves in the rearward direction X2.

The second protrusion 46A2 is provided on a path of the second claw portion 48C2 (inside the second groove 42G2) when the driver 42 moves in the forward direction X1.

The third protrusion 46A3 is provided on a path of the third claw portion 48C3 (inside the third groove 42G3) when the driver 42 moves in the rearward direction X2.

Each of the first protrusion 46 A1 to the third protrusion 46A3 is preferably formed to have the same height as the driver 42 (a plate thickness of the driver 42) or be higher than the driver 42.

The first protrusion 46A1 and the third protrusion 46A3 are provided at the same position in the front-rear direction. The second protrusion 46A2 is provided in the forward direction X1 with respect to the first protrusion 46A1 and the third protrusion 46A3.

According to the above configuration, when the motor 54 rotates the ball screw 50 clockwise, the nut part 52, the slider 44 fixed to the nut part 52, and the switching block 48 held by the nut part 52 move together in the forward direction X1. Further, since the first claw portion 48C1, the second claw portion 48C2, and the third claw portion 48C3 of the switching block 48 are respectively inserted into the first groove 42G1, the second groove 42G2, and the third groove 42G3, a front surface of the first claw portion 48C1 and a front surface of the third claw portion 48C3 respectively come into contact with a side surface of the first groove 42G1 facing the rearward direction X2 and a side surface of the third groove 42G3 facing the rearward direction X2. Therefore, the switching block 48 pressed against the surface of the base 46 by the elastic member 49 moves the driver 42 in the forward direction X1 by the front surface of the first claw portion 48C1 and the front surface of the third claw portion 48C3 while pressing the surface of the base 46 in the downward direction Z2. As a result, the driver 42 and the slider 44 move together in the forward direction X1. A moving operation in which the driver 42 and the slider 44 move together in the forward direction X1 is referred to as a first moving operation.

Thereafter, when the switching block 48 advances to a position at which the second protrusion 46A2 is provided, the second claw portion 48C2 moves in the upward direction Z 1 along an inclined surface of the second protrusion 46A2. Therefore, the switching block 48 moves in the upward direction Z1 while moving in the forward direction X1. As a result, the front surface of the first claw portion 48C1 and the front surface of the third claw portion 48C3 move in the upward direction Z1 with respect to the side surface of the first groove 42G1 and the side surface of the third groove 42G3 that are in contact with the front surface of the first claw portion 48C1 and the front surface of the third claw portion 48C3, respectively. Accordingly, the switching block 48 moves on the driver 42, and the driver 42 stops moving in the forward direction X1. At this time, the first moving operation ends.

After the first moving operation ends, when the motor 54 further rotates the ball screw 50 clockwise, the switching block 48 moves on the driver 42 in the forward direction X1. At this time, of the slider 44 and the driver 42, only the slider 44 moves in the forward direction X1. A moving operation in which only the slider 44 of the driver 42 and the slider 44 moves in the forward direction X1 is referred to as a second moving operation. When the slider 44 advances by a predetermined amount with respect to the driver 42, the motor 54 stops the clockwise rotation of the ball screw 50. At this time, the second moving operation ends.

During the second moving operation, there is a possibility that the driver 42 advances by the friction with the switching block 48 and the driver 42. Therefore, the binding machine 10 may include a stopper for stopping the advance of the driver 42 during the second moving operation. For example, by adopting a configuration in which an opening hole is formed on the base 46, the stopper such as a ball biased in the upward direction Z1 from the opening hole is exposed, and on the other hand, a recess into which the ball is inserted is provided on the bottom surface of the driver 42, and the stopper and the recessed portion are engaged with each other at a position at which the first moving operation ends and the movement of the driver 42 toward the forward direction X1 is to be stopped, it is possible to restrain the advance and the retraction of the driver 42 during the second moving operation.

As will be described later, in the first moving operation, by pushing the staple S positioned at the upper end in the forward direction X1 by using the driver 42 moving in the forward direction X1, it is possible to move the staple S positioned at the upper end in the forward direction X1 and separate the staple S from the another staple S. Further, in the first moving operation, by bringing the tip end portion S1A of the first leg portion S 1 into contact with the first outer wall portion 62 while moving the staple S positioned at the upper end in the forward direction X1 by using the driver 42 moving in the forward direction X1, it is possible to displace (plastically deform) the first leg portion S1 such that the bending angle α1 formed by the tip end portion S1A of the first leg portion S1 and the first portion S 1B of the first leg portion S 1 is further reduced.

Further, in the second moving operation, the driver 42 stops the movement toward the forward direction X1, and thus the staple S pushed by the driver 42 also stops the movement toward the forward direction X1. Accordingly, in a state in which the staple S is stopped, by causing the slider 44 to advance in the second moving operation, it is possible to push the second arm 32 of the second displacement portion 30 in the forward direction X1 by the second front end portion 44A2 of the slider 44 so as to rotate, and displace the second leg portion S2 of the staple S so as to be surrounded by the first leg portion S1, the second leg portion S2, and the main body portion S3 and be engaged with the first object G. Further, in the state in which the staple S is stopped, by rotating the first arm 22 of the first displacement portion 20 by the first front end portion 44A1 of the slider 44, it is possible to displace the first leg portion S1 of the staple S so as to be engaged with the first object G.

The binding machine 10 may further include a sensor other than a Hall sensor for obtaining a rotation amount of the motor 54 in order to control movement amounts of the driver 42 and the slider 44. In addition, the binding machine 10 may further include a magnet attached to the nut part 52 in order to detect and control a position of the nut part 52 in the front-rear direction, and a sensor other than a Hall sensor for obtaining a position of the magnet attached to the nut part 52.

After a binding operation ends, when the motor 54 rotates the ball screw 50 counterclockwise, the nut part 52, the slider 44 fixed to the nut part 52, and the switching block 48 held by the nut part 52 move together in the rearward direction X2. At this time, the switching block 48 moves on the stopped driver 42 in the rearward direction X2.

Further, when the motor 54 rotates the ball screw 50 counterclockwise, the second claw portion 48C2 of the switching block 48 moves in the downward direction Z2 while moving in the rearward direction X2 along the inclined surface of the second protrusion 46A2 provided on the base 46, and thus the first claw portion 48C1, the second claw portion 48C2, and the third claw portion 48C3 of the switching block 48 are respectively inserted into regions inside the first groove 42G1, the second groove 42G2, and the third groove 42G3. In addition, when the motor 54 rotates the ball screw 50 counterclockwise, the switching block 48 moves in the rearward direction X2, and a rear surface of the second claw portion 48C2 of the switching block 48 comes into contact with a side surface of the second groove 42G2 facing the forward direction X1. Therefore, the switching block 48 moves the driver 42 in the rearward direction X2 by the rear surface of the second claw portion 48C2 while pressing the surface of the base 46 in the downward direction Z2 by the elastic member 49. At this time, the nut part 52, the slider 44, the switching block 48, and the driver 42 move together in the rearward direction X2.

Further, when the motor 54 rotates the ball screw 50 counterclockwise and the switching block 48 retracts to the position at which the first protrusion 46A1 and the third protrusion 46A3 are provided, the first claw portion 48C1 and the third claw portion 48C3 of the switching block 48 respectively move in the upward direction Z1 along inclined surfaces of the first protrusion 46A1 and the third protrusion 46A3. Therefore, the switching block 48 moves in the upward direction Z1 while moving in the rearward direction X2. As a result, the rear surface of the second claw portion 48C2 moves in the upward direction Z 1 with respect to the side surface of the second groove 42G2 that is in contact with the rear surface of the second claw portion 48C2. Accordingly, the switching block 48 moves on the driver 42, and the driver 42 stops moving in the rearward direction X2. In order to restrict the movement of the driver 42 toward the rearward direction X2, the binding machine 10 may include a stopper having the above configuration or other configurations.

Thereafter, when the motor 54 further rotates the ball screw 50 counterclockwise, the switching block 48 moves on the driver 42 in the rearward direction X2. At this time, of the driver 42 and the slider 44, only the slider 44 moves in the rearward direction X2. When the slider 44 retracts by a predetermined amount with respect to the driver 42, the motor 54 stops the counterclockwise rotation of the ball screw 50.

Thereafter, when the motor 54 rotates the ball screw 50 clockwise, the nut part 52, the slider 44 fixed to the nut part 52, and the switching block 48 held by the nut part 52 move together in the forward direction X1. Since the nut part 52, the slider 44, and the switching block 48 are moved together in the forward direction X1 to a position at which the first claw portion 48C1 and the third claw portion 48C3 of the switching block 48 respectively come into contact with or approach close to a side surface of the front end of the first groove 42G1 and a side surface of the front end of the third groove 42G3, and thereafter, it is possible to shift to the first moving operation.

According to the above configuration, the binding machine 10 can execute the first moving operation in which the driver 42 and the slider 44 advance together, and the second moving operation in which only the slider 44 of the driver 42 and the slider 44 further moves in the forward direction X1.

A position of the nut part 52 in an initial state is not limited. For example, the binding machine 10 may have a configuration in which only the slider 44 moves in the forward direction immediately after startup from the initial state, and then the first moving operation in which the driver 42 and the slider 44 start moving is executed.

### Feeding-Bending Mechanism of Detachment Portion

The detachment portion includes a support wall that supports the staple S in the movement path of the staple S separated by the driver 42 and moving in the forward direction X1 and during the displacement by the first displacement portion 20 and the second displacement portion 30.

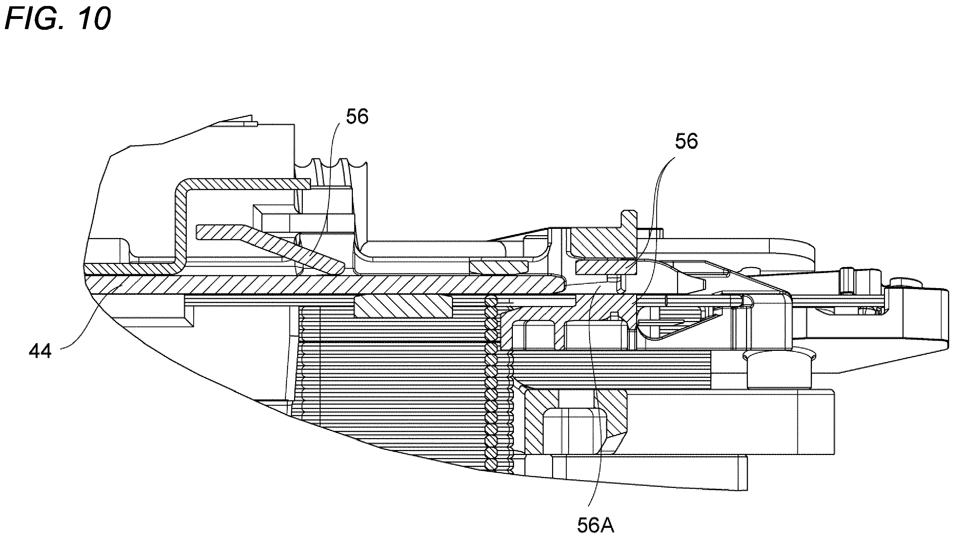

As illustrated in FIG. 10, the detachment portion 56 is provided to vertically move as the slider 44 moves. The detachment portion 56 is formed with a gap 56A in which a part of the slider 44 enters as the slider 44 moves. Since a part of the slider 44 enters the gap 56A of the detachment portion 56, a vertical position of the detachment portion 56 can be stabilized, and the staple S can be reliably deformed.

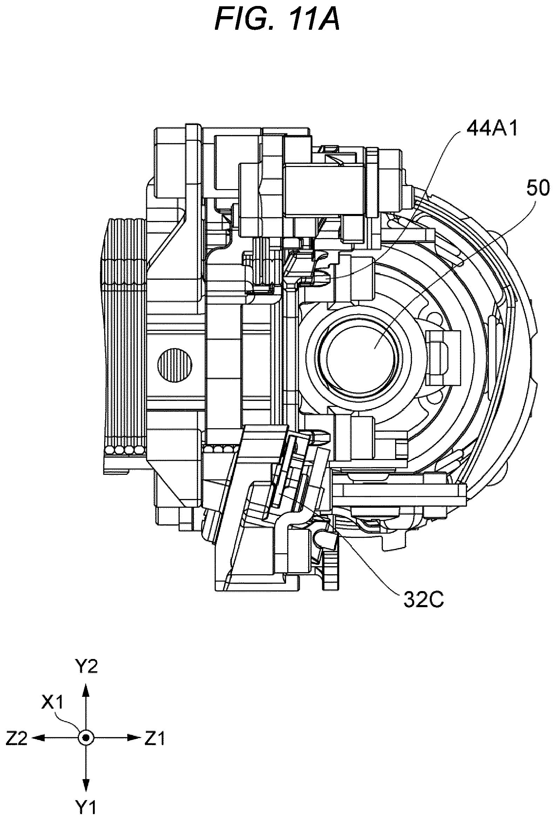

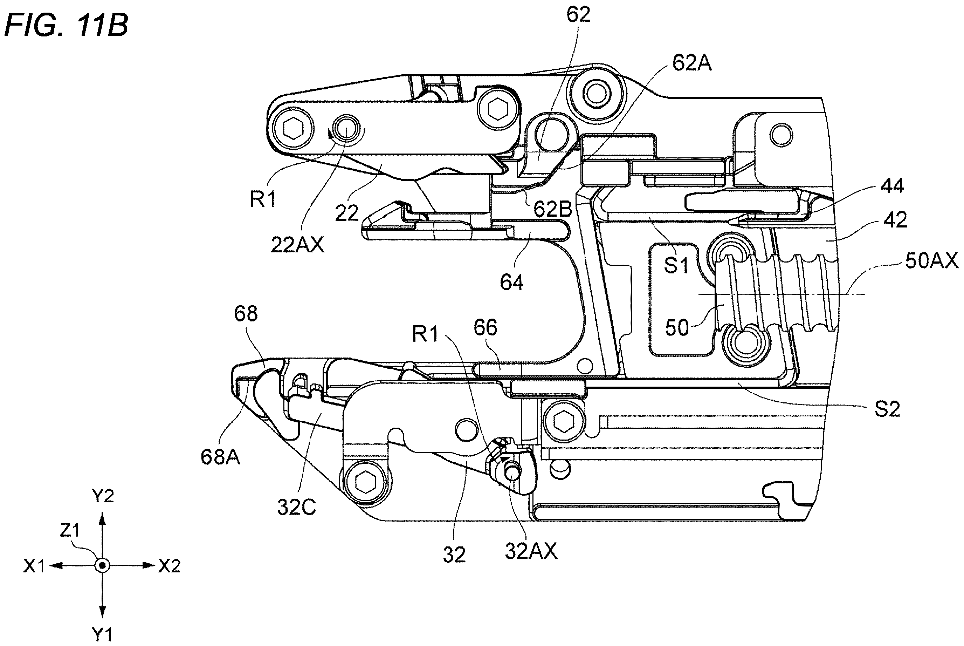

FIGS. 11A and 11B are partially enlarged views illustrating the front end portion of the binding machine 10 in the initial state (a standby state) in the front view and the top view, respectively.

When the staple S moves in the forward direction X1 by the driver 42, the tip end portion S1A of the first leg portion S1 passes through the first outer wall portion 62 while being in contact therewith, and thus the first outer wall portion 62 executes plastic deformation so as to further reduce the bending angle α1 formed by the tip end portion S 1A of the first leg portion S 1 and the first portion S 1B of the first leg portion S1 (a portion connected to the tip end portion S1A of the first leg portion S1).

Accordingly, the first outer wall portion 62 is provided at a position at which only a part of the tip end portion S1A of the first leg portion S 1 of the staple S is in contact with the first outer wall portion 62.

The first inner wall portion 64 is provided inside the first leg portion S1 to support the first leg portion S1 from the inside when the first leg portion S1 of the staple S moves in the forward direction X1 by the driver 42 and when the first leg portion S1 is displaced. The first inner wall portion 64 includes a bottom surface provided along a movement path of the first leg portion S1, and a wall surface provided substantially parallel to the front-rear direction, which is a movement direction of the first leg portion S1, and supporting the first leg portion S1 from the inside.

On the other hand, the first outer wall portion 62 is provided to include a wall surface inclined such that a gap with the wall surface of the first inner wall portion 64 becomes small toward the forward direction X1. According to such a configuration, it is possible to displace the tip end portion such that the bending angle α1 becomes small as the tip end portion S1A of the first leg portion S1 advances in the forward direction X1.

Further, the first outer wall portion 62 according to the present embodiment at least includes a first region 62A (FIG. 9) at which a wall surface in which a gap with the wall surface of the first inner wall portion 64 is relatively largely reduced is formed, and a second region 62B (FIG. 9) that is provided in the forward direction X1 with respect to the first region 62A and at which a wall surface in which a gap with the wall surface of the first inner wall portion 64 is slightly reduced is formed.

When an average reduction rate of the gap (a distance in a left-right direction perpendicular to the forward direction X1) between the wall surface of the first outer wall portion 62 and the wall surface of the first inner wall portion 64 in the first region 62A is set to a first reduction rate, and an average reduction rate of the gap (the distance in the left-right direction perpendicular to the forward direction X1) between the wall surface of the first outer wall portion 62 and the wall surface of the first inner wall portion 64 in the second region 62B is set to a second reduction rate, an absolute value of the first reduction rate is larger than an absolute value of the second reduction rate. In other words, an angle formed by the front-rear direction in the top view and the wall surface of the first region 62A of the first outer wall portion 62 is larger than an angle formed by the front-rear direction in the top view and the wall surface of the second region 62B of the first outer wall portion 62.

As the bending angle α1 of the bent portion decreases, the elastic force repelling the displacement becomes smaller, and thus it is possible to smoothly bend the tip end portion S1A of the first leg portion S1 by the above configuration.

The wall surface with which the first leg portion S1 does not come into contact is not limited to the above configuration. For example, the first inner wall portion 64 may be provided to restrict the displacement of the first portion S 1B in the upward direction Z1 by providing a wall surface provided to protrude an upper portion of the first inner wall portion 64 in the outward direction and face an upper surface of the first portion S1B.

Further, the first inner wall portion 64 is formed with a through hole for allowing the tip end portion S1A and the contact member 24 to pass through the downward direction Z2 with respect to the first portion S1B (FIG. 5).

### Support Wall of Detachment Portion

The detachment portion further includes the second inner wall portion 66 having a wall surface that is provided inside the second leg portion S2 to support the second leg portion S2 from the inside when the second leg portion S2 is displaced. The second inner wall portion 66 further has a bottom surface provided substantially parallel to the front-rear direction along a movement path of the second leg portion S2.

The front end of the second inner wall portion 66 functions as a fulcrum when the second leg portion S2 is bent. Therefore, the front end of the second inner wall portion 66 is provided at a position by the second distance DS2 from the tip end of the second leg portion S2, which is a bent portion of the second leg portion S2. Since the second leg portion S2 needs to have a distance for closing the opening, the front end of the second inner wall portion 66 needs to be provided at a position separated by a distance equal to or larger than the width of the opening of the staple S from the tip end of the second leg portion S2. The tip end portion S2A of the second leg portion S2 is supported by a tip end supporting portion 68. The width of the opening of the staple S corresponds to a width between the wall surface of the first inner wall portion 64 and the wall surface of the second inner wall portion 66. Therefore, the second inner wall portion 66 is provided such that a distance between the tip end supporting portion 68 (a surface thereof facing the tip end of the second leg portion S2) and the front end of the second inner wall portion 66 is larger than the width between the wall surface of the first inner wall portion 64 and the wall surface of the second inner wall portion 66, which corresponds to the width of the opening of the staple S.

The second displacement portion 30 further includes the tip end supporting portion 68 that supports the tip end portion S2A of the second leg portion S2. The tip end supporting portion 68 includes the support wall portion 68A that has a wall surface provided inside the second leg portion S2 and supporting the tip end portion S2A from the inside.

### First Displacement Portion

The first displacement portion 20 has a function of displacing the first leg portion S1 so as to be engageable with the first object G.

The first displacement portion 20 according to the present embodiment includes the first arm 22 that rotates by being pushed by the first front end portion 44A1 of the slider 44, and the contact member 24 (the claw member) that bends the tip end portion S1A of the first leg portion S 1 to plastically deform by moving toward the inward direction of the staple S while being in contact with the tip end portion S1A of the first leg portion S 1 as the first arm 22 rotates.

First, a configuration of the first front end portion 44A1 of the slider 44 will be described.

As illustrated in FIGS. 7A and 7B, the first front end portion 44A1 of the slider 44 is provided to extend in the forward direction X1 at an end portion of the slider 44 in the leftward direction Y2. The first front end portion 44A1 includes a first protruded portion 44A11 that protrudes in the upward direction Z1 in order to rotate the first arm 22 in the first rotation direction R1 by coming into contact with the first arm 22 at the time of the movement in the forward direction X1, and a second protruded portion 44A12 that rotates the first arm 22 in the second rotation direction R2 opposite to the first rotation direction R1 by coming into contact with the first arm 22 at the time of the movement in the rearward direction X2.

The first protruded portion 44A11 is provided in the rearward direction X2 with respect to the second protruded portion 44A12. Further, the first protruded portion 44A11 is provided outside (in the leftward direction Y2) with respect to the second protruded portion 44A12. According to such a configuration, since a distance between a rotation shaft 22AX of the first arm 22 and the first protruded portion 44A11 can be set to be larger than a distance between the rotation shaft 22AX of the first arm 22 and the second protruded portion 44A12, it is possible to generate a large rotation torque at the time of advance having a high load.

The first front end portion 44A1 of the slider 44 further includes a protruding end portion 44A13 extending in the forward direction X1. The protruding end portion 44A13 restrains the bending of the first portion S1B by pressing the first portion S 1B connected to the tip end portion S1A of the first leg portion S1 from the upward direction Z 1 at the time of the plastic deformation of the tip end portion S1A of the first leg portion S 1.

Next, the first arm 22 of the first displacement portion 20 will be described. The first arm 22 is a member that rotates in the first rotation direction R1 by being pushed in the forward direction X1 by the first front end portion 44A1 of the slider 44, and translates the contact member 24 in the inward direction.

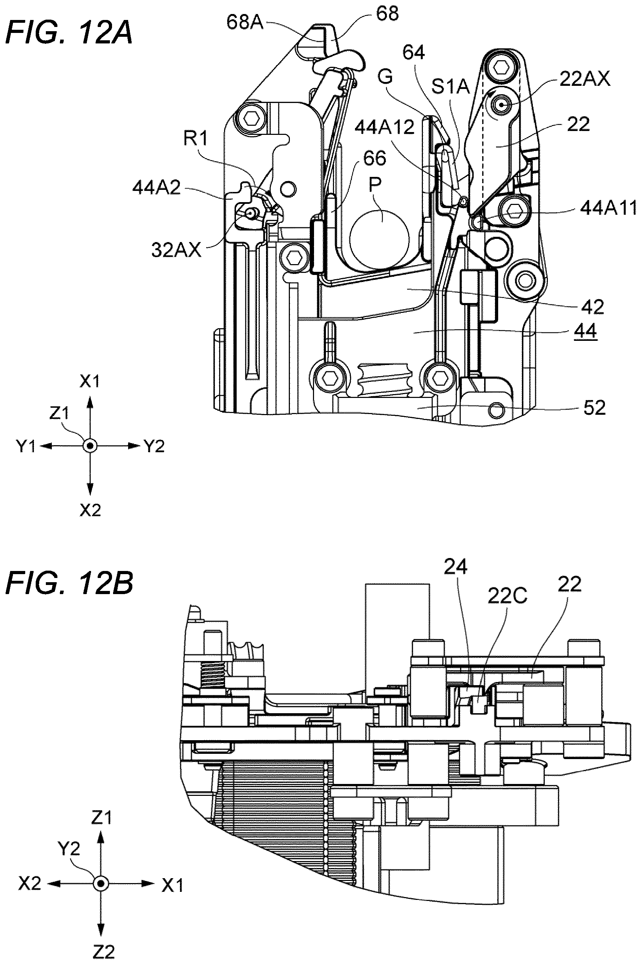

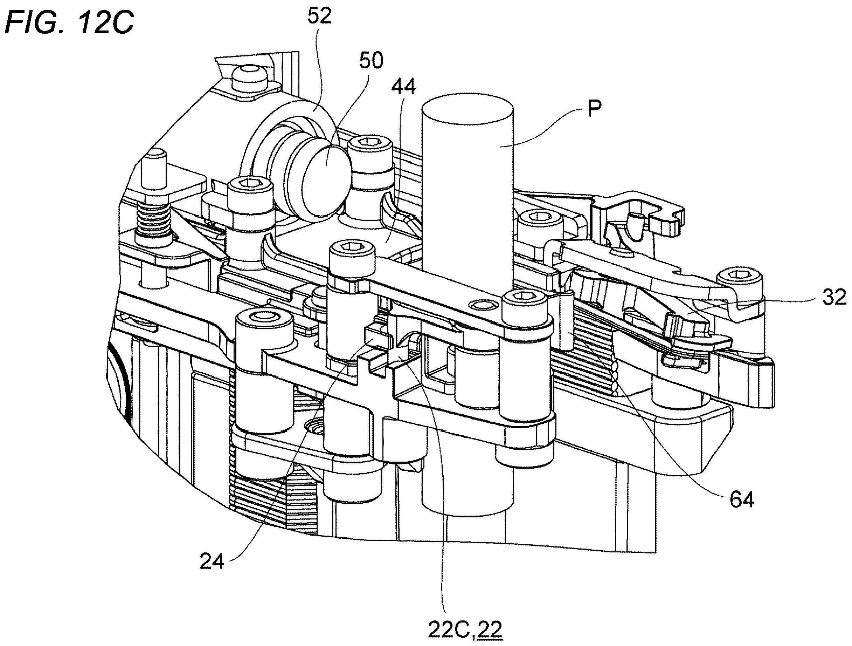

FIG. 12A is a partially enlarged view illustrating the front end portion of the binding machine 10 during a plastic deformation start time by the first displacement portion 20 in the top view, FIG. 12B is a partially enlarged view of a cross section of the first displacement portion 20 in a left side view, and FIG. 12C is an enlarged perspective view of the front end portion of the binding machine 10. However, for the sake of convenience, parts unnecessary for the description are omitted in FIGS. 12A to 12C.

As illustrated in FIG. 12A and the like, the rotation shaft 22AX of the first arm 22 is provided in the outward direction (in the rightward direction Y1) of the first leg portion S 1 of the staple S and in the forward direction X1. Further, the rotation shaft 22AX of the first arm 22 is provided perpendicular to the front-rear direction so as to extend in the up-down direction. The first arm 22 further has a portion that is provided to extend from the rotation shaft 22AX toward the rearward direction X2 at the time of standby, and includes, at a rear end of this portion, a wall portion that protrudes in the downward direction Z2 and extends to be inclined toward the rearward direction X2 and the inward direction. A surface of the wall portion facing the rearward direction X2 faces the rearward direction X2 and the outward direction in the initial state, and a surface of the wall portion facing the forward direction X1 faces the forward direction X1 and the inward direction. The surface of the wall portion facing the rearward direction X2 includes a surface in contact with the advancing first protruded portion 44A11. The wall portion moves to penetrate through a region between the first protruded portion 44A11 and the second protruded portion 44A12 while rotating in the first rotation direction R1 by being in contact with the first protruded portion 44A11. In addition, the surface of the wall portion facing in the forward direction X1 includes a surface in contact with the retracting second protruded portion 44A12. Accordingly, the wall portion returns to an original position while rotating in the second rotation direction R2 opposite to the first rotation direction R1 by being in contact with the second protruded portion 44A12.

As illustrated in FIG. 12C, a protruded portion 22C protruding in the downward direction Z2 is further provided at a rear end portion of the first arm 22. The protruded portion 22C is engaged with a recessed portion 24A provided at an end portion of the contact member 24. Since the protruded portion 22C rotates in the first rotation direction R1 around the rotation shaft 22AX of the first arm 22, the contact member 24 advances toward the inward direction of the staple S.

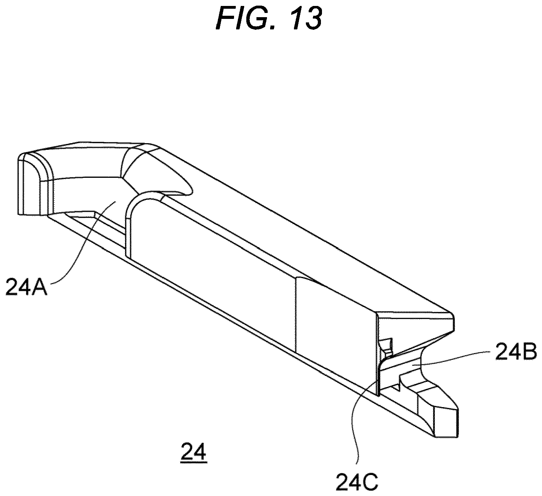

FIG. 13 is a perspective view of the contact member 24 (the claw member). The contact member 24 has a function of plastically deforming the tip end portion S1A of the first leg portion S 1 of the staple S by being pressed by the first arm 22 and advancing in a direction inclined toward the inward direction of the staple S and the downward direction Z2. By the contact member 24, the tip end portion S1A of the first leg portion S1 is bent such that the tip end portion S1A intersects the first portion S 1B connected to the tip end portion S1A of the first leg portion S1 in the top view, and the tip end advances in the downward direction Z2 separated from the plane PL penetrating through the first leg portion S1, the second leg portion S2, and the main body portion S3 before the binding. By plastically deforming the tip end portion S1A of the first leg portion S1 in the inward direction and the downward direction Z2 in a state of sandwiching the first object G, the tip end portion S 1A of the first leg portion S1 can sandwich the first object G without interfering with the first portion S1B.

As illustrated in FIG. 13, the recessed portion 24A that is engaged with the protruded portion 22C of the first arm 22 protruding in the downward direction Z2 is provided at a tail end of the contact member 24. When the protruded portion 22C of the first arm 22 rotates in the first rotation direction R1, a side surface of the recessed portion 24A comes into contact with the protruded portion 22C, and the contact member 24 advances in the direction inclined toward the inward direction and the downward direction Z2, when the protruded portion 22C rotates in the second rotation direction R2, another side surface of the recessed portion 24A comes into contact with the protruded portion 22C, and the contact member 24 returns in a direction inclined toward the upward direction Z1 and the outward direction.

A tip end of the contact member 24 includes a contact surface 24B that comes into contact to grip the tip end portion, and a corner portion 24C that is provided at a connection portion between the contact surface 24B and a side surface and applies a stress for plastically deforming the tip end portion. Here, the contact surface 24B is formed to be recessed to conform to a shape of a cross section of the staple S. Further, the contact surface 24B is formed to be inclined so as to come into contact with the tip end portion S1A prior to the corner portion 24C. According to such a configuration, after the tip end portion S1A is taken in so as to be gripped by the contact surface 24B, the tip end portion S1A can be plastically deformed by the corner portion 24C, and thus it is possible to stabilize the position of the tip end portion S1A plastically deformed by the corner portion 24C.

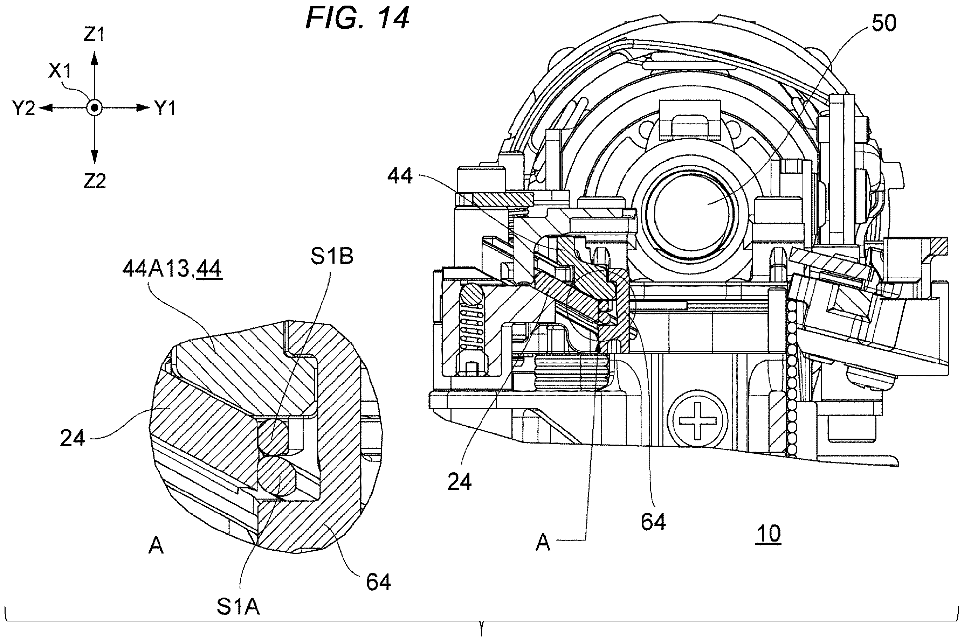

FIG. 14 is a cross-sectional view of the tip end portion S1A after the plastic deformation by the contact member 24 in the front view, and is an enlarged view of a region A in this cross section. As illustrated in FIG. 14, the contact member 24 is placed on an inclined surface of the base 46 inclined to descend in the inward direction, and thus the contact member 24 is guided to advance in the direction inclined toward the inward direction of the staple S (a direction approaching the second arm 32) and the downward direction Z2. The first portion S 1B of the first leg portion S 1 is supported by the bottom surface of the slider 44 from the upward direction Z1, and is supported by the first inner wall portion 64 from the inside and the downward direction Z2 (excluding a portion at which the tip end portion S1A passes through the downward direction Z2 with respect to the first portion S 1B). In addition, the contact surface 24B of the contact member 24 faces an outer surface of the first portion S 1B at the time of the plastic deformation. Therefore, it is possible to restrain the bending of the first portion S 1B at the time of the plastic deformation of the tip end portion S1A of the first leg portion S 1.

### Second Displacement Portion

The second displacement portion 30 has a function of displacing the second leg portion S2 so as to be engageable with the first object G.

The second displacement portion 30 includes the second arm 32 that bends the second leg portion S2 to plastically deform by rotating in the first rotation direction R1 by the second front end portion 44A2 of the slider 44.

First, a configuration of the second front end portion 44A2 of the slider 44 will be described.

As illustrated in FIGS. 7A and 7B, the second front end portion 44A2 of the slider 44 is provided to extend in the forward direction X1 at an end portion of the slider 44 in the rightward direction Y1. The second front end portion 44A2 includes a first surface 44A21 and a second surface 44A22 formed to face the forward direction X1 in order to rotate the second arm 32 in the first rotation direction R1 by coming into contact with the second arm 32 at the time of the movement in the forward direction X1, and a third surface 44A23 provided in the forward direction X1 with respect to the first surface 44A21 and the second surface 44A22 and formed to face the rearward direction X2. By disposing a rear end portion 32B of the second arm 32 between the first surface 44A21 and the second surface 44A22, and the third surface 44A23, the second arm 32 rotates in the first rotation direction R1 at the time of the advance of the slider 44, and the second arm 32 rotates in the second rotation direction R2 and returns to an original position at the time of the retraction of the slider 44.

The first surface 44A21 of the slider 44 corresponds to a surface on which the first front end portion 44A1 of the advancing slider 44 first comes into contact with the rear end portion 32B of the second arm 32. A surface of the rear end portion 32B of the second arm 32 that comes into contact with the first surface 44A21 is referred to as a first rear end surface 32B1.

The second surface 44A22 of the slider 44 corresponds to a surface on which the second front end portion 44A2 of the slider 44, which further advances after the first surface 44A21 comes into contact with the first rear end surface 32B 1 and the second arm 32 starts rotating in the first rotation direction R1, comes into contact with the rear end portion 32B of the second arm 32. A surface of the rear end portion 32B of the second arm 32 that comes into contact with the second surface 44A22 is referred to as a second rear end surface 32B2.

As illustrated in FIG. 7B and the like, the first surface 44A21 is provided in the upward direction Z1 with respect to the second surface 44A22 in terms of the up-down direction, the first surface 44A21 is provided in the rearward direction X2 with respect to the second surface 44A22 in terms of the front-rear direction, and the first surface 44A21 is provided in the rightward direction Y1 with respect to the second surface 44A22 in terms of the left-right direction, that is, the first surface 44A21 is provided in the outward direction (the rightward direction Y1) with respect to the second surface 44A22 with the staple S as a reference.

According to this configuration, the slider 44 can further push the second arm 32 by the second surface 44A22 after pushing the second arm 32 by the first surface 44A21, and thus it is possible to increase a rotation angle of the second arm 32 with respect to a stroke of the slider 44.

Further, the slider 44 and the second arm 32 are formed such that an angle (an example of a "first angle") formed by a normal line of the first rear end surface 32B1 at a contact point (an example of a "first contact point") in contact with the first surface 44A21 of the slider 44 and a straight line connecting the first contact point and a rotation shaft 32AX is closer to 90 degrees than an angle (an example of a "second angle") formed by a normal line of the second rear end surface 32B2 at a contact point (an example of a "second contact point") in contact with the second surface 44A22 of the slider 44 and a straight line connecting the second contact point and the rotation shaft 32AX when there is no first contact point.

When the contact point is switched by the rotation of the second arm 32, the slider 44 and the second arm 32 are formed such that the angle (an example of the "first angle") formed by the normal line of the first rear end surface 32B 1 at the contact point (an example of the "first contact point") in contact with the first surface 44A21 of the slider 44 and the straight line connecting the first contact point and the rotation shaft 32AX is equal to an angle (an example of the "second angle") formed by a normal line of the second rear end surface 32B2 at a contact point (an example of the "second contact point") in contact with the second surface 44A22 of the slider 44 and a straight line connecting the second contact point and the rotation shaft 32AX.

Alternatively, the slider 44 and the second arm 32 are formed such that the angle (an example of the "second angle") formed by the normal line of the second rear end surface 32B2 at the contact point (an example of the "second contact point") in contact with the second surface 44A22 of the slider 44 and the straight line connecting the second contact point and the rotation shaft 32AX is close to 90 degrees.

According to this configuration, it is possible to set a rotational moment when the first surface 44A21 is in contact with the first rear end surface 32B 1 to be relatively larger than a rotational moment when the second surface 44A22 is in contact with the second rear end surface 32B2.

As will be described later, the second leg portion S2 needs to bend two portions simultaneously at the start of rotation of the second arm 32, and thus a large load is applied to the second arm 32 at the start of rotation. Therefore, by pushing the second arm 32 in the forward direction X1 by the first surface 44A21 of the slider 44 at the start of rotation having the load, it is possible to generate a relatively large rotational moment on the second arm 32. In order to increase the rotational moment, a distance between the rotation shaft 32AX of the second arm 32 and the first rear end surface 32B 1 may be larger than a distance between the rotation shaft 32AX of the second arm 32 and the second rear end surface 32B2. In other words, the distance between the rotation shaft 32AX of the second arm 32 and the second rear end surface 32B2 may be smaller than the distance between the rotation shaft 32AX of the second arm 32 and the first rear end surface 32B1.

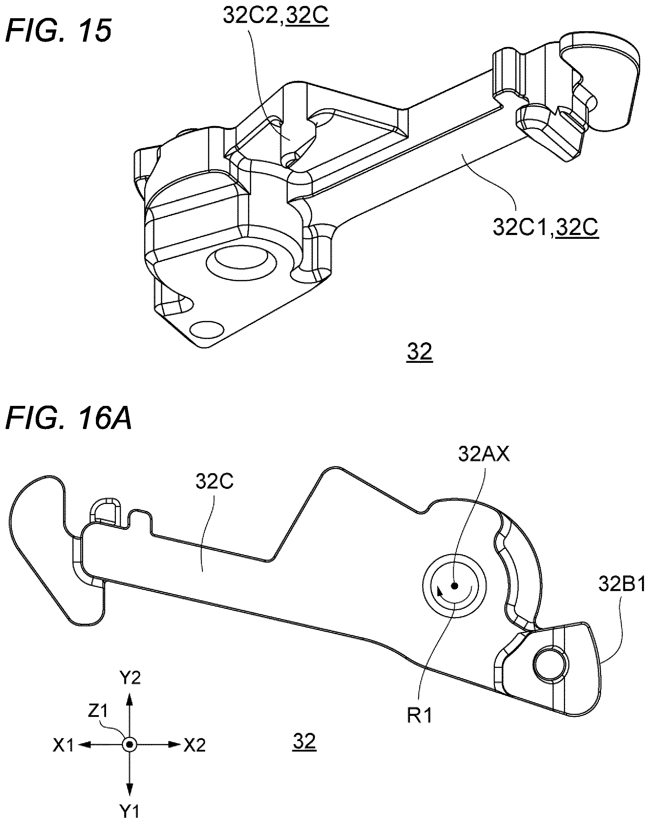

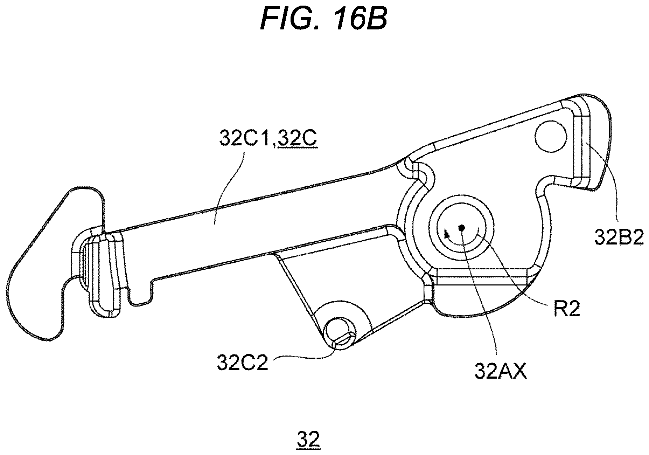

Next, the second arm 32 will be described. FIG. 15 is a perspective view of the second arm 32 as seen from the downward direction. FIGS. 16A and 16B are respectively a plan view and a rear view of the second arm 32.

As illustrated in FIGS. 15, 16A, and 16B, the second arm 32 includes the rear end portion 32B that extends in the rearward direction X2 from the rotation shaft 32AX in the initial state, and a tip end portion 32C that extends in the forward direction X1 with respect to the rotation shaft 32AX.

Since the first rear end surface 32B 1 of the rear end portion 32B is provided in the rearward direction X2 with respect to the second rear end surface 32B2, it is possible to bring the first surface 44A21 of the slider 44 into contact with the first rear end surface 32B 1, and then bring the second surface 44A22 into contact with the second rear end surface 32B2.

The rotation shaft 32AX is provided in the leftward direction Y2 (the inward direction) which is closer to a center than the first rear end surface 32B 1 and the second rear end surface 32B2. Therefore, since the rear end portion 32B is pushed in the forward direction X1, the tip end portion 32C of the second arm 32 rotates in the first rotation direction R1 which is directed to a direction approaching the inward direction of the staple S and the first arm 22.

Further, the rotation shaft 32AX is provided to be inclined so as to advance in the inward direction (the leftward direction Y2) toward the downward direction Z2. Therefore, the tip end portion 32C of the second arm 32 rotating in the first rotation direction R1 is provided to advance in the upward direction Z1 as the tip end portion 32C rotates in the first rotation direction R1. As a result, the second leg portion S2 of the staple S plastically deformed by the second arm 32 also advances in the upward direction Z1 as the second arm 32 rotates, and can be engaged with the first object G at a position in the upward direction Z1 with respect to the plane PL penetrating through the first leg portion S1, the second leg portion S2, and the main body portion S3 before the binding.

The tip end portion 32C of the second arm 32 includes a main body portion 32C1 that comes into contact with the second leg portion S2, and a protrusion 32C2 for bending back. The main body portion 32C1 is provided such that two protruded portions protruding in the first rotation direction R1 are vertically separated from each other at a position separated from the rotation shaft 32AX. By vertically sandwiching the second leg portion S2 by using the protruded portions, it is possible to firmly hold and plastically deform the second leg portion S2.

The second arm 32 includes the protrusion 32C2 for bending back that is provided at a position advanced in the first rotation direction R1 with respect to the main body portion 32C1, and protrudes in the downward direction Z2. By rotating the second arm 32 in the second rotation direction R2 and returning the second leg portion S2 in the second rotation direction R2 by the protrusion 32C2 after rotating the second arm 32 in the first rotation direction R1 and bending the second leg portion S2, it is possible to engage the tip end portion S2A of the second leg portion S2 with the first object G.

The protrusion 32C2 for bending back is formed to be inclined so as to protrude in the downward direction Z2 as advancing in the first rotation direction R1. According to such a configuration, when the second arm 32 is rotated in the second rotation direction R2, the protrusion 32C2 for bending back can smoothly move over the second leg portion S2 engaged with the first object G while returning the second leg portion S2 in the second rotation direction R2. A biasing force toward the upward direction Z1 by the pusher 16 is applied to the plastically deformed staple S via the staple S in the downward direction Z2. An elevation angle of the second leg portion S2 at the time of the displacement (for example, 10 degrees to 45 degrees with respect to the plane PL penetrating through the first leg portion S1, the second leg portion S2, and the main body portion S3 before the binding) and an inclined angle of the protrusion 32C2 for bending back are designed such that the protrusion moves over the second leg portion S2 against the biasing force.

### Binding Method Using Binding Machine

Hereinafter, a binding method using the binding machine 10 will be described.

As described above, FIGS. 11A and 11B are partially enlarged views illustrating the front end portion of the binding machine 10 in the initial state (the standby state) in the front view and the top view, respectively.

At this time, the staple S positioned at the upper end is connected to one or more staples S accommodated in the magazine 14 in the downward direction Z2. Further, the driver 42 is positioned in the rearward direction X2 with respect to the main body portion S3 of the staple S positioned at the upper end. There is a slight gap between a front end of the driver 42 and the main body portion S3 of the staple S positioned at the upper end. The protruding end portion 44A13 of the slider 44 provided at a left end slightly overlaps with the staple S.

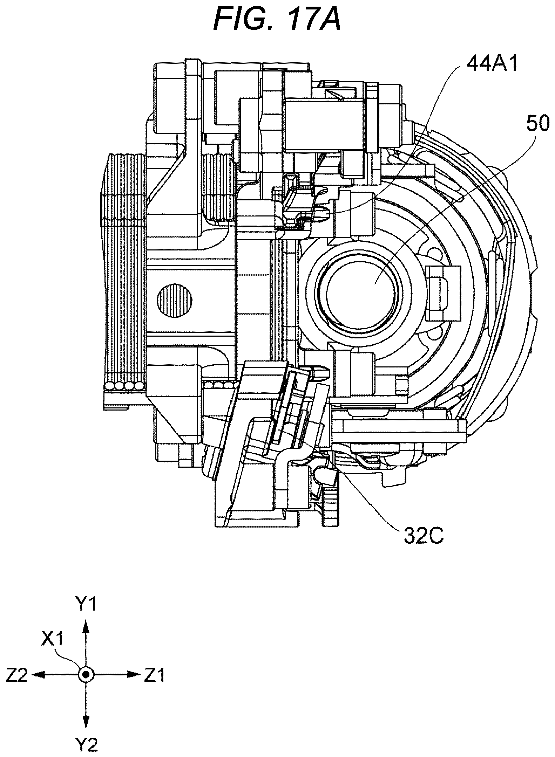

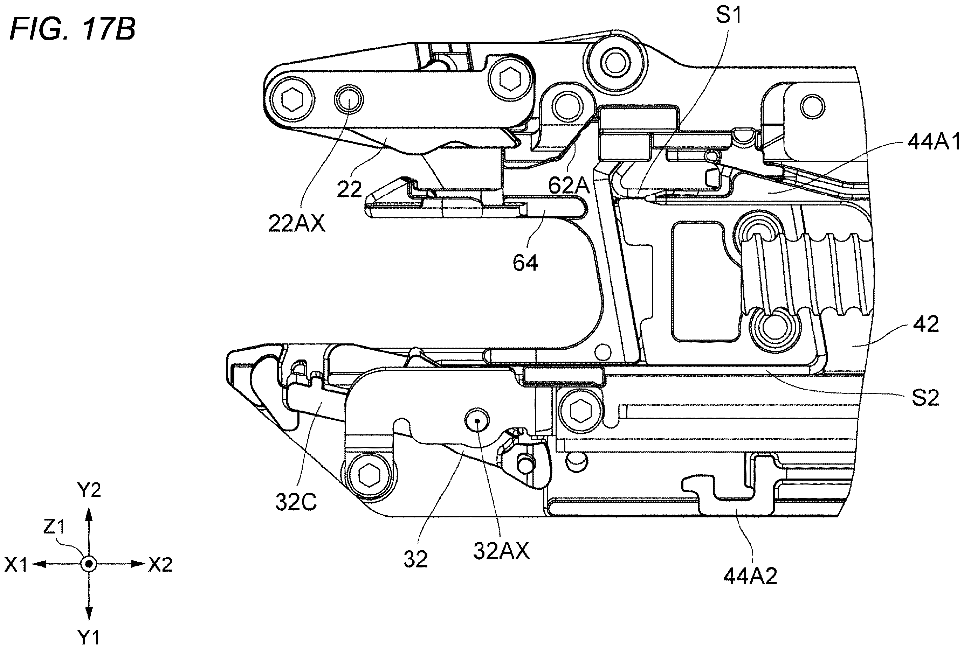

FIGS. 17A and 17B are partially enlarged views illustrating the front end portion of the binding machine 10 in the front view and the top view immediately after the user operates the switch and the driver 42 starts moving, respectively. When the user operates the switch, the motor 54 starts rotating, and the ball screw 50 accordingly rotates clockwise, and thus the nut part 52 and the slider 44 fixed to the nut part 52 start moving toward the forward direction X1. The first claw portion 48C1 and the third claw portion 48C3 of the switching block 48 held by the nut part 52 are inserted into the first groove 42G1 and the third groove 42G3, and thus the front surface of the first claw portion 48C1 and the front surface of the third claw portion 48C3 are in contact with the side surface of the first groove 42G1 facing the rearward direction X2 and the side surface of the third groove 42G3 facing the rearward direction X2, respectively, and the movement of the driver 42 toward the forward direction X1 is started. Accordingly, the first moving operation in which the driver 42 and the slider 44 advance together is started.

As illustrated in FIG. 8A, the base 46 is provided such that the height of the driver 42 substantially coincides with the staple S positioned at the upper end. Therefore, the front end surface 42S of the driver 42 moving on the base 46 in the forward direction X1 comes into contact with the main body portion S3 of the staple S positioned at the upper end, and presses the main body portion S3 of the staple S in the forward direction X1. A separation block 18 (FIG. 5) for prohibiting the movement of the staple S in the downward direction Z2 toward the forward direction X1 is provided inside the staple S in the downward direction Z2. Therefore, only the staple S positioned at the upper end is separated from the staple S in the downward direction Z2 and moves on the separation block 18 in the forward direction X1.

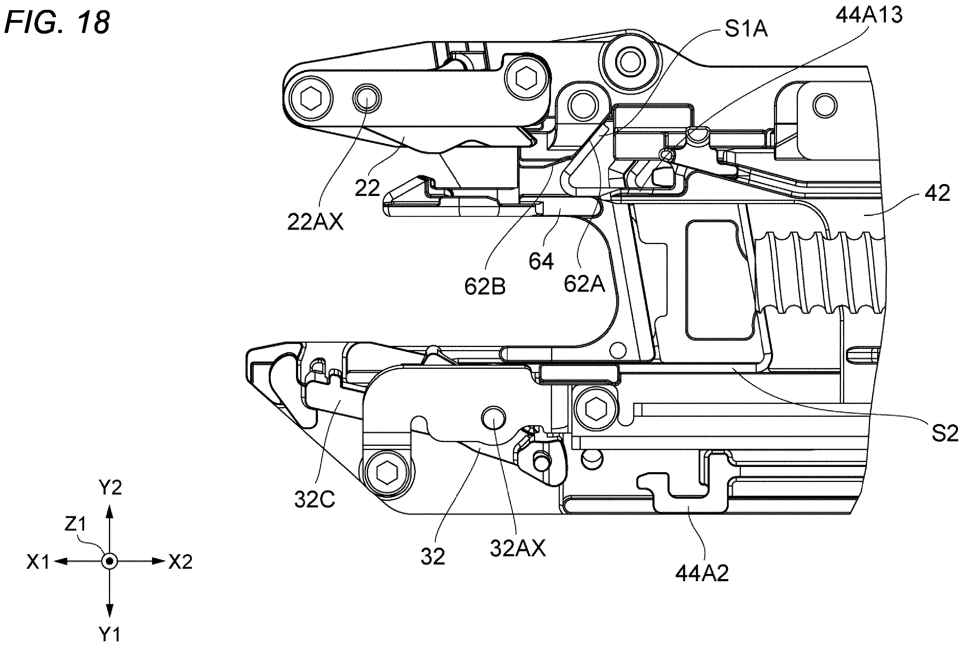

FIG. 18 is a partially enlarged view illustrating the front end portion of the binding machine 10 in the top view when the driver 42 advances and the tip end portion S1A of the first leg portion S 1 of the staple S advances on a guiding path of the detachment portion. Since a front view thereof is the same as FIG. 17A, the front view is omitted.

Since the ball screw 50 continuously rotates clockwise, the slider 44 moves in the forward direction X1. Therefore, the first front end portion 44A1 of the slider 44 advances such that the protruding end portion 44A13 is positioned on the first leg portion S 1, and the second front end portion 44A2 advances along a right end of the binding machine 10. The driver 42 advances together with the slider 44. The tip end portion S1A of the first leg portion S 1 comes into contact with the wall surface of the first region 62A corresponding to an entering portion of the first outer wall portion 62. In addition, the inside of the first portion S1B of the first leg portion S1 comes into contact with the wall surface of the first inner wall portion 64. Since the distance between the wall surface of the first outer wall portion 62 and the wall surface of the first inner wall portion 64 decreases as the driver 42 advances in the forward direction X1, the first leg portion S1 is plastically deformed such that the bending angle α1 is reduced as the driver 42 advances. At this time, the protruding end portion 42B of the driver 42 supports the first portion S 1B and a left end of the main body portion S3 from the outside, and the protruding end portion 44A13 of the slider 44 comes into contact with an upper surface of the first leg portion S1 to press the first leg portion S1 from the upward direction Z1, and thus the bending of the first portion S1B is restrained. Since the distance between the wall surface of the first outer wall portion 62 and the wall surface of the first inner wall portion 64 in the first region 62A is relatively largely reduced, an angle between the tip end portion S1A and the first portion S 1B of the first leg portion S 1 is relatively largely reduced. Since the distance between the wall surface of the first outer wall portion 62 and the wall surface of the first inner wall portion 64 in the subsequent second region 62B is relatively slightly reduced, the bending angle is relatively slightly reduced.

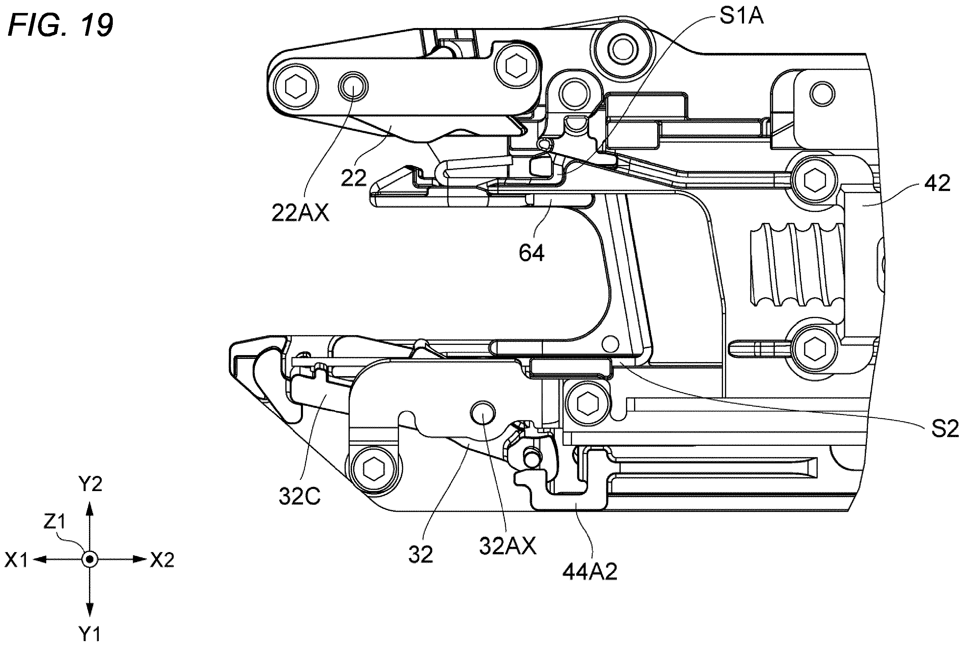

FIG. 19 is a partially enlarged view of the front end portion of the binding machine 10 in the top view when the driver 42 advances and the tip end portion S1A of the first leg portion S 1 of the staple S passes through the first outer wall portion 62. Since a front view thereof is the same as FIG. 17A, the front view is omitted. As illustrated in FIG. 19, when the tip end portion passes through the first outer wall portion 62, the tip end portion is plastically deformed, and the bending angle α1 is largely reduced.

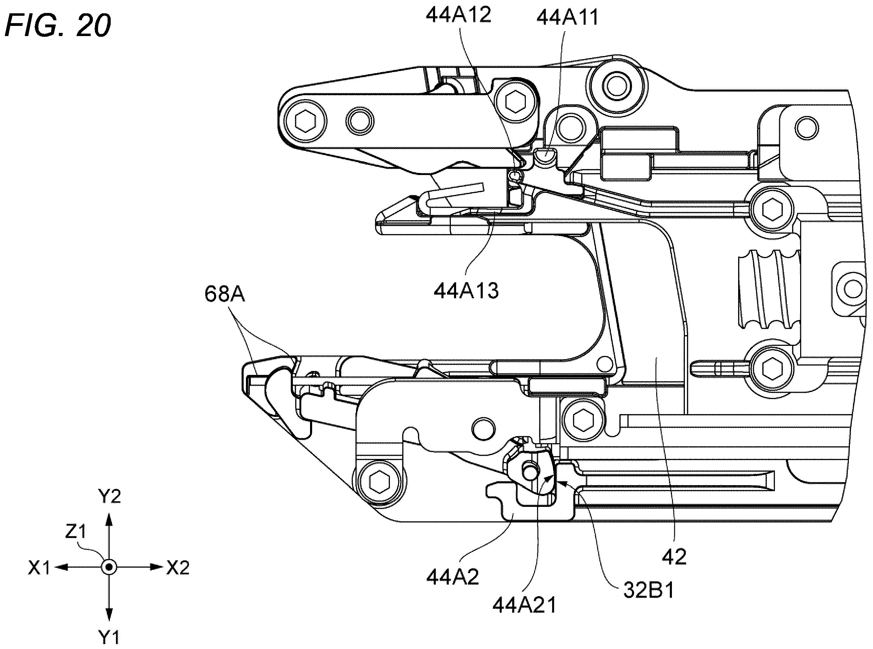

FIG. 20 is a partially enlarged view illustrating a state in which the driver 42 advances most and the staple S reaches a displacement start position in the top view. At this time, the bent portion of the first leg portion S 1 of the staple S reaches a front end of the first inner wall portion 64 (an inner wall surface of the first inner wall portion 64 facing the rearward direction X2), and the tip end portion S2A of the second leg portion S2 reaches a front end of the tip end supporting portion 68 (an inner wall surface of the tip end supporting portion 68 facing the rearward direction X2). Since a front view thereof is the same as FIG. 17A, the front view is omitted.

At this time, the bent portion of the first leg portion S 1 and an inner side surface and a lower surface of the first portion S1B are supported by the first inner wall portion 64 from the downward direction Z2 and the rightward direction Y1 (the inward direction). Further, the bent portion of the first leg portion S1 is also supported by the first inner wall portion 64 from the forward direction X1. Further, the upper surface of the first portion S 1B is supported from the upward direction Z1 by the protruding end portion 44A13 of the first front end portion 44A1 of the slider 44.

On the other hand, an inner side surface and a lower surface of the tip end portion S2A of the second leg portion S2 are supported by the tip end portion from the downward direction Z2 and the leftward direction Y2 (the inward direction).

Further, an inner side surface of the main body portion S3 and an inner side surface of a connection portion between the second leg portion S2 and the main body portion S3 are supported by the second inner wall portion 66 from the inward direction.

At this time, the second claw portion 48C2 of the switching block 48, which pushes the driver 42 in the forward direction X1, moves in the upward direction Z1 by the second protrusion 46A2. As a result, since the switching block 48 moves on the driver 42, the driver 42 stops moving in the forward direction X1, and the first moving operation ends. At the same time, the ball biased in the upward direction Z1 from the hole formed in the base 46 is fitted into the recessed portion provided in the bottom surface of the driver 42 and functions as a stopper, and thus the movement of the driver 42 toward the forward direction X1 or the rearward direction X2 is restrained by a frictional force with the switching block 48.

The first protruded portion 44A11 and the second protruded portion 44A12 of the first front end portion 44A1 of the slider 44 approach a rear end of the first arm 22. In addition, the first surface of the second front end portion 44A2 of the slider 44 approaches or comes into contact with the first rear end surface 32B 1 of the second arm 32.

After the first moving operation ends, the motor 54 stops rotating by the control device. At this time, the user sets the first object G and the second object P at predetermined positions of the binding machine 10. In the present embodiment, the first object G is a string that functions as a guide element. Accordingly, the user inserts the string, which is the first object G, into the bent portion of the first leg portion S 1. In the present embodiment, the second object P is a stem. Accordingly, the user inserts the stem, which is the second object P, into the region surrounded by the staple S. The portions of the binding machine 10 into which the first object G and the second object P are inserted may be referred to as a first insertion portion and a second insertion portion. In the present embodiment, the first object G is inserted into the bent portion of the first leg portion S1 supported by the first inner wall portion 64, and thus the first inner wall portion 64 corresponds to the first insertion portion. Further, the second object P is inserted into the recessed portion of the binding machine 10 provided to be recessed in the rearward direction X2 so as to be sandwiched by the first inner wall portion 64 and the second inner wall portion 66, and thus the recessed portion corresponds to the second insertion portion.

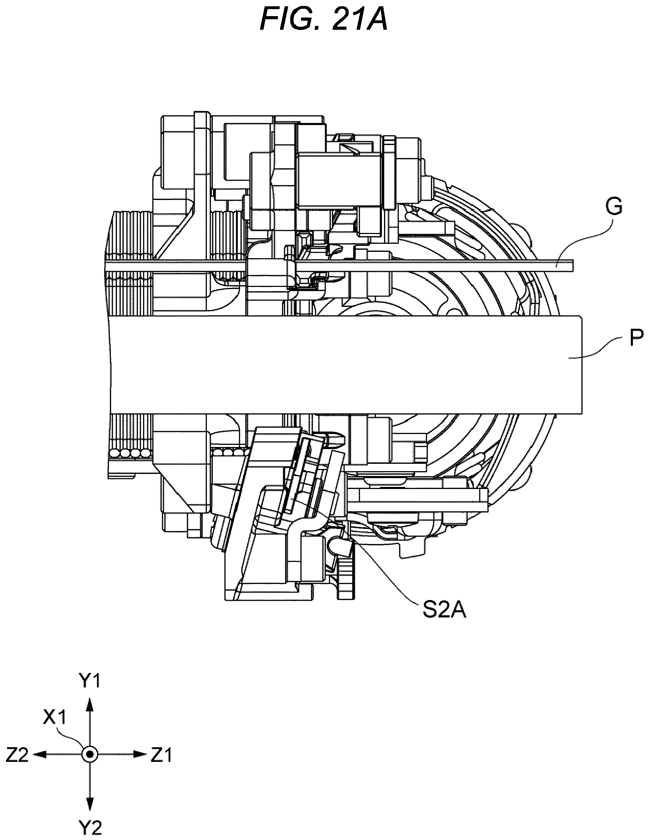

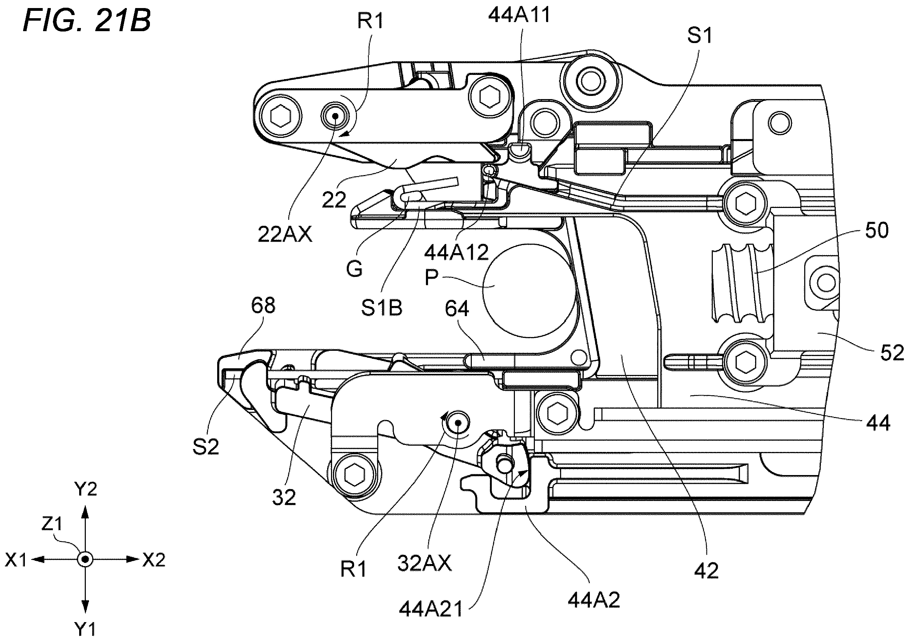

FIGS. 21A and 21B are partially enlarged views illustrating the front end portion of the binding machine 10 in the front view and the top view when the user inserts the first object G into the first insertion portion and inserts the second object P into the second insertion portion, respectively.

Thereafter, when the user operates the switch, or when it is detected that the first object G and the second object P are inserted by sensors such as contact sensors respectively provided in the first insertion portion and the second insertion portion, the motor 54 starts rotating again. The motor 54 restarts rotating, and the ball screw 50 accordingly rotates clockwise, and thus the nut part 52 and the slider 44 fixed to the nut part 52 start moving in the forward direction X1. Since the switching block 48 advances on the driver 42, the driver 42 does not advance. Therefore, the second moving operation in which only the slider 44 of the driver 42 and the slider 44 advances is started.

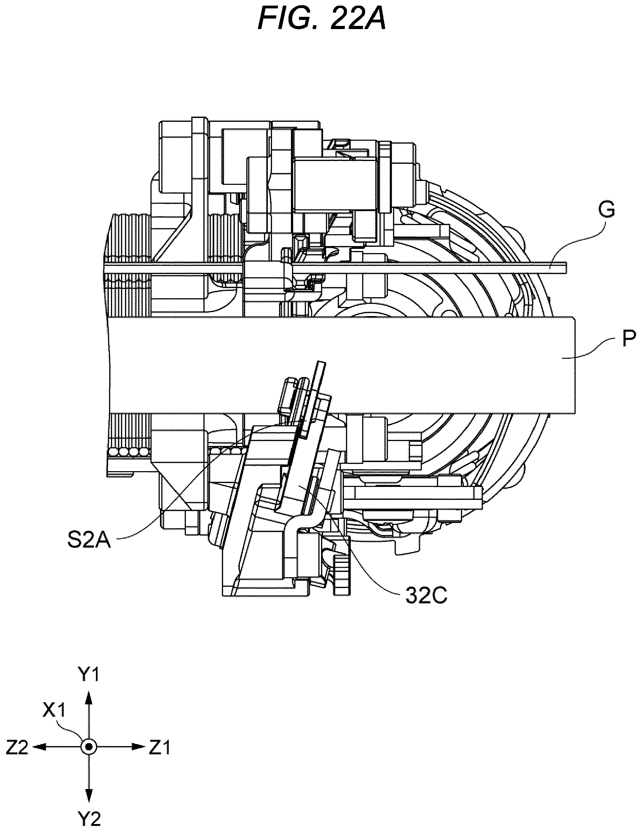

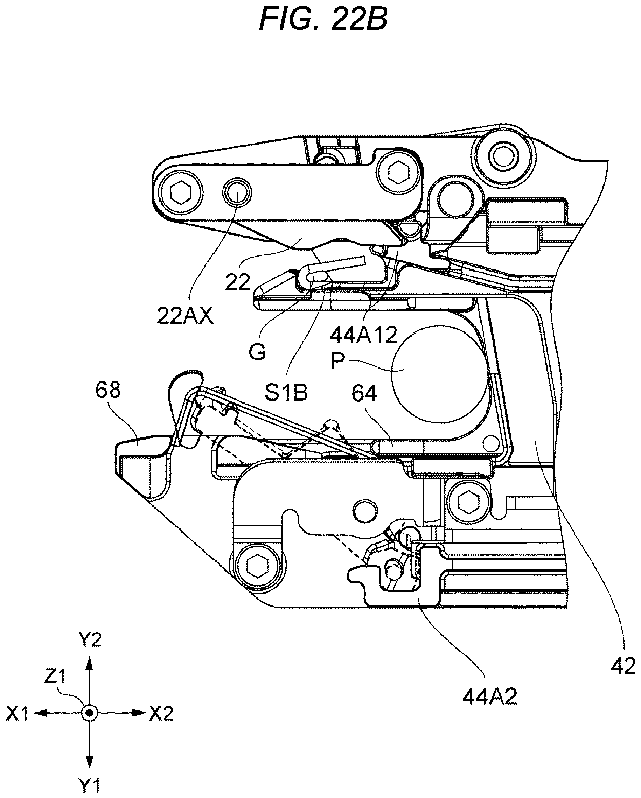

FIGS. 22A and 22B are partially enlarged views illustrating the front end portion of the binding machine 10 in the front view and the top view when the slider 44 further advances in the second moving operation, respectively. In the second moving operation, the driver 42 does not advance. Therefore, the inner side surface of the main body portion S3 of the staple S is supported by the first inner wall portion 64 and the second inner wall portion 66, and an outer side surface thereof is supported by the driver 42 and is static.

The first protruded portion 44A11 of the first front end portion 44A1 of the slider 44 comes into contact with the surface of the wall portion facing the rearward direction X2, which extends in a direction inclined to protrude in the downward direction Z2 with respect to the rear end portion of the first arm 22, and pushes the first arm 22 in the forward direction X1. The rotation shaft 22AX of the first arm 22 is provided at a position in the forward direction X1 and the outward direction (the leftward direction Y2) with respect to the first protruded portion 44A11 at this time. Therefore, the first arm 22 starts rotating in the first rotation direction R1. The wall portion of the rear end portion of the first arm 22 rotates in the first rotation direction R1 while passing through a region of a gap between the first protruded portion 44A11 and the second protruded portion 44A12. At this time, the first leg portion S1 is not plastically deformed by the first displacement portion 20.

On the other hand, the first surface 44A21 of the second front end portion 44A2 comes into contact with the first rear end surface 32B 1 of the second arm 32, and pushes the second arm 32 in the forward direction X1. At this time, the rotation shaft 32AX of the second arm 32 is positioned in the forward direction X1 and the inward direction (the leftward direction Y2) with respect to the first rear end surface 32B1, and thus the second arm 32 also starts rotating in the first rotation direction R1. The second leg portion S2 vertically sandwiched by the two protruded portions of the main body portion 32C1 of the second arm 32 is bent toward the inward direction with the front end of the second inner wall portion 66 as a fulcrum.

At this time, the tip end portion S2A of the second leg portion S2 is supported from the inward direction by the wall surface of the support wall portion 68A of the tip end supporting portion 68 provided inside the second leg portion S2. Therefore, the second leg portion S2 is bent toward the inward direction of the staple S with the front end of the second inner wall portion 66 as a fulcrum, and at the same time, the tip end portion S2A of the second leg portion S2 is bent in the opposite direction (the outward direction) by passing through the support wall portion 68A while being in contact with the wall surface of the support wall portion 68A of the tip end supporting portion 68.

As described above, since the rotation shaft 32AX of the second arm 32 is inclined such that the second arm 32 advances in the inward direction as advancing in the downward direction Z2, the tip end portion S2A of the second leg portion S2 advances in the upward direction Z1 while approaching the first leg portion S1 as rotating in the first rotation direction R1.

In addition, a period during which the tip end portion S2A of the second leg portion S2 of the staple S and the wall surface of the support wall portion 68A are in contact with each other and a period during which the first surface 44A21 of the slider 44 and the first rear end surface 32B1 of the second arm 32 are in contact with each other overlap with each other in at least a partial period, and thus it is possible to generate a relatively large rotational moment at the time of high load.

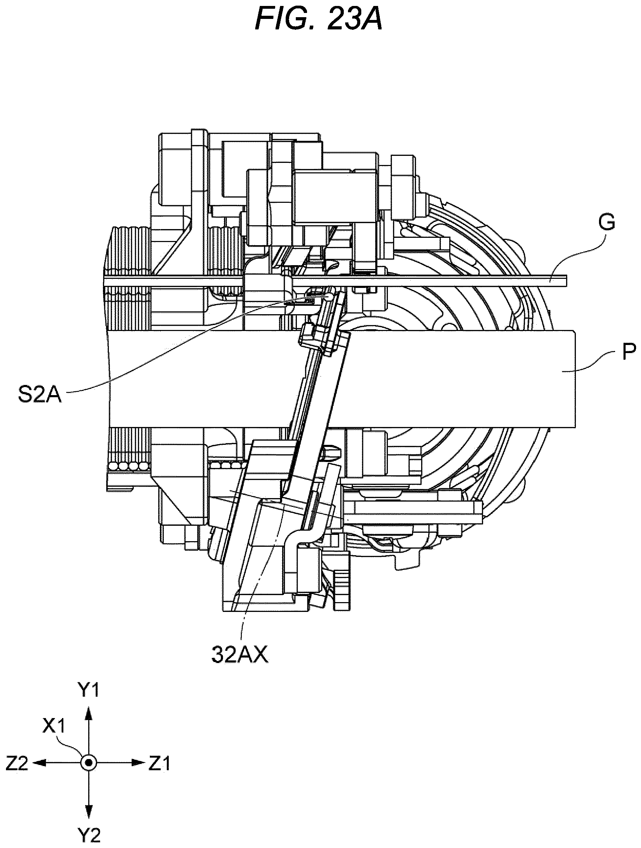

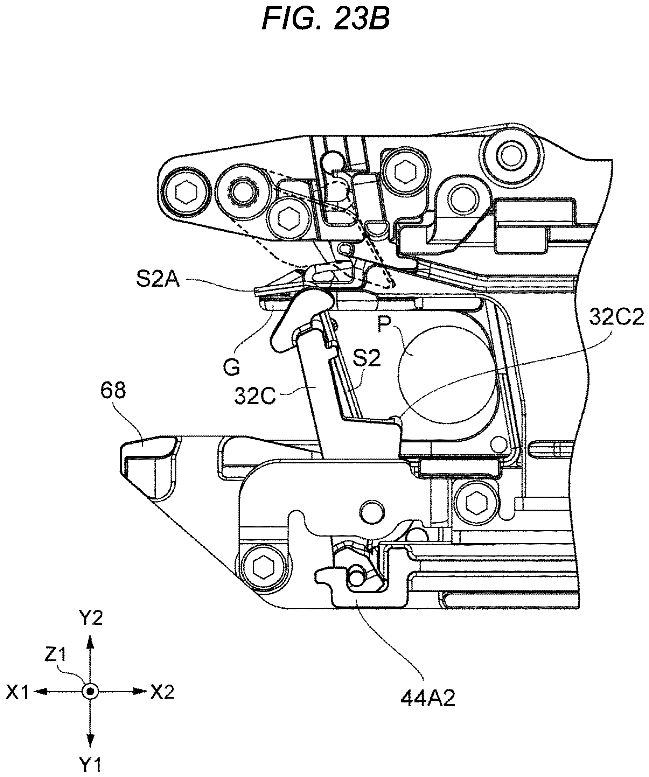

FIGS. 23A and 23B are partially enlarged views illustrating the front end portion of the binding machine 10 in the front view and the top view when the slider 44 further advances in the second moving operation, respectively.

The first arm 22 further rotates in the first rotation direction R1 by being pushed by the first protruded portion 44A11 of the first front end portion 44A1 of the slider 44. At this time, since the protruding end portion 44A13 of the first front end portion 44A1 of the slider 44 reaches the front end of the first inner wall portion 64, the slider 44 presses the upper surface of the first portion S 1B of the first leg portion S1 from the upward direction Z1. Therefore, the first portion S 1B of the first leg portion S 1 is supported by the slider 44 and the first inner wall portion 64 from the upward direction Z1, the downward direction Z2, and the inward direction.

The second rear end surface 32B2 of the second arm 32 further rotates in the first rotation direction R1 by being pushed by the second surface 44A22 of the second front end portion 44A2 of the slider 44. As illustrated in FIG. 23B, since the second leg portion S2 held by the second arm 32 is bent to the position at which the second leg portion S2 intersects the first leg portion S1, the opening provided in the staple S before the binding is closed in the top view, and the first leg portion S1, the second leg portion S2, and the main body portion S3 of the staple S surround the second object P in the top view. In the front view illustrated in FIG. 23A, the tip end portion S2A of the second leg portion S2 moves in the upward direction Z1 and approaches the first object G.

Further, the second surface 44A22 of the slider 44 and the second rear end surface 32B2 of the second arm 32 are in contact with each other after the period during which the tip end portion S2A of the second leg portion S2 of the staple S and the support wall portion 68A are in contact with each other elapses, and thus it is possible to generate a relatively small rotational moment at the time of relatively low load.

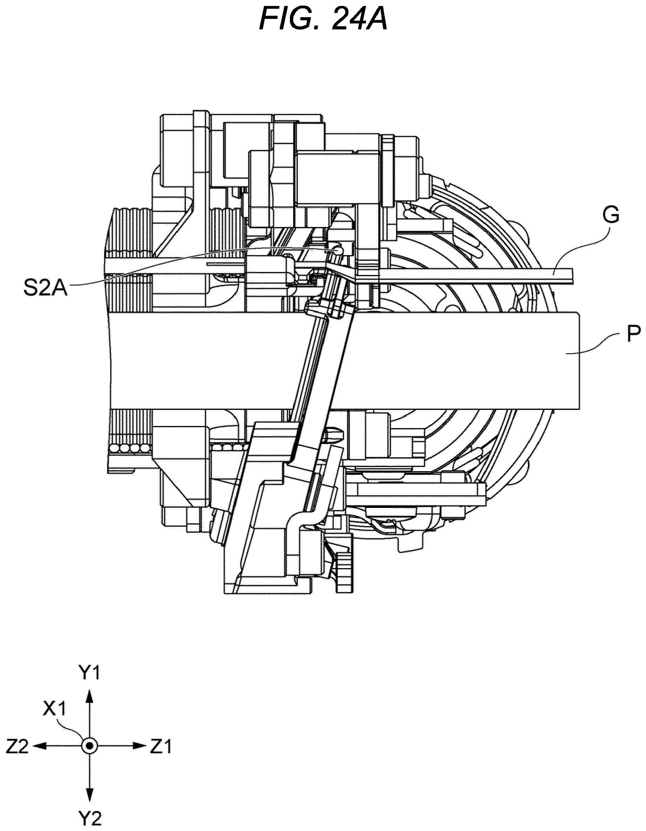

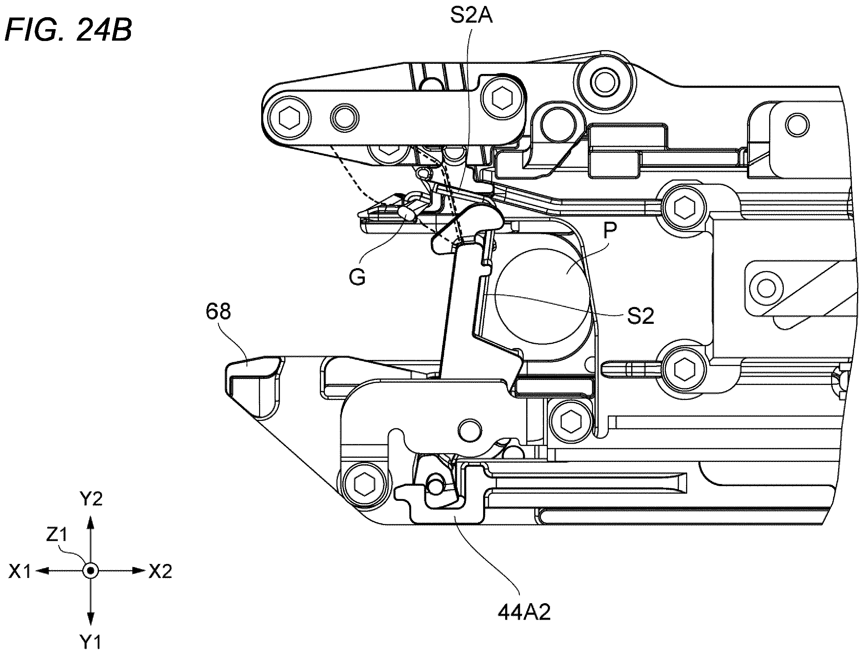

FIGS. 24A and 24B are partially enlarged views illustrating the front end portion of the binding machine 10 in the front view and the top view immediately before the slider 44 most advances in the second moving operation, respectively.

The first arm 22 further rotates in the first rotation direction R1 by being pushed by the first protruded portion 44A11 of the first front end portion 44A1 of the slider 44, comes into contact with the first object G, and pushes and displaces the first object G. Further, the protruded portion 22C protruding in the downward direction Z2 with respect to the first arm 22 is in contact with the recessed portion 24A provided at the tail end of the contact member 24. Therefore, as the protruded portion 22C of the first arm 22 rotates, the contact member 24 starts advancing in the direction inclined toward the inward direction of the staple S and the downward direction Z2. First, the contact surface 24B of the contact member 24 comes into contact with the tip end portion S 1A of the first leg portion S 1, and then the corner portion 24C of the contact member 24 comes into contact with the tip end portion S1A of the first leg portion S 1, and plastically deforms the tip end portion to fold back. The tip end portion S1A of the first leg portion S1 folded back by the contact member 24 passes through the downward direction Z2 with respect to the first portion S1B, and is bent to intersect the first portion S1B in the top view. As illustrated in FIG. 14 corresponding to a cross-sectional view at the position at which the first portion S1B intersects the tip end portion S1A, the tip end portion S1A can be plastically deformed such that the first portion S 1B (the upward direction) and the tip end portion S1A (the downward direction) are vertically adjacent to each other. At this time, the tip end of the contact member 24 and the tip end of the second leg portion S2 are formed in the first inner wall portion 64, and enter the inside of the through hole communicating with the region surrounded by the staple S in the top view. As illustrated in FIGS. 24A and 24B, since the first portion S1B is surrounded by the slider 44 and the first inner wall portion 64 from the upward direction, the downward direction (excluding the portions through which the folded-back tip end portion S1A and the contact member 24 pass), and the inward direction, the bending thereof is restrained.

According to the above process, the first leg portion S1 sandwiches the first object G. Since the first leg portion S1 is plastically deformed, the first leg portion S1 and the first object G are less likely to be disengaged from each other.

On the other hand, the second rear end surface 32B2 of the second arm 32 further rotates in the first rotation direction R1 by being pushed by the second surface of the second front end portion 44A2 of the slider 44. Therefore, the second leg portion S2 approaches the second object P beyond the first object G in the top view.

Thereafter, the motor 54 rotates the ball screw 50 counterclockwise, and thus the slider 44 starts retracting.

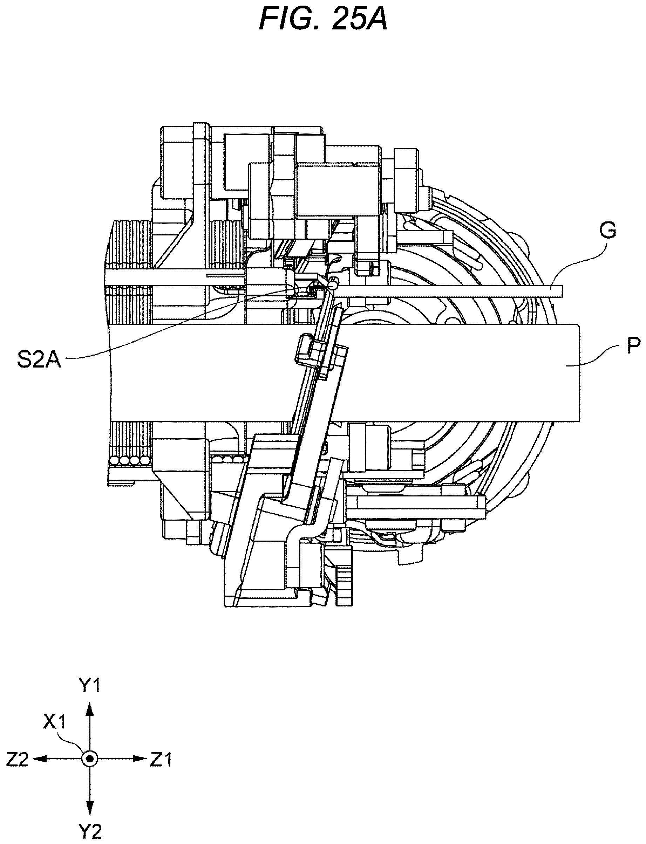

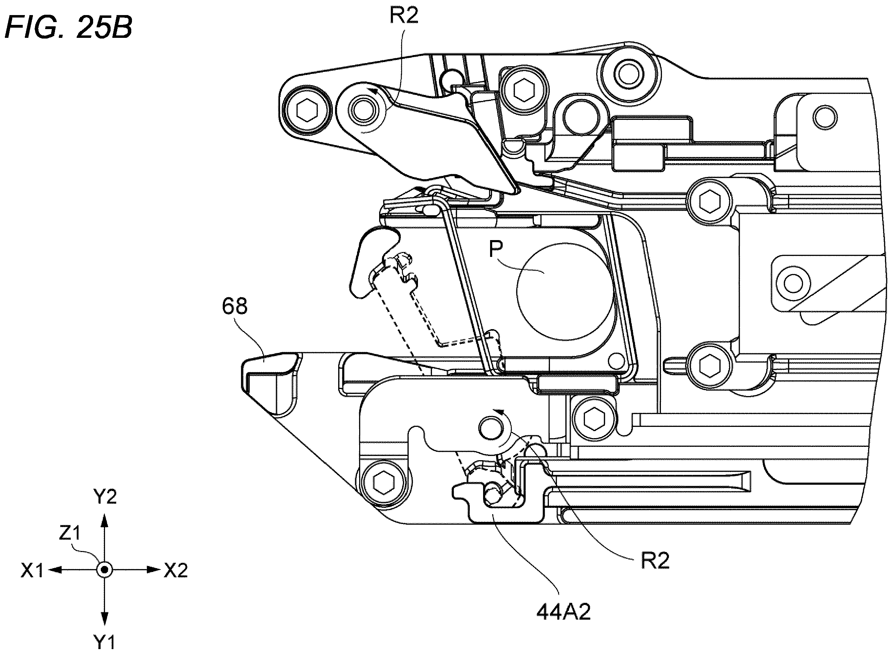

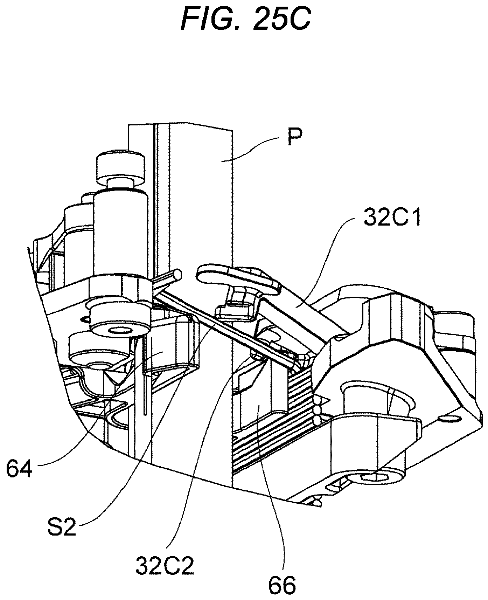

FIGS. 25A, 25B, and 25C are partially enlarged views and a partially enlarged perspective view of the front end portion of the binding machine 10 in the front view and the top view after the slider 44 starts retracting.

When the slider 44 starts retracting, the second protruded portion 44A12 of the first front end portion 44A1 of the slider 44 comes into contact with a surface of the wall portion of the first arm 22 facing the forward direction X1 and pushes the wall portion in the rearward direction X2, the wall portion of the first arm 22 moves to penetrate through the region between the first protruded portion 44A11 and the second protruded portion 44A12, and thus the first arm 22 is rotated in the second rotation direction R2.

Further, the third surface of the second front end portion 44A2 of the slider 44 comes into contact with the rear end portion of the second arm 32 and pushes the second arm 32 in the rearward direction X2, and thus the second arm 32 is rotated in the second rotation direction R2. When the second arm 32 rotates in the second rotation direction R2, the protrusion 32C2 for bending back of the second arm 32, which is provided to protrude in the downward direction Z2 at the position advanced in the first rotation direction R1 with respect to the main body portion S3, comes into contact with the second leg portion S2 and pushes the second leg portion S2 in the second rotation direction R2. Therefore, the second leg portion S2 is displaced in the second rotation direction R2, and as a result, the bent portion of the second leg portion S2 is engaged with the first object G. As illustrated in FIG. 25A, the second leg portion S2 is engaged with the first object G, and thus the first object G is displaced, and the tension is generated between the engagement position of the first object G with the first leg portion S1 and an engagement position of the second object P with the second leg portion S2. Therefore, the first object G is bent, and it is possible to restrain the first object G and the second leg portion S2 from being disengaged from each other.

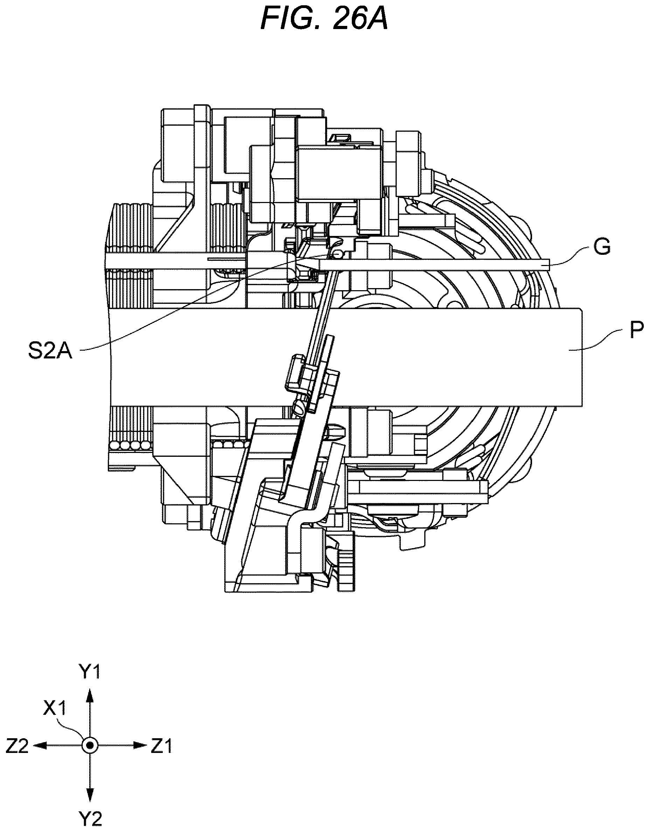

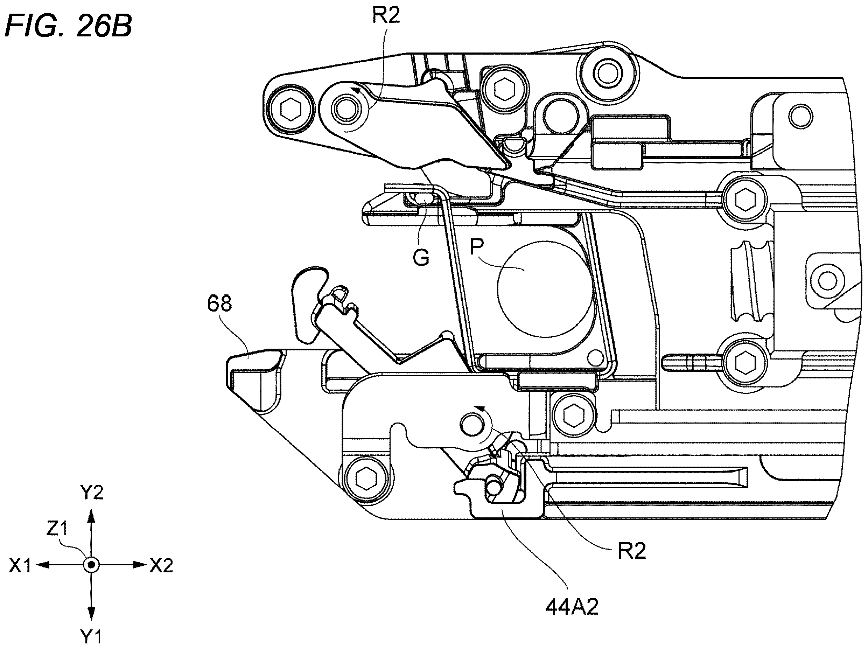

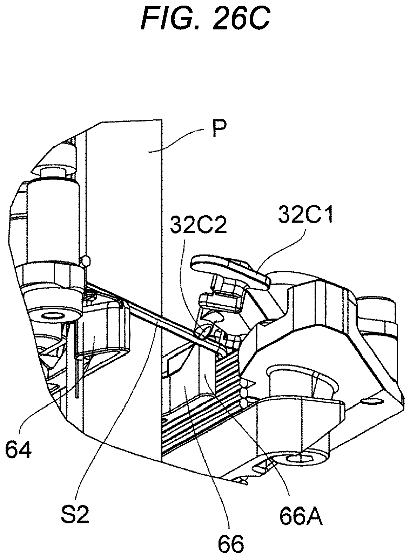

FIGS. 26A, 26B, and 26C are partially enlarged views and a partially enlarged perspective view of the front end portion of the binding machine 10 in the front view and the top view when the slider 44 further retracts.

The second protruded portion 44A12 of the first front end portion 44A1 of the slider 44 pushes the surface of the wall portion of the first arm 22 facing the forward direction X1 in the rearward direction X2 while being in contact with the surface, the wall portion of the first arm 22 moves to penetrate through the region between the first protruded portion 44A11 and the second protruded portion 44A12, and thus the first arm 22 is further rotated in the second rotation direction R2.

When the first arm 22 further rotates in the second rotation direction R2 and rotates to an initial position illustrated in FIG. 21B from this state, the ball member biased by the elastic member is fitted in a recessed portion provided in a lower surface of the first arm 22. Therefore, the first arm 22 is held at the initial position.

The third surface of the second front end portion 44A2 of the slider 44 pushes the surface of the rear end portion of the second arm 32 facing the forward direction X1 in the rearward direction X2 while being in contact with the surface, and thus the second arm 32 is further rotated in the second rotation direction R2. Since the second leg portion S2 is engaged with the first object G, the protrusion 32C2 for bending back of the second arm 32 cannot further displace the second leg portion S2 in the second rotation direction R2. Therefore, the protrusion 32C2 for bending back of the second arm 32 moves over the second leg portion S2 while slightly pushing down the second leg portion S2 in the downward direction Z2. As illustrated in FIG. 26C, the binding machine 10 has a configuration in which the biasing force toward the upward direction Z1 by the pusher 16 is applied to the staple S via the staple S in the downward direction Z2, and thus the protrusion 32C2 for bending back moves over the second leg portion S2 against the biasing force.

When the second arm 32 further rotates in the second rotation direction R2 and rotates to the initial position illustrated in FIG. 21B from this state, the ball member biased by the elastic member is fitted in a recessed portion provided in a lower surface of the second arm 32. Therefore, the second arm 32 is held at the initial position.

After the binding operation ends, when the motor 54 further rotates the ball screw 50 counterclockwise, the second claw portion 48C2 of the switching block 48 moves in the downward direction Z2 while moving in the rearward direction X2 along the inclined surface of the second protrusion 46A2 provided on the base 46, and thus the first claw portion 48C1, the second claw portion 48C2, and the third claw portion 48C3 of the switching block 48 are respectively inserted into the regions inside the first groove 42G1, the second groove 42G2, and the third groove 42G3. At this time, the first arm 22 and the second arm 32 approximately return to positions in the initial state. In addition, when the motor 54 rotates the ball screw 50 counterclockwise, the switching block 48 moves in the rearward direction X2, and the rear surface of the second claw portion 48C2 of the switching block 48 comes into contact with the side surface of the second groove 42G2 facing the forward direction X1. Therefore, the switching block 48 moves the driver 42 in the rearward direction X2 by the rear surface of the second claw portion 48C2 while pressing the surface of the base 46 in the downward direction Z2 by the elastic member 49. Therefore, the driver 42 can be returned to the position in the initial state.

According to the above process, the second leg portion S2 is engaged with the first object G. As described above, since the second leg portion S2 is engaged with the first object G in a state in which the second leg portion S2 has passed (penetrated) through the gap between the first object G and the second object P in the top view, the second object P is surrounded by the staple S. Therefore, the second object P and the staple S are restrained from being easily disengaged from each other. Further, even when the second object P grows and the second leg portion S2 is bent, the engagement with the first object G is strengthened, and thus the first object G and the staple S are also restrained from being easily disengaged from each other.

However, the binding machine 10 according to the present embodiment can be modified. For example, the first displacement portion 20 may plastically deform the tip end portion S 1A of the first leg portion S1 by the first arm 22 without using the contact member 24. For example, a part obtained by integrating the first arm 22 and the contact member 24 may be provided, and the tip end portion S1A of the first leg portion S 1 may be plastically deformed by rotating the part. At this time, by providing the first arm 22 such that the rotation shaft 22AX of the first arm 22 is inclined and the first arm 22 descends as rotating in the first rotation direction R1, the first arm 22 may have a configuration in which the tip end portion passes under the first portion S1B. On the contrary, by providing the first arm 22 such that the first arm 22 rises as rotating in the first rotation direction R1, the first arm 22 may have a configuration in which the tip end portion passes above the first portion S 1B. For example, the tip end portion S1A of the first leg portion S1 folded back by the contact member 24 may pass through the upward direction Z1 with respect to the first portion S1B and may be bent to intersect the first portion S1B in the top view. On the other hand, the second leg portion S2 may be bent to advance in the downward direction Z2 separated from the plane PL penetrating through the second leg portion S2 and the main body portion S3.

### Second Embodiment

Hereinafter, a detailed configuration of a binding machine 100 according to the present embodiment will be described. The description of the same or similar components and functions will be omitted or simplified by using the same or similar names or reference numerals, and different parts will be mainly described.

### Configuration of Staple S0

First, a configuration of a staple S0 according to the present embodiment will be described. Since a material and the like of the staple S0 is the same as that of the staple S, the description thereof is omitted.

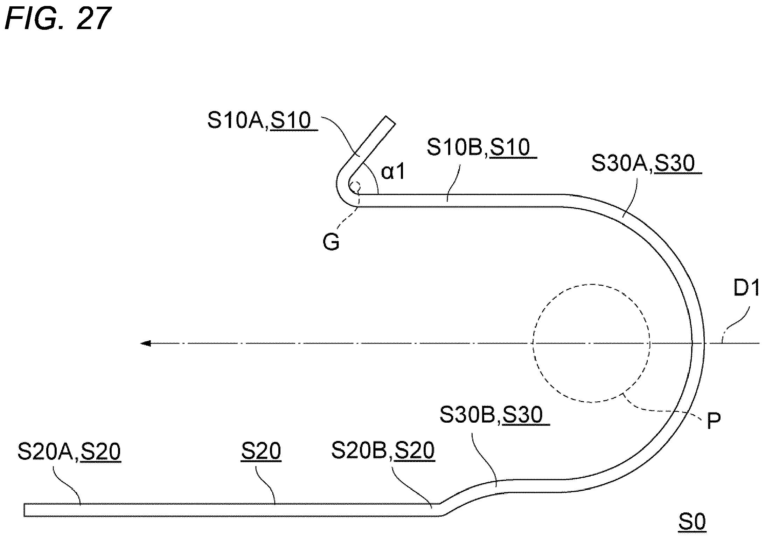

FIG. 27 illustrates the staple S0 according to the present embodiment before binding.

The staple S0 is in common with the staple S in that the staple S0 includes a first leg portion S10, a second leg portion S20, and a main body portion S30 connecting the first leg portion S10 and the second leg portion S20. Similar to the staple S, in a state before binding, the first leg portion S10 and the second leg portion S20 of the staple S0 are separately provided, and thus an opening is provided between the first leg portion S10 and the second leg portion S20. A direction from a closed portion of the main body portion S30 toward the opening (a leftward direction of a paper surface in FIG. 27) is referred to as the opening direction D1. When the staple S0 is set in the binding machine 100, the opening direction D1 of the staple S0 coincides with the forward direction X1. Therefore, the user can insert the second object P into the staple S0 through the opening.

The first leg portion S10 is a portion including one end portion of the staple S0, and includes a first portion S10B extending in the opening direction D1 and a tip end portion S10A bent from the first portion S10B and extending outward or in an outward direction. An angle formed by the first portion S10B and the tip end portion S 10A is referred to as the bending angle α1, and a portion of the tip end portion S10A that is bent to be connected to the first portion S10B is referred to as the bent portion. In the present embodiment, the bending angle α1 is 90 degrees or less, and is preferably an acute angle less than 90 degrees.

The second leg portion S20 is a portion including the other end portion of the staple S0, and includes a second portion extending in the opening direction D1. In a bound state, the second leg portion S20 is bent to intersect the first leg portion S10 and closes the opening in a top view. Accordingly, the second leg portion S20 according to the present embodiment is formed to be longer than a width of the opening, that is, a distance between the first leg portion S10 and the second leg portion S20. In addition, the second leg portion S20 is formed to be longer than the first leg portion S10.

The main body portion S30 is a portion connecting the first leg portion S10 and the second leg portion S20. The main body portion S30 according to the present embodiment includes a curved portion S30A curved to protrude in the outward direction, and a curved portion S30B curved to protrude in an inward direction. The curved portion S30A is formed to be longer than the curved portion S30B and formed such that a curvature of the curved portion S30A is larger than a curvature of the curved portion S30B. The curved portion S30A is connected to the first portion S10B of the first leg portion S10 and is curved to protrude in the outward direction at one end, and is connected to the curved portion S30B at the other end. The curved portion S30B is connected to the curved portion S30A and is curved to protrude in the inward direction at one end, and is connected to the second leg portion S20 at the other end.

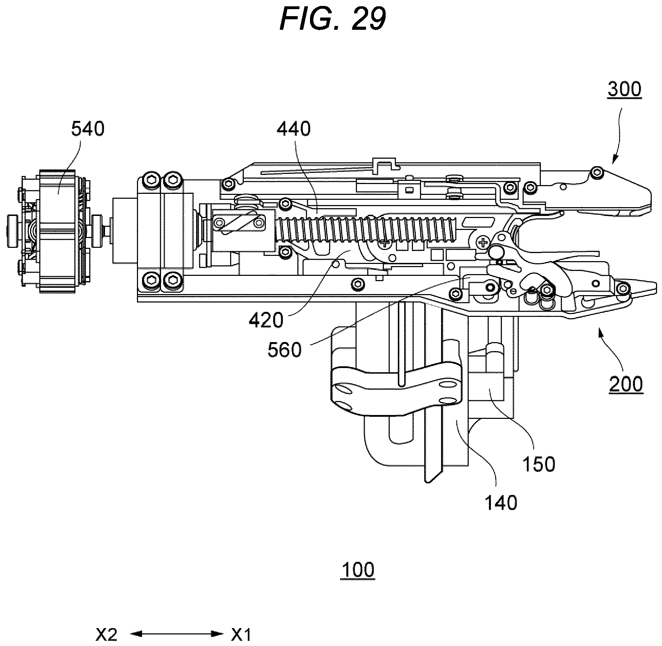

The shape of the staple is not limited to the staple S0, and each of the first leg portion S10, the second leg portion S20, and the main body portion S30 may include one or more side portions and one or more curved portions. In addition, the staple S0 may be formed in any shape having an opening, such as a U shape, a lateral U shape, or a V shape. The staple S0 binds the first object G and the second object P by being bent in the same manner as the staple S. Specifically, the tip end portion S 10A of the first leg portion S 10 of the staple S0 is bent by a first displacement portion 200 (FIG. 29) of the binding machine 100 to be engaged with the first object G sandwiched by the first leg portion S 10. The second leg portion S20 of the staple S0 is bent by a second displacement portion 300 of the binding machine 100 to close the opening of the staple S0 while surrounding the second object P. At the same time, the tip end portion S20A of the second leg portion S20 is bent in the outward direction by the second displacement portion 300 of the binding machine 100 so as to be engageable with the first object G. In this way, since both the tip end portion S10A and the tip end portion S20A of the staple S0 are engaged with the first object G while the second object P is surrounded by using the staple S0, it is possible to bind the first object G and the second object P.

The inventors of the present application focused on a point that when one of a plurality of staples, which are held by a magazine and connected to each other by an adhesive or the like, is separated from another staple, tip end portions and the like of the staple do not advance in parallel with a forward direction and are displaced in an inward direction or an outward direction. When the tip end portions and the like of the staple are displaced in the inward direction or the outward direction, the staple cannot be correctly fed in the forward direction as intended. In addition, there is also a case in which the tip end portions of the leg portions of the staple taper, and thus it is difficult to insert the object.

For example, in the first moving operation of the binding machine 10 according to the first embodiment, in a case in which the tip end portion S2A of the second leg portion S2 is displaced in the inward direction or the outward direction when the staple S positioned at the upper end is moved toward the forward direction X1 and is separated from the another staple S by using the driver 42 moving to the forward direction X1 to push the staple S positioned at the upper end toward the forward direction X1, a situation may occur that the staple S cannot be correctly fed in a state of sandwiching the tip end portion S2A of the second leg portion S2 in the gap between the parts of the binding machine 10, or that the tip end portion S 1A of the first leg portion S 1 cannot be disposed to face the wall surface of the support wall portion 68A (FIG. 20) of the tip end supporting portion 68.

Such a problem is more likely to occur in a staple having a non-symmetrical shape. Since the plurality of staples held by the magazine are connected and integrated by the adhesive or the like, in order to separate the staple positioned at the upper end from the another staple, it is necessary to apply a force to the staple positioned at the upper end. Here, when the staple has a non-symmetrical shape, the force required for the separation of the staple is also non-symmetrical. For example, the staple S includes the second leg portion S2 longer than the first leg portion S 1, and thus the first leg portion S 1 is relatively easy to be separated, and the second leg portion S2 is relatively difficult to be separated. As a result, the rotational moment may be generated in the staple S, and the tip end portions and the like may be displaced in the inward direction or the outward direction.

Similar to the staple S, the staple S0 also includes the second leg portion S20 longer than the first leg portion S10, and thus the same problem may occur. In addition, the main body portion S30 of the staple S0 includes the curved portions, and thus the staple S0 may rotate in a circumferential direction along the curved portion S30A at the time of separation.

Therefore, the binding machine 100 according to the present embodiment includes a driver 420 that can move in the forward direction X1 such that the staple S0 positioned at the upper end is separated from the another staple S0 and the opening of the staple S0 is at the front (such that the main body portion of the staple S0 is at the rear), and a guiding portion provided to guide an advancing direction of the staple S0 at a guide position inside the staple S0. The guiding portion may have a configuration for guiding a movement direction of the staple S0, and for example, is constituted by a wall portion. The guide position may be any position at which the movement direction of the staple S0 can be guided, for example, a position adjacent to and facing the staple S0 inside (in the inward direction of) the staple S0. The guiding portion retracts from the guide position of the staple S0 when the staple S0 moves by a predetermined distance.

The binding machine 100 according to the present embodiment includes, as the guiding portion, a movable wall 160A, a movable wall 160B, and a movable wall 160C (hereinafter, these three movable walls are collectively referred to as a movable wall 160), each of these movable walls is provided to face a surface facing the inside of (the inward direction of) the staple S0, and moves in the upward direction or the downward direction and retracts from the guide position when the movable wall is pushed toward the forward direction X1 by the staple S0 moving toward the forward direction X1 by the driver 420.

According to such a binding machine 100, the movable wall 160 provided to face the surface facing the inside of (the inward direction of) the staple S0 is provided, and thus when the staple S0 is separated from the another staple S0, it is possible to restrain one or both of the tip end portion S20A and the tip end portion S 10A of the staple S0 from being displaced in the inward direction or the outward direction. Further, the movable wall 160 can move in the upward direction Z1, the downward direction Z2, or the like when a force toward the forward direction X1 is applied. Therefore, when the staple S0 moving toward the forward direction X1 by the driver 420 comes into contact with the movable wall 160, the movable wall 160 moves in the upward direction Z1, the downward direction Z2, or the like. Therefore, since the movable wall 160 is provided, the staple S0 can move toward the forward direction X1. A movement amount (may be referred to as the "predetermined distance") of the staple S0 toward the forward direction X1 until the movable wall 160 moves and retracts from the guide position can be changed as appropriate. As will be described later, since the movable wall 160 according to the present embodiment is configured in a manner that the staple S0 itself comes into contact with the movable wall 160 and pushes up or down the movable wall 160, a distance between a position at the start of the movement of the staple S0 toward the forward direction X1 (a position of the staple S0 held by the magazine 140) and a position when the staple S0 moves toward the forward direction X1 and comes into contact with the movable wall 160, corresponds to the predetermined distance. As will be described later, since the predetermined distance can be changed by changing a position at which the movable wall 160 is provided in the forward direction X1 or the rearward direction X2, it is possible to change a timing at which the movable wall 160 retracts from the guide position.

Similar to the first embodiment, a direction from a region surrounded by the staple S0 (a region into which the second object P is inserted) toward an outer side of the staple S0 may be referred to as the outward direction, and a direction from the outer side of the staple S0 toward the region surrounded by the staple S0 may be referred to as the inward direction. In addition, the binding machine 100 according to the present embodiment includes three movable walls 160, but the present disclosure is not limited thereto. The binding machine according to the present disclosure may include one, two, or four or more movable walls.

### Configuration of Binding Machine 100

Hereinafter, the configuration of the binding machine 100 according to the present embodiment will be described focusing on a difference from the binding machine 10. The binding machine 100 according to the present embodiment is different from the binding machine 10 in that the binding machine 100 includes three movable walls 160, and thus this difference will be mainly described.

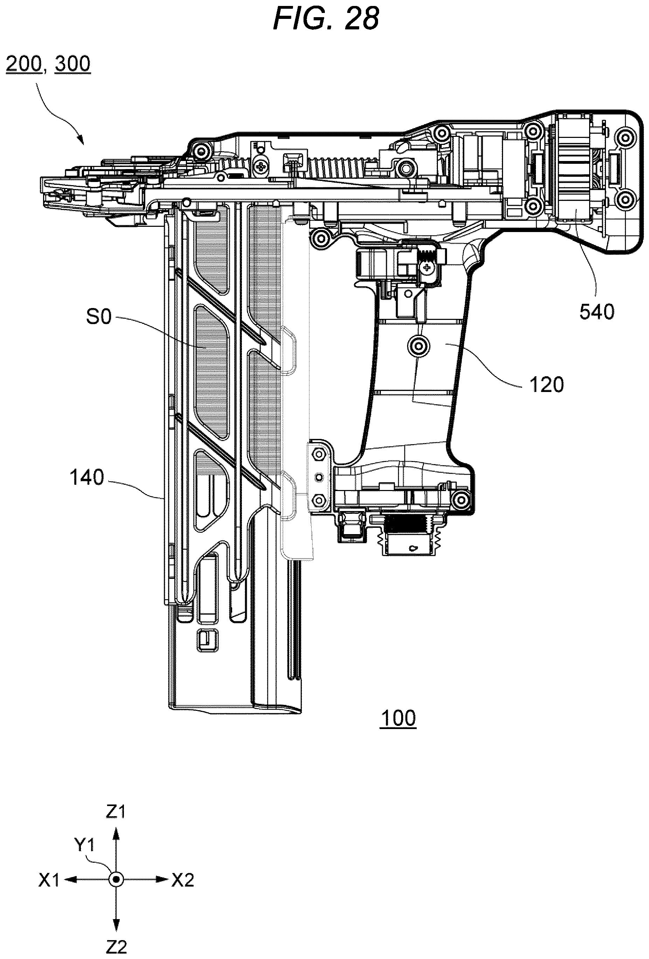

FIG. 28 is a cross-sectional view of the binding machine 100 in a right side view, and FIG. 29 is a perspective view of the binding machine 100 as viewed obliquely in an upward direction (however, in order to make the description easier to understand, configurations not described in the description (for example, a housing of the binding machine 100 in FIG. 29) may be omitted in the following drawings).

Similar to the binding machine 10, the binding machine 100 binds the first object G and the second object P by using the staple having the formed opening. Here, since the first object G and the second object P are the same as the first object G and the second object P described in the first embodiment, the description thereof is omitted. The first object G is, for example, a string that functions as a guide element, and the second object P is, for example, a plant. Similar to the binding machine 10, the binding machine 100 displaces the first leg portion S10 of the staple S0 so as to engage with the first object G, and displaces the second leg portion S20 so as to engage with the first object G while surrounding the second object P. As a result, since the movement of the second object P with respect to the first object G is restricted, it is possible to bind the first object G and the second object P.

The binding machine 100 includes the first displacement portion 200 (FIG. 29) that displaces the first leg portion S10 of the staple S0 so as to be engageable with the first object G, and the second displacement portion 300 that displaces the second leg portion S20 of the staple S0 so as to be engageable with the first object G. The second displacement portion 300 displaces the second leg portion S20 to engage the tip end portion S20A of the second leg portion S20 with the first object G in a state in which the second object P is surrounded by the first leg portion S 10, the second leg portion S20, and the main body portion S30 of the staple S0.

More specifically, the binding machine 100 includes a grip 120 (FIG. 28), a magazine 140 that can accommodate a plurality of staples S0 stacked in the up-down direction, a pusher 150 (an example of an "upward-movement means" for moving the staple in the upward direction) for moving the staple S0 positioned at an upper end in the forward direction X1 by biasing the plurality of staples S0 accommodated in the magazine 140 toward the upward direction Z1, and then moving other staples S0 in the upward direction Z1, a driver 420 (FIG. 29) that pushes the staple S0 positioned at the upper end toward the forward direction X1 to separate the staple S0 positioned at the upper end from the another staple S0 and move the staple S0 in the forward direction X1, a motor 540 and a movement mechanism for moving the driver 420 and a slider 440, the first displacement portion 200 for displacing the first leg portion S10 of the staple S0 by rotating in contact with the advancing slider 440, the second displacement portion 300 for displacing the second leg portion S20 of the staple S0 by rotating in contact with the advancing slider 440, and a detachment portion 560 that provides a movement path for the staple S0 separated from the another staple S0 and moving in the forward direction X1.

Here, it will be understood by a person skilled in the art that the respective configurations of the grip 120, the pusher 150, the driver 420, the slider 440, the motor 540 and the movement mechanism for moving the driver 420 and the slider 44, the first displacement portion 200, the second displacement portion 300, and the detachment portion 560, which are provided in the binding machine 100, are the same as or similar to the corresponding configurations of the grip 12, the pusher 16, the driver 42, the slider 44, the motor 54 and the movement mechanism for moving the driver 42 and the slider 44, the first displacement portion 20, the second displacement portion 30, and the detachment portion 56, which are described in the first embodiment and are provided in the binding machine 10, and thus the respective configurations can be implemented, and the detailed description thereof is omitted.

### Configuration of Movable Wall 160

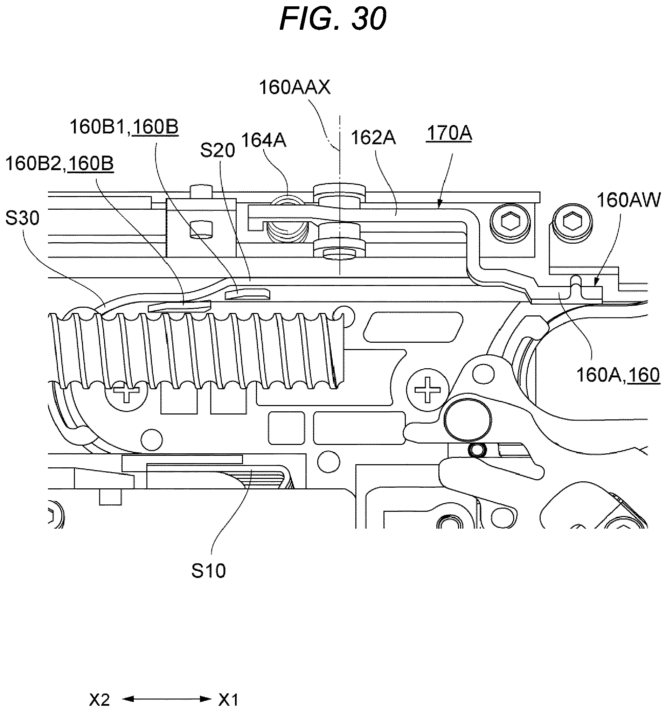

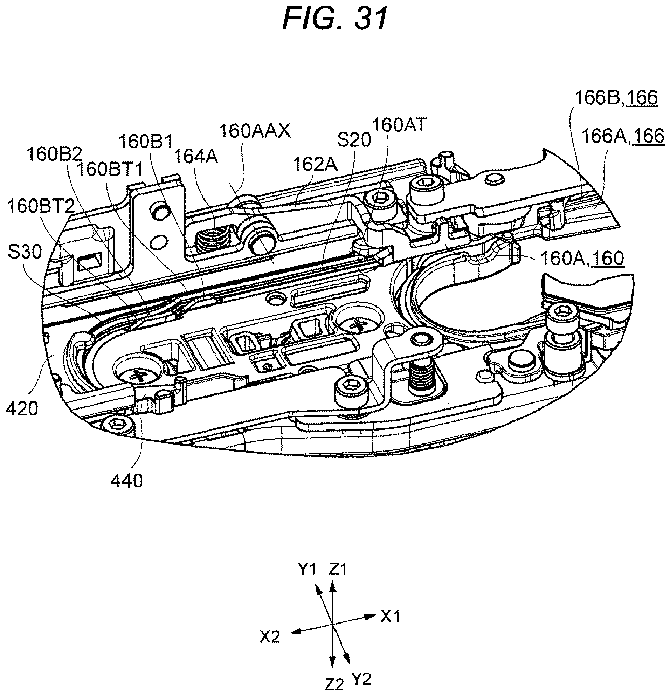

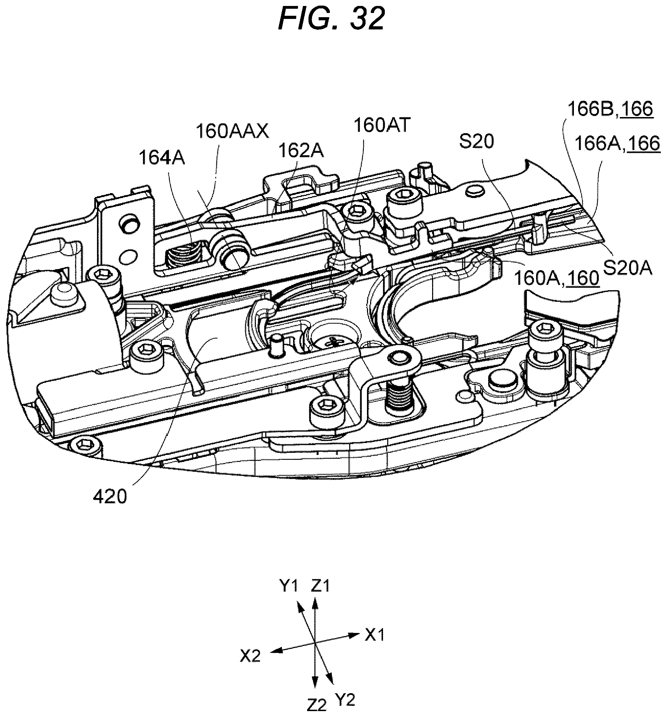

Hereinafter, the detailed configuration of the movable wall 160 included in the binding machine 100 according to the present embodiment will be described. FIGS. 30 and 31 are partially enlarged perspective views of the binding machine 100 that illustrate a region including the plurality of staples S0 stacked in the up-down direction and held by the magazine 140. FIG. 32 is a perspective view illustrating a state in which the staple S0 separated from the another staple S0 and moving in the forward direction X1 by the driver 420 moving in the forward direction X1 is in contact with the movable wall 160A.

### Configuration of Movable Wall 160A

As illustrated in FIGS. 30 to 32 and the like, the binding machine 100 includes a movable wall unit 170A for restraining the tip end portion S20A of the second leg portion S20 of the staple S0 from being displaced in the inward direction. The movable wall unit 170A includes the movable wall 160A on which a wall surface 160AW facing a surface facing the inward direction of the second leg portion S20 is formed, a support arm 162A that movably supports the movable wall 160A in the upward direction Z1, and an elastic body 164A that biases the movable wall 160A in the downward direction Z2.

The movable wall 160A is provided inside the second leg portion S20. By providing the movable wall 160A inside the second leg portion S20, the second leg portion S20 can be inhibited from being displaced in the inward direction, and the second leg portion S20 can be moved toward the forward direction X1. More specifically, the movable wall 160A includes a wall surface adjacent to and facing the second leg portion S20. The second leg portion S20 displaced in the inward direction comes into contact with this wall surface and is guided toward the forward direction X1.

Here, the wall surface of the movable wall 160A includes a surface that faces the surface facing the inside (the inward direction) of the second leg portion S20 and extends parallel to the forward direction X1. Therefore, the movable wall 160A can restrain the displacement of the second leg portion S2 toward the inward direction over a wide range.

Further, the movable wall 160A is provided to face the tip end portion S20A of the second leg portion S20 of the staple S0. Therefore, it is possible to suitably restrain the displacement of the tip end portion S20A, which is easily displaced when the staple S0 is separated from the another staple S0, toward the inward direction. When the tip end portion S20A of the second leg portion S20 is displaced in the inward direction, the tip end portion S10A of the first leg portion S10 connected to the second leg portion S20 via the main body portion S30 is displaced in the outward direction, and thus it can be said that the movable wall 160A restrains the displacement of the first leg portion S10 toward the outward direction.

In addition, on a surface of the movable wall 160A facing the rearward direction X2, an inclined surface (an inclined surface or a tapered surface inclined in the downward direction toward the rearward direction, and in contact with the staple S0) 160AT (FIG. 31) inclined toward the downward direction Z2 (moving toward the downward direction Z2 as advancing in the forward direction X1) is formed. Since the inclined surface 160AT is inclined toward the downward direction Z2, when the force toward the forward direction X1 is applied, it is possible to apply a force toward the upward direction Z1 to the movable wall 160A. Therefore, the movable wall 160A can move toward the upward direction Z1 and move on the main body portion S30 of the staple S0 by being in contact with the staple S0.

The support arm 162A is formed integrally with the movable wall 160A, and includes a portion connected to the movable wall 160A and extending in the outward direction (the rightward direction Y1) and a portion connected to this portion and extending in the rearward direction X2. Further, the support arm 162A is rotatable (pivotable) about a rotation shaft 160AAX provided at a position in the rearward direction X2 with respect to the movable wall 160A. The rotation shaft 160AAX is parallel to the left-right direction (the rightward direction Y1 or the leftward direction Y2). Therefore, when the support arm 162A rotates, the movable wall 160A formed integrally with the support arm 162A and positioned in the forward direction X1 with respect to the rotation shaft 160AAX is movable in the upward direction Z1.

The elastic body 164A can be constituted by, for example, a compression spring, and the elastic body 164A biases the support arm 162A toward the upward direction Z 1 in the rearward direction X2 with respect to the rotation shaft 160AAX. Therefore, the elastic body 164A biases the support arm 162A and the movable wall 160A positioned in the forward direction X1 toward the downward direction Z2 via the rotation shaft 160AAX. According to such a configuration, when the staple S0 passes through the movable wall 160A that has once moved toward the upward direction Z1, the movable wall 160A rotates in the opposite direction by the elastic body 164A, and thus the movable wall 160A can move toward the downward direction Z2 and returns to an original position thereof.

As illustrated in FIG. 31, a fixed wall 166 for guiding the advancing of the second leg portion S20 toward the forward direction X1 is provided in the forward direction X1 with respect to the second leg portion S20 (the forward direction with respect to the movable wall 160A). The fixed wall 166 includes a bottom surface 166A that supports the second leg portion S20 from the downward direction Z2, and a wall surface 166B that faces a surface facing the outside (the outward direction, and the rightward direction Y1 in the present embodiment) of the second leg portion S20. The fixed wall 166 is fixed to a main body of the binding machine 100. Even when the second leg portion S20 of the staple S0 advancing in the forward direction X1 is displaced in the outward direction, the wall surface 166B prohibits the displacement of the second leg portion S20 toward the outward direction, and guides the second leg portion S20 toward the forward direction X1. Each of the wall surface 166B and the bottom surface 166A of the fixed wall 166 is provided with a gradient surface for guiding an advancing direction of the tip end portion S20A of the second leg portion S20.

On the other hand, a second arm 320 includes a protrusion for bending back (an example of an "engagement portion for bending back the first leg portion") that has the same configuration as the protrusion 32C2 for bending back of the second arm 32, and that is provided to protrude toward the downward direction Z2.

The tip end portion S20A of the second leg portion S20 advances to pass through a gap between the protrusion for bending back of the second arm 320 and the wall surface 166B of the fixed wall 166. When the tip end portion S20A of the second leg portion S20 passes through the outside of the protrusion for bending back of the second arm 320, the second arm 320 is rotated in the second rotation direction R2, and at this time, the protrusion for bending back of the second arm 320 can come into contact with the second leg portion S20 and displace the second leg portion S20 in the second rotation direction R2.

FIG. 32 is a perspective view illustrating a state in which the staple S0 advancing in the forward direction X1 is in contact with the movable wall 160A. As described above, the staple S0 includes the first leg portion S10 and the second leg portion S20, which are two leg portions, and the main body portion S30 connecting the two leg portions, and advances such that the leg portions are positioned in the forward direction X1 with respect to the main body portion S30. On the other hand, the movable wall 160 is disposed inside the first leg portion S10 or the second leg portion S20, that is, disposed between the first leg portion S10 and the second leg portion S20. Therefore, when the staple S0 moves in the forward direction X1, the staple S0 inevitably comes into contact with the movable wall 160. For example, since the movable wall 160A is provided inside the second leg portion S20, when the staple S0 moves in the forward direction X1, the movable wall 160A inevitably comes into contact with the main body portion S30 (the curved portion S30B). Here, since the movable wall 160A includes the inclined surface 160AT inclined toward the rearward direction X2 and the downward direction Z2, when the force toward the forward direction X1 is applied to the inclined surface 160AT from the staple S0, the movable wall 160A moves in the upward direction Z1 against an elastic force provided by the elastic body 164A and moves on the main body portion S30. Therefore, the staple S0 can move in the forward direction X1.

A timing at which the movable wall 160A moves in the upward direction can be adjusted by adjusting the position of the movable wall 160A in the front-rear direction. When the movable wall 160A is relatively positioned in the forward direction X1, a timing at which the staple S0 comes into contact with the movable wall 160A is delayed, and when the movable wall 160A is relatively positioned in the rearward direction X2, the timing at which the staple S0 comes into contact with the movable wall 160A is advanced. In the present embodiment, the movable wall 160A is movable in the upward direction Z1 after the tip end portion S20A of the second leg portion S20 of the staple S0 moving toward the forward direction X1 by the driver 420 passes through the gap between the wall surface 166B of the fixed wall 166 and the protrusion for bending back provided on the second arm 320 to protrude toward the downward direction Z2. That is, the movable wall 160A is provided to retract from the guide position after the staple S0 moves toward the forward direction X1 by a distance (an example of the "predetermined distance") by which the tip end of at least one leg portion of the staple (the tip end portion S20A of the second leg portion S20 in the present embodiment) passes through the engagement portion for bending back this leg portion (the protrusion for bending back of the second arm 320 in the present embodiment).

According to such a configuration, a period during which the displacement of the staple S0 is restrained by the movable wall 160A and a period during which the displacement of the staple S0 is restrained by the fixed wall 166 partially overlap with each other, and thus the displacement of the staple S0 can be restrained without interruption. Further, the movable wall 160A is provided to retract from the guide position after the tip end portion S20A of the staple S0 passes through the engagement portion for bending back the staple S0 (the protrusion for bending back of the second arm 320 in the present embodiment), and thus it is possible to restrain a situation in which the staple S0 cannot be bent back as a result of the staple S0 advancing inside the engagement portion.

### Configuration of Movable Wall 160B

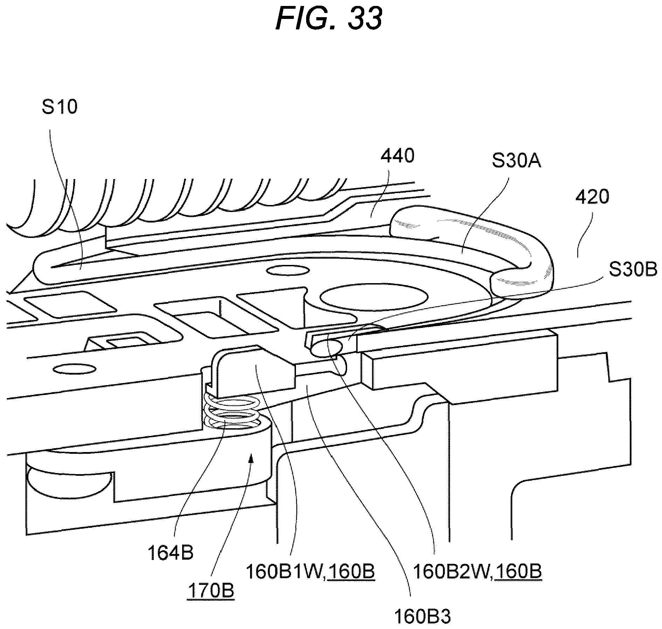

The binding machine 100 according to the present embodiment further includes a movable wall unit 170B (FIG. 33) including the movable wall 160B. The movable wall unit 170B includes the movable wall 160B on which a wall surface facing the surface facing the inward direction of the second leg portion S20 is formed, and an elastic body 164B that supports the movable wall 160B in the downward direction Z2 and biases the movable wall 160B in the upward direction Z1.

The movable wall 160B is different from the movable wall 160A in that the movable wall 160B is provided to movable not in the upward direction Z1 but in the downward direction Z2 when the force toward the forward direction X1 is applied. As illustrated in FIG. 30, the movable wall 160B includes a first wall portion 160B 1 having a wall surface provided to face a surface facing the inward direction with respect to a portion of the curved portion S30B connected to the second leg portion S20, and a second wall portion 160B2 provided in the rearward direction X2 with respect to the first wall portion 160B 1 and having a wall surface provided to face a surface facing the inward direction of a portion of the second leg portion S20 connected to the curved portion S30B. The movable wall 160B further includes, in the downward direction Z2 with respect to the detachment portion 560, a connection portion 160B3 (FIG. 33) connecting the first wall portion 160B1 and the second wall portion 160B2. As illustrated in FIG. 30, the first wall portion 160B 1 and the second wall portion 160B2 are provided to extend in the forward direction X1, and each of the first wall portion 160B1 and the second wall portion 160B2 has a wall surface parallel to the forward direction X1 and facing a surface facing the inside of the staple S0. In addition, the first wall portion 160B 1 and the second wall portion 160B2 have an inclined surface (an inclined surface or a tapered surface inclined in the upward direction toward the rearward direction and in contact with the staple S0) 160BT1 and an inclined surface (a tapered surface) 160BT2, respectively, and the inclined surfaces 160BT1 and 160BT2 are inclined toward the rearward direction X2 and the upward direction Z1 (move toward the upward direction Z1 as advancing in the forward direction X1). Therefore, when the staple S0 moving toward the forward direction X1 comes into contact with at least one of the inclined surface 160BT1 and the inclined surface 160BT2, a force toward the downward direction Z2 is applied to the movable wall 160B.

FIG. 33 is a perspective cross-sectional view obtained by cutting the binding machine 100 along a cross section parallel to the front-rear direction and passing through a connection portion between the curved portion S30B and the second leg portion S20 (however, the staples S0 other than the staple S0 positioned at the upper end are omitted). As illustrated in FIG. 33, the movable wall unit 170B includes the elastic body 164B that is provided in the downward direction Z2 with respect to the movable wall 160B and biases the movable wall 160B in the upward direction Z1 while supporting the movable wall 160B from the downward direction Z2.

The movable wall 160B having the above configuration is provided inside the plurality of staples S0 held by the magazine 140 (FIGS. 30 and 31). Therefore, the movable wall 160B is provided in the upward direction Z1 with respect to the magazine 140. That is, in a side view in the standby state, at least an upper end (an end portion in the upward direction Z1) of the movable wall 160B is positioned in the upward direction Z1 with respect to an upper end (an end portion in the upward direction Z 1) of the magazine 140, and similarly, in a plan view in the standby state, at least a part of or the entire movable wall 160B is provided in a region surrounded by the magazine 140.

According to the above configuration, by the first wall portion 160B 1 and the second wall portion 160B2 respectively provided inside the second leg portion S20 and the curved portion S30B, it is possible to restrain the displacement of the second leg portion S20 and the curved portion S30B in the inward direction and to guide the movement thereof toward the forward direction X1. Further, since the movable wall 160B is provided inside the second leg portion S20 and the curved portion S30B, when the staple S0 moves toward the forward direction X1, the movable wall 160B inevitably comes into contact with the main body portion S30. Here, since the inclined surface 160BT1 and the inclined surface 160BT2, which are inclined toward the rearward direction X2 and the upward direction Z1, are formed on the movable wall 160B, when the force toward the forward direction X1 is applied to at least one of the inclined surface 160BT1 and the inclined surface 160BT2 from the staple S0, the movable wall 160B moves toward the downward direction Z2 against an elastic force provided by the elastic body 164B. Therefore, the staple S0 can move in the forward direction X1.

The movable wall 160B is provided to face the connection portion between the second leg portion S20 and the curved portion S30B as a portion at which the staple S0 is bent. Therefore, it is possible to suitably restrain the displacement of the portion, which is easily displaced when the staple S0 is separated from the another staple S0, toward the inward direction.

Further, the movable wall 160B (an example of a "first movable wall") is provided in the upward direction Z1 with respect to the magazine 140, and is movable in the downward direction Z2 in which the magazine 140 is provided. Therefore, it is possible to restrain an increase in the height of the binding machine 100. On the other hand, the movable wall 160A (an example of a "second movable wall") provided in the forward direction with respect to the movable wall 160B moves in the upward direction Z 1 and moves on the main body portion S30 of the staple S0 so as to cause the staple S0 to advance.

### Configuration of Movable Wall 160C

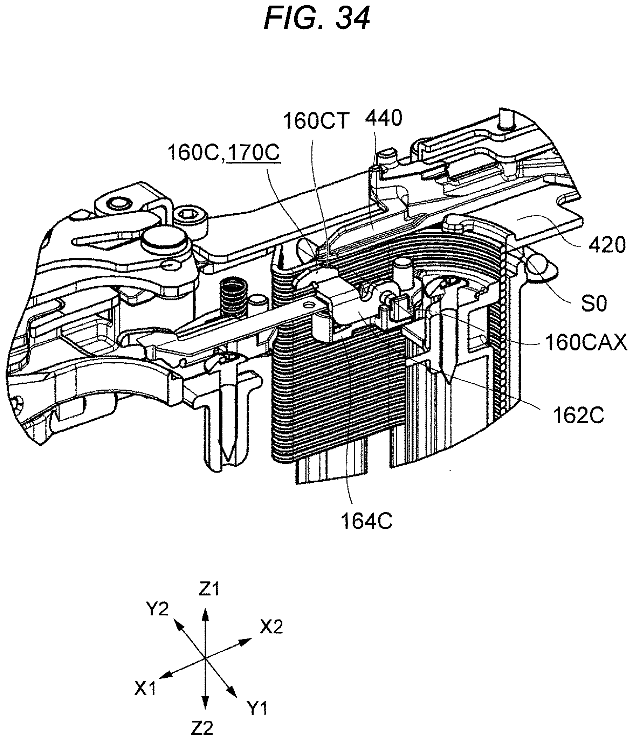

The binding machine 100 according to the present embodiment further includes a movable wall unit 170C including the movable wall 160C. FIG. 34 is a perspective cross-sectional view obtained by cutting the binding machine 100 according to the present embodiment along a cross section parallel to the front-rear direction and passing through the main body portion S30. The movable wall unit 170C includes the movable wall 160C on which a wall surface facing a surface facing the inward direction of the first leg portion S 10 is formed, a support arm 162C that movably supports the movable wall 160C in the downward direction Z2, and an elastic body 164C that biases the movable wall 160C in the upward direction Z1.

The movable wall 160C is provided inside the first leg portion S10. By providing the movable wall 160C inside the first leg portion S10, the first leg portion S10 can be inhibited from being displaced in the inward direction, and the first leg portion S10 can be moved toward the forward direction X1. More specifically, the movable wall 160C includes a wall surface adjacent to and facing the first leg portion S10. The first leg portion S10 displaced in the inward direction comes into contact with this wall surface and is guided toward the forward direction X1. Here, the wall surface of the movable wall 160C faces a surface facing the inside (the inward direction) of the first leg portion S10 and extends parallel to the forward direction X1. Further, the movable wall 160C is provided to face the bent portion of the first leg portion S10 of the staple S0. Therefore, it is possible to suitably restrain the displacement of the portion, which is easily displaced when the staple S0 is separated from the another staple S0, toward the inward direction.

On a surface of the movable wall 160C facing the rearward direction X2, an inclined surface (a tapered surface) 160CT, which is inclined toward the upward direction Z1 (moves toward the upward direction Z1 as advancing in the forward direction X1), is formed. Since the inclined surface 160CT is inclined toward the upward direction Z1, when the force toward the forward direction X1 is applied, it is possible to apply the force toward the downward direction Z2 to the movable wall 160C. Therefore, the movable wall 160C can move toward the downward direction Z2 and advance the staple S0 toward the forward direction X1 by being in contact with the staple S0.

The support arm 162C is formed integrally with the movable wall 160C, and includes a portion connected to the movable wall 160C and extending in the outward direction (the rightward direction Y1) and a portion connected to this portion and extending in the rearward direction X2. Further, the support arm 162C is rotatable (pivotable) about a rotation shaft 160CAX provided at a position in the rearward direction X2 with respect to the movable wall 160C. The rotation shaft 160CAX is parallel to the left-right direction (the rightward direction Y1 or the leftward direction Y2). Therefore, when the support arm 162C rotates, the movable wall 160C formed integrally with the support arm 162C and positioned in the forward direction X1 with respect to the rotation shaft 160CAX is movable in the downward direction Z2. The elastic body 164C biases the support arm 162C toward the upward direction Z1 in the forward direction X1 with respect to the rotation shaft 160CAX. Therefore, the elastic body 164C biases the support arm 162C and the movable wall 160C toward the upward direction Z1. According to such a configuration, when the staple S0 passes through the movable wall 160C that has once moved toward the downward direction Z2, the movable wall 160C can move toward the upward direction Z1 and returns to an original position thereof by the elastic body 164C.

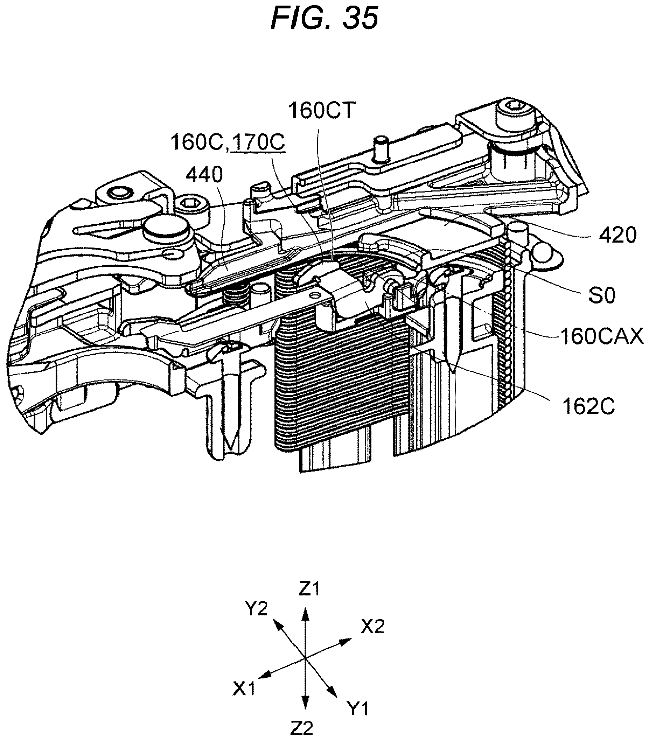

FIG. 35 is a perspective view illustrating a state in which the staple S0 separated from the another staple S0 and advancing in the forward direction X1 is in contact with the movable wall 160C. As described above, when the staple S0 moves toward the forward direction X1, the movable wall 160C provided between the first leg portion S10 and the second leg portion S20 of the staple S0 inevitably comes into contact with the main body portion S30 (the curved portion S30A). Here, since the movable wall 160C includes the inclined surface 160CT inclined toward the rearward direction X2 and the upward direction Z1, when the force toward the forward direction X1 is applied to the inclined surface 160CT from the staple S0, the movable wall 160C moves in the downward direction Z2 against an elastic force provided by the elastic body 164C and moves in the downward direction with respect to the main body portion S30. Therefore, the staple S0 can move in the forward direction X1.

As described above, according to the binding machine 100 of the present embodiment, it is possible to restrain the staple S0 from being displaced from the forward direction X1, and to move the staple S0 as intended.

Further, as described above, the binding machine 100 may include any one of the movable walls 160. However, by providing at least one movable wall 160 with respect to the first leg portion S10 as one leg portion of the staple S0 and providing at least one movable wall 160 with respect to the second leg portion S20 as the other leg portion, it is possible to restrain the displacement of the first leg portion S10 and the second leg portion S20 in the outward direction and the displacement thereof in the inward direction. That is, when the first leg portion S 10 is going to be displaced in the inward direction, the movable wall 160A or the movable wall 160B restrains the displacement in the inward direction, and when the first leg portion S 10 is going to be displaced in the outward direction, the movable wall 160C provided inside the second leg portion S20 restrains the displacement of the second leg portion S20 in the inward direction, and thus it is possible to further restrain the displacement of the first leg portion S10 in the outward direction.

Since such a movable wall 160 is provided above a region through which the staple S0 moving in the forward direction X1 passes, the movable wall 160 can reliably come into contact with the staple S0 advancing in the forward direction X1. In particular, when the movable wall 160 is provided above the magazine 140 and is movable in the downward direction Z2 when the force toward the forward direction X1 is applied, it is possible to restrain an increase in the size of the binding machine 100 by providing the movable wall 160.

When a plurality of movable walls 160 are provided, each movable wall 160 may be provided such that a timing at which the staple S0 collides with the movable wall 160 is different. According to such a configuration, it is possible to reduce a variation in a load change of the motor 540.

As described above, according to the binding machine 100 of the present embodiment, an example of the object of the present disclosure is to provide a binding machine and a binding method that can move one of staples held by a magazine as intended when separating the staple from other staples and moving the staple.

### Binding Method

Hereinafter, a binding method using the binding machine 100 according to the present embodiment will be described. However, it will be understood by a person skilled in the art that the binding machine 10 and the binding machine 100 can be implemented by the same or similar configurations except that the movable wall 160 is provided as described above, and the detailed description thereof is omitted.

First, the plurality of staples S0 stacked in the up-down direction are held by the magazine 140 of the binding machine 100.

Next, the staple S0 positioned at the upper end is separated from the another staple S0 positioned in the downward direction and moves toward the forward direction X1. The separation and the movement of the staple S0 toward the forward direction X1 can be achieved, for example, by using the driver 420 moving toward the forward direction X1 by the movement mechanism, based on the configuration described in detail in the first embodiment.

Thereafter, the staple S0 is static at a predetermined position in the forward direction X1. Further, in a state in which the staple S0 is static, the user inserts the first object G (for example, a string functioning as the guide element) into the bent portion of the first leg portion S10, and inserts the second object P (for example, a plant) into a region in the opening of the staple S0.

Then, the binding machine 100 displaces the first leg portion S10 and the second leg portion S20 of the staple S0. For example, the displacement of the staple S0 is schematically illustrated in FIG. 2, and can be achieved by using the slider 440 that moves toward the forward direction X1 by the movement mechanism, the first displacement portion 200 for displacing the first leg portion S 10 of the staple S0, and the second displacement portion 300 for displacing the second leg portion S20 of the staple S0 by the slider 440, based on the configuration described in detail in the first embodiment. That is, a mechanism for converting the movement toward the forward direction into the rotational motion is known, and thus it is possible to press the first arm of the first displacement portion 200 by the slider 440 moving toward the forward direction X1 by the motor 540, and rotate the first arm. According to the same configuration as that described in the first embodiment, it is possible to move the slider, bend and displace the first leg portion S10, and engage the first leg portion S10 with the first object G as the first arm rotates.

Similarly, it is possible to press the second arm 320 (an example of a "bending portion") of the second displacement portion 300 by the slider 440 moving toward the forward direction X1, and rotate the second arm 320. According to the same configuration as that described in the first embodiment, as the second arm 320 rotates, it is possible to bend and displace the second leg portion S20 with the fulcrum portion (the front end of the second inner wall portion 66 in the first embodiment) as a fulcrum, bend the tip end portion S20A of the second leg portion S20 in the opposite direction, and engage the tip end portion S20A with the first object G while surrounding the second object P (see (A) to (E) of FIG. 2). As will be described with reference to FIG. 2, the second arm (an example of the "bending portion") of the second displacement portion 30 is rotated by the slider 44 moving toward the forward direction X1, and thus it is possible to bend and displace the second leg portion S2 with the fulcrum 66A (an example of the "fulcrum portion") as a fulcrum. Here, as illustrated in FIG. 2, the fulcrum 66A is positioned in the inward direction of the second leg portion S20, and the second arm is positioned in the outward direction of the second leg portion S20.

In such a configuration, it is preferable that at least one movable wall 160 is provided to retract from the guide position after the staple S0 moves toward the forward direction X1 by a distance (an example of the "predetermined distance") by which the tip end of at least one leg portion of the staple passes through the second inner wall portion 66 (the end portion of the second inner wall portion 66 in the forward direction corresponding to the second inner wall portion 66 in the present embodiment).

According to such a configuration, the movable wall 160 is provided to retract from the guide position after the tip end portion S20A of the staple S0 passes through the second inner wall portion for bending back the staple S0, and thus it is possible to restrain a situation in which the staple S0 collides with the second inner wall portion.

As described above, according to the present embodiment, an example of the object of the present disclosure is to provide a binding machine and a binding method that can move one of staples held by a magazine as intended when separating the staple from other staples and moving the staple.

In particular, when the staple has a non-symmetrical shape with the movement direction as an axis, it is possible to move the staple as intended. In the present embodiment, the direction in which the staple S0 is separated from the another staple S0 and moves is defined as the forward direction, but the present disclosure is not limited thereto. For example, the present disclosure can be applied to a binding machine having a form in which a staple moves in another direction. In this case, the forward direction may be set to a predetermined direction, and the up-down direction may be set to a direction intersecting the predetermined direction.

### Third Embodiment

Hereinafter, a configuration of a binding machine according to the present embodiment will be described. The description of the same or similar configurations and functions will be omitted or simplified by using the same or similar names or reference numerals, and different parts will be mainly described.

The binding machine according to the present embodiment includes a movable wall that moves in the forward direction together with the driver. Since the movable wall is movable (pivotable) in the forward direction, the movable wall may be referred to as a forward direction-movable wall (an example of a "second guiding portion"). The forward direction-movable wall is provided to face the surface facing the inward direction of the staple. Therefore, the forward direction-movable wall is movable in the forward direction together with the staple while maintaining a state in which the forward direction-movable wall faces the surface facing the inward direction of the staple moving in the forward direction by the driver. Therefore, by using the forward direction-movable wall, it is also possible to restrain the displacement of the first leg portion or the second leg portion of the staple and to guide the movement thereof toward the forward direction. Such a forward direction-movable wall may be provided in the driver, or may be provided in the slider.

In the present embodiment, a binding machine in which a slider includes a forward direction-movable wall will be described. Hereinafter, a binding machine 101 according to the present embodiment will be described. The binding machine 101 includes a slider 441 provided with a forward direction-movable wall 441W, and a first inner wall portion 641 into which a front end portion of the slider 441 including the forward direction-movable wall 441W enters.

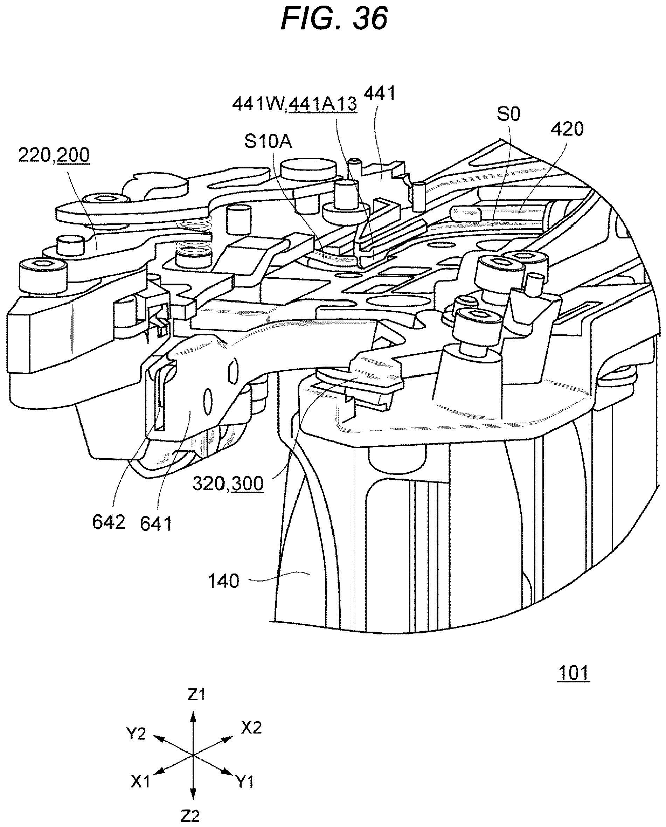

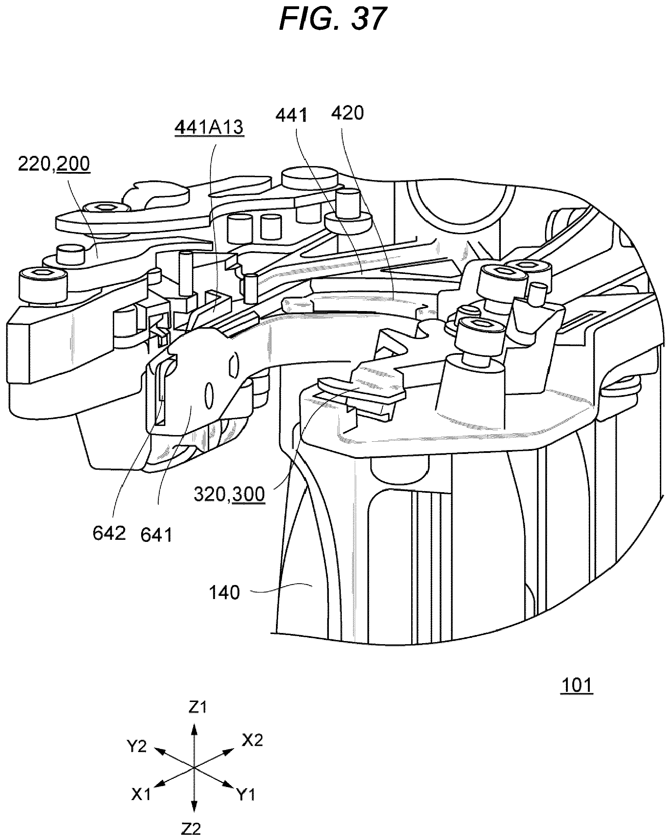

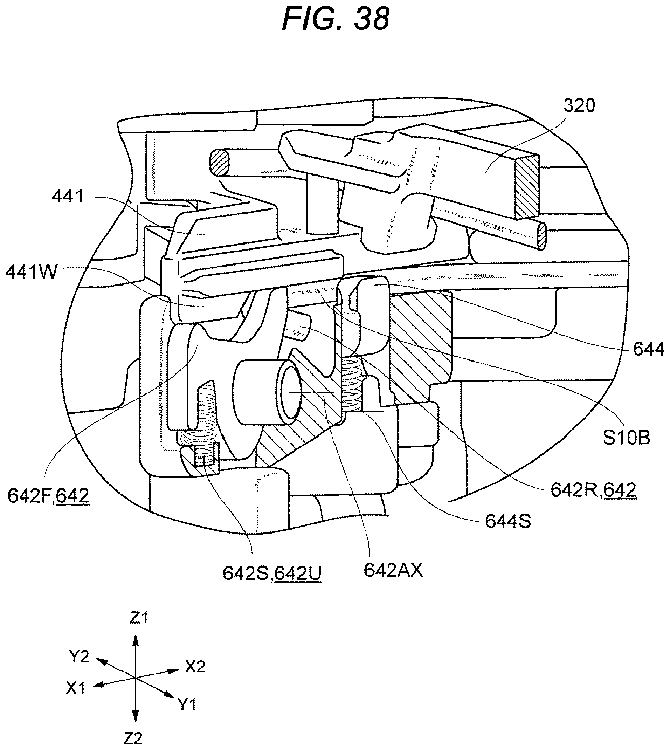

FIG. 36 is a perspective view of the front end portion of the binding machine 101 in an initial state (a standby state) as viewed from the forward direction X1, and FIG. 37 is a perspective view of the front end portion of the binding machine 101 as viewed from the forward direction X1 when the first moving operation ends. Further, FIG. 38 is a perspective view illustrating an internal configuration of the first inner wall portion 641 during the binding operation in the second moving operation. For convenience of description, a part of the first inner wall portion 641 is omitted in FIG. 38.

A configuration of the slider 441 will be described. The slider 441 has the same configuration as that of the slider 44 (FIG. 7A) except that the slider 441 includes the forward direction-movable wall 441W provided at a protruding end portion 441A13 of a first front end portion, and specifically, the slider 441 includes the first front end portion having a configuration corresponding to the first protruded portion 44A11 and the second protruded portion 44A12 of the slider 44, and a second front end portion having a configuration corresponding to the first surface 44A21, the second surface 44A22, and the third surface 44A23 of the slider 44. The protruding end portion 441A13 of the first front end portion of the slider 441 includes a ceiling wall extending in the forward direction X1 and positioned in the upward direction Z1 with respect to the staple S0, and the forward direction-movable wall 441W positioned in the inward direction (Y1) of the first leg portion S10 of the staple S0 (FIG. 38).

Since the ceiling wall is positioned in the upward direction Z1 with respect to the first leg portion S10 of the staple S0, the ceiling wall has a wall surface facing a surface of the first leg portion S10 facing the upward direction Z1, in a manner of being adjacent to or in contact with the surface. Therefore, the ceiling wall restrains the displacement of the first leg portion S10 of the staple S0 toward the upward direction Z1.

Since the forward direction-movable wall 441W is positioned in the inward direction (Y1) of the first leg portion S10 of the staple S0, the forward direction-movable wall 441W has a wall surface facing the surface facing the inward direction (Y1) of the first leg portion S10, in a manner of being adjacent to or in contact with the surface. Therefore, the forward direction-movable wall 441W restrains the displacement of the first leg portion S10 of the staple S0 toward the inward direction (Y1).

As illustrated in FIG. 36, the binding machine 101 includes the magazine 140 that can accommodate (hold) the plurality of staples S0 stacked in the up-down direction. In the initial state (the standby state), the forward direction-movable wall 441W of the slider 441 may be disposed in the inward direction (Y1) of the first leg portion S10 of the staple S0 positioned at the upper end. That is, the forward direction-movable wall 441W is disposed adjacent to the first leg portion S10 in a region between the first leg portion S10 and the second leg portion S20.

Thereafter, the first moving operation is started, and both the driver 420 and the slider 441 start moving toward the forward direction X1 by the same configuration as the configuration described in other embodiments. By pressing the staple S0 positioned at the upper end toward the forward direction X1, the driver 420 moving toward the forward direction X1 separates the staple S0 positioned at the upper end from the another staple S0 and causes the staple S0 positioned at the upper end to move toward the forward direction X1. At this time, since the slider 441 moves toward the forward direction X1 together with the driver 420, the forward direction-movable wall 441W also moves toward the forward direction X 1. Therefore, the forward direction-movable wall 441W moves toward the forward direction X1 together with the staple S0 while maintaining a state in which the forward direction-movable wall 441W faces the surface facing the inward direction of the first leg portion S10 of the staple S0 moving toward the forward direction X 1. Therefore, as illustrated in FIG. 37, when the first moving operation ends, the forward direction-movable wall 441W of the slider 441 is still disposed in the inward direction (Y1) of the first leg portion S10 of the staple S0.

According to the above configuration, when the staple S0 held by the magazine 140 is separated from the another staple S0 and is moved, it is possible to restrain the staple S0 from being displaced in an unintended direction. Further, since the forward direction-movable wall 441W advances together with the staple S0, it is possible to restrain the movement of the staple S0 toward the forward direction X1 from being hindered.

Thereafter, for example, a string as the first object G is inserted into the bent portion of the first leg portion S10, and for example, a stem as the second object P is inserted into the region surrounded by the staple S0, and then the second moving operation is started. In the second moving operation, only the slider 441 of the driver 420 and the slider 441 moves in the forward direction X1, and the staple S0 stops. In a state in which the staple S0 is stopped, by rotating a first arm 220 of the first displacement portion 200 by the first front end portion of the advancing slider 441, it is possible to displace the first leg portion S10 of the staple S0 so as to be engaged with the first object G. On the other hand, by rotating the second arm 320 of the second displacement portion 300 by the second front end portion of the advancing slider 441, it is possible to displace the second leg portion S20 of the staple S0 so as to surround the second object P by using the first leg portion S10, the second leg portion S20, and the main body portion S30 and engage with the first object G.

### Configuration of Movable Support Wall 642W

As described above, the tip end portion S10A of the first leg portion S10 of the staple S0 is bent by the first displacement portion 200 of the binding machine 101 to be engaged with the first object G sandwiched by the first leg portion S10. Here, the first portion S10B of the first leg portion S10 may be displaced by an internal stress generated when the tip end portion S10A is bent by the first displacement portion 200 of the binding machine 101. Therefore, the binding machine 101 preferably has a configuration in which the internal stress is applied when the tip end portion S10A is bent, and the first portion S10B of the first leg portion S10, which may be displaced as a result of the internal stress, is supported from the inward direction.

On the other hand, the binding machine 101 according to the present embodiment includes the movable wall 441W that moves toward the forward direction X1 in the first moving operation and the second moving operation, and thus it is not easy to achieve the configuration in which the first portion S10B is supported from the inward direction by providing a wall portion fixed in a region through which the movable wall 441W passes (that is, a region in the inward direction of the first portion S10B).

Therefore, the first inner wall portion 641 of the binding machine 101 includes a movable support wall unit 642U that includes a movable wall 642W, and by being pressed by the protruding end portion 441A13 provided at the front end of the slider 441 moving toward the forward direction X1 in the second moving operation, the movable wall 642W is movable to a position facing the surface facing the inward direction of the first portion S10B of the staple S0 which has moved toward the forward direction X1 in the first moving operation. Here, since the movable wall 642W supports the staple S0 at the time of binding, the movable wall 642W may be referred to as the movable support wall 642W.

As illustrated in FIG. 38, the first inner wall portion 641 of the binding machine 101 includes the movable support wall unit 642U including the movable support wall 642W. The movable support wall unit 642U includes the movable support wall 642W that is rotatable about a rotation shaft 642AX parallel to the left-right direction (the rightward direction Y1 or the leftward direction Y2), and an elastic body 642S that biases a front end portion 642F of the movable support wall 642W toward the upward direction Z1 in the forward direction X1 with respect to the rotation shaft 642AX.

The movable support wall 642W includes the front end portion 642F corresponding to a portion in the forward direction X1 with respect to the rotation shaft 642AX, and a rear end portion 642R formed integrally with the front end portion 642F and corresponding to a portion in the rearward direction X2 with respect to the rotation shaft 642AX.

The front end portion 642F is biased by the elastic body 642S constituted by, for example, a compression spring so as to be disposed at a position separated in the forward direction X1 with respect to the protruding end portion 441A13 of the slider 441 in a state before the start of the second moving operation (a state before the slider 441 moves toward the forward direction X1), and is movable toward the downward direction Z2 when the protruding end portion 441A13 of the slider 441 moving toward the forward direction X1 comes into contact with the front end portion 642F and rotates about the rotation shaft 642AX in the second moving operation.

The rear end portion 642R is disposed in the downward direction Z2 with respect to the protruding end portion 441A13 of the slider 441 in the state before the start of the second moving operation (the state before the slider 441 moves toward the forward direction X1), and is movable toward the upward direction Z1 to the same height as the forward direction-movable wall 441W when the protruding end portion 441A13 of the slider 441 moving toward the forward direction X1 comes into contact with the front end portion 642F and rotates about the rotation shaft 642AX in the second moving operation. At this time, the rear end portion 642R moves toward the upward direction Z1 so as to enter the region through which the forward direction-movable wall 441W has passed, and faces the surface facing the inward direction of the first portion S10B (the surface facing the second leg portion S20) at a position corresponding to the rearward direction X2 with respect to the protruding end portion 441A13 and the inward direction of the first portion S 10B of the staple S0 which has moved toward the forward direction X1.

In this state, the tip end portion S10A of the first leg portion S10 of the staple S0 is bent by the first displacement portion 200 of the binding machine 101 to be engaged with the first object G sandwiched by the first leg portion S10. At this time, the first portion S10B is supported by the rear end portion 642R from the inward direction, and thus it is possible to restrain a situation in which the first portion S10B is displaced and cannot be properly engaged with the first object G.

After the binding, the slider 441 starts moving toward the rearward direction X2. Here, a tapered surface inclined to advance toward the upward direction Z1 as advancing in the rearward direction X2 is formed at a rear end of the forward direction-movable wall 441W. The rear end portion 642R of the movable support wall unit 642U comes into contact with the tapered surface of the forward direction-movable wall 441W of the slider 441 moving toward the rearward direction X2, and is pushed down in the downward direction Z2. Accordingly, the rear end portion 642R rotates about the rotation shaft 642AX and moves in the upward direction Z1, and thus the movable support wall unit 642U returns to an original position thereof.

As described above, according to the binding machine 101, when the staple S0 held by the magazine 140 is separated from the another staple S0 and is moved, it is possible to restrain the staple S0 from being displaced in a direction different from an intended direction.

Further, the binding machine 101 may additionally include a binding support wall 644, and an elastic body 644S that biases the support wall 644 from the downward direction Z2 toward the upward direction Z1 (FIG. 38). Since the support wall 644 is disposed inside the first leg portion S10, the support wall 644 has a wall surface facing the surface facing the inward direction of the first portion S10B. Therefore, it is possible to restrain the displacement of the first portion S10B toward the inward direction or the deformation thereof. In this way, it is possible to restrain the displacement or deformation of the staple S10 at the time of binding by particularly providing a plurality of binding support walls at locations at which the displacement or the deformation is likely to occur.

Further, a change, an addition, and a deletion with respect to the binding machine 101 can be performed within a range reasonably understood by a person skilled in the art. For example, the binding machine 101 may be modified to include only the forward direction-movable wall 441W without including the movable wall 160 of the forward direction-movable wall 441W and the movable wall 160.

On the other hand, the binding machine 101 may include the movable wall 160. For example, the binding machine 101 may include the forward direction-movable wall 441W inside the first leg portion S10 of the staple S0, and the movable wall 160A and the movable wall 160B inside the second leg portion S20.

Further, the slider 441 of the binding machine 101 may be modified to include only the forward direction-movable wall 441W without including the ceiling wall of the ceiling wall and the forward direction-movable wall 441W.

The binding machine 101 may be modified to include a plurality of forward direction-movable walls. For example, a first forward direction-movable wall may be provided inside the first leg portion S10 of the staple S0, and a second forward direction-movable wall may be provided inside the second leg portion S20.

In addition, the binding machine 101 may not include the movable support wall unit 642U. Instead, in the binding machine 101, the forward direction-movable wall 441W may be modified to support the first portion S10B of the staple S0 at the rear end of the forward direction-movable wall 441W at the time of binding.

### Fourth Embodiment

Hereinafter, a configuration of a binding machine according to the present embodiment will be described. The present embodiment discloses an example in which the movable wall disclosed in the second embodiment is applied to a binding machine including the binding machine described in Patent Literature 3 as a basic configuration. Therefore, the description of a configuration exhibiting configurations or functions that are the same as or similar to those of the binding machines disclosed in Patent Literature 3 and the other embodiments of the present application will be appropriately omitted or simplified by using the same or similar names.

### Configuration of Staple S4

First, a configuration of a staple S4 according to the present embodiment will be described. Since a material and the like of the staple S4 are the same as that of the staple S and the like, the description thereof is omitted.

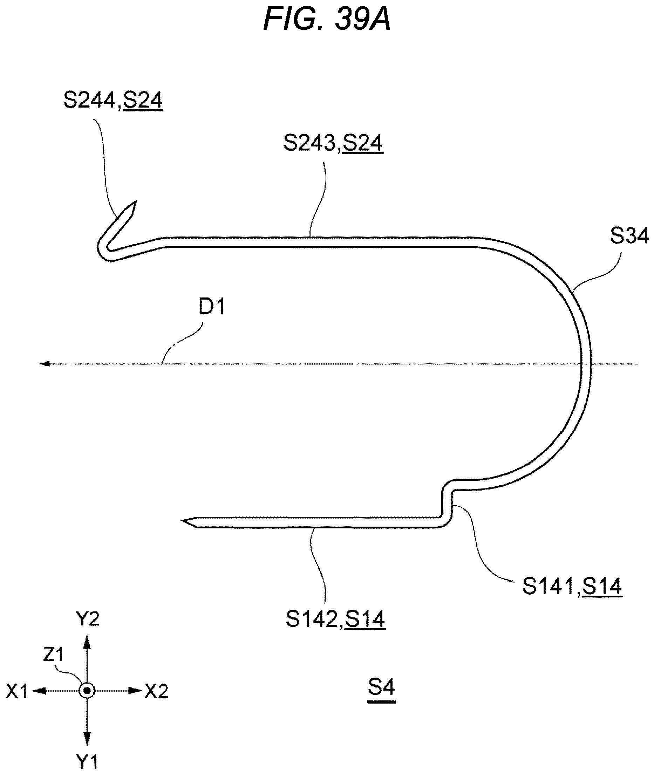

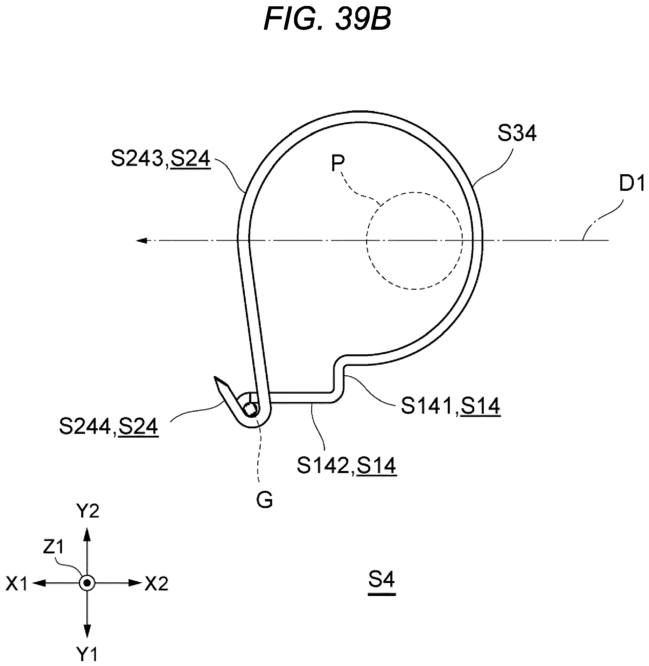

FIG. 39A illustrates the staple S4 before binding according to the present embodiment, and FIG. 39B illustrates a top view of the staple S4 in a bound state after the binding.

The staple S4 is common to the staple S and the like in that the staple S4 includes a first leg portion S14, a second leg portion S24, and a main body portion S34 connecting the first leg portion S14 and the second leg portion S24. Similar to the staple S, in a state before the binding, the first leg portion S 14 and the second leg portion S24 of the staple S4 are separately provided, and thus an opening is provided between the first leg portion S 14 and the second leg portion S24. In the present embodiment, a direction from the main body portion S34, that is a closed portion of the main body portion S34, toward the opening (a leftward direction of a paper surface in FIG. 39A) is referred to as the opening direction D 1. The opening direction D 1 of the staple S4 when set in a binding machine 104 (to be described later) according to the present embodiment coincides with the forward direction X1, which is a movement direction of the staple S4. Therefore, a user can insert the second object P into the staple S4 from the opening of the staple S4 by moving the binding machine 104 in the forward direction with respect to the second object P.

The staple S4 includes the main body portion S34 that connects the first leg portion S14 and the second leg portion S24 and surrounds the second object P such as a stem, the first leg portion S14 that includes a first portion S 141 that is connected to one end portion of the main body portion S34 and that is bent and extends outward and a second portion S142 that is further bent from the first portion S141 and extends in the opening direction D1, and a second leg portion S24 that includes a third portion S243 that is connected to the other end portion of the main body portion S34 and that extends in the opening direction D1 and a fourth portion S244 that is bent outward from a tip end portion of the third portion S243. As illustrated in FIG. 39A, the main body portion S34 is curved into a C-shape or a semicircular arc shape. The first portion S141 that connects the main body portion S34 and the second portion S142 may be referred to as a crank portion, and the fourth portion S244 may be referred to as a hook portion or a tip end portion.

As will be described later, a tip end portion of the first leg portion S14 is engaged with the first object G by being bent so as to be curved in a spiral shape around the first object G, which is a guide element. On the other hand, as illustrated in FIG. 39B, the second leg portion S24 is largely bent in a direction approaching the first object G so as to close the opening in the top view, and thus the hook portion, that is, the fourth portion S244, is engaged with the first object G. Since the third portion S243 has elasticity in a direction in which the closed opening is expanded and returns to an original position, the fourth portion S244 can apply tension to the first object G in a direction in which the opening is expanded, that is, a direction separated from the first leg portion S 14. Accordingly, it is possible to restrain the first object G from being bent and the staple S4 from falling off and the like.

### Schematic Configuration of Binding Machine 104

An example of the configuration of the binding machine 104 for bending the staple S4 illustrated in FIG. 39A as illustrated in FIG. 39B will be described below. Except for the horizontal inversion of the elements (that is, in the binding machine disclosed in Patent Literature 3, the first displacement portion 200 is provided in the leftward direction Y2 and the second displacement portion 300 is provided in the rightward direction Y1, whereas in the binding machine 104 disclosed in the present embodiment, the first displacement portion 204 is provided in the rightward direction Y1 and the second displacement portion 304 is provided in the leftward direction Y2, and thus the staple is also formed to be horizontally inverted), the basic configurations of the binding machine disclosed in Patent Literature 3 and the basic configurations of the binding machine 104 disclosed in the present embodiment are common, and thus the configurations of the binding machine 104 will be described by appropriately omitting or simplifying the configurations of the binding machine 104 to the extent that it can be carried out by a person skilled in the art based on the description of Patent Literature 3, the description of the specification of the present application, and the technical level at the time of the present application.

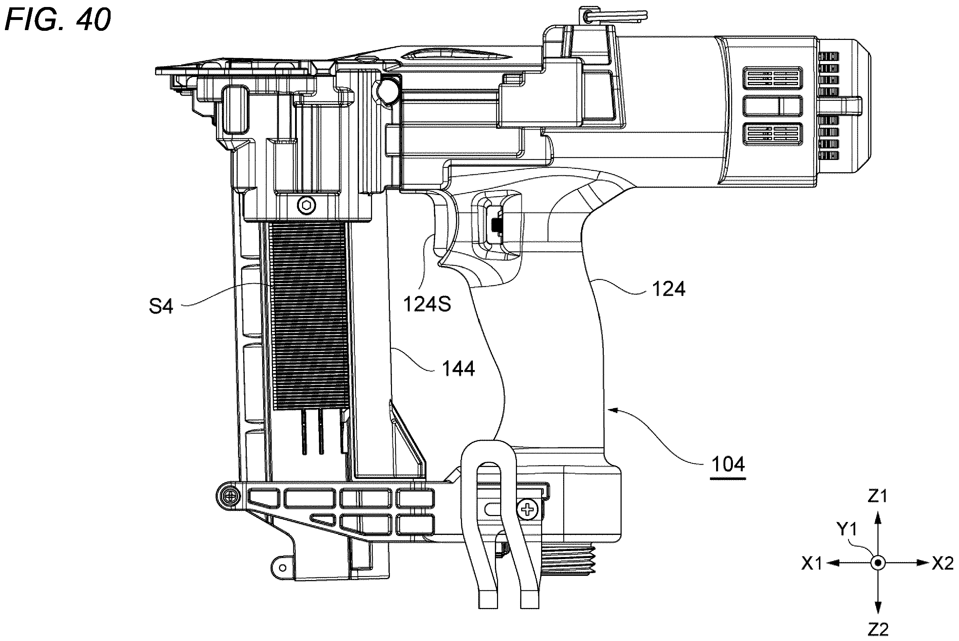

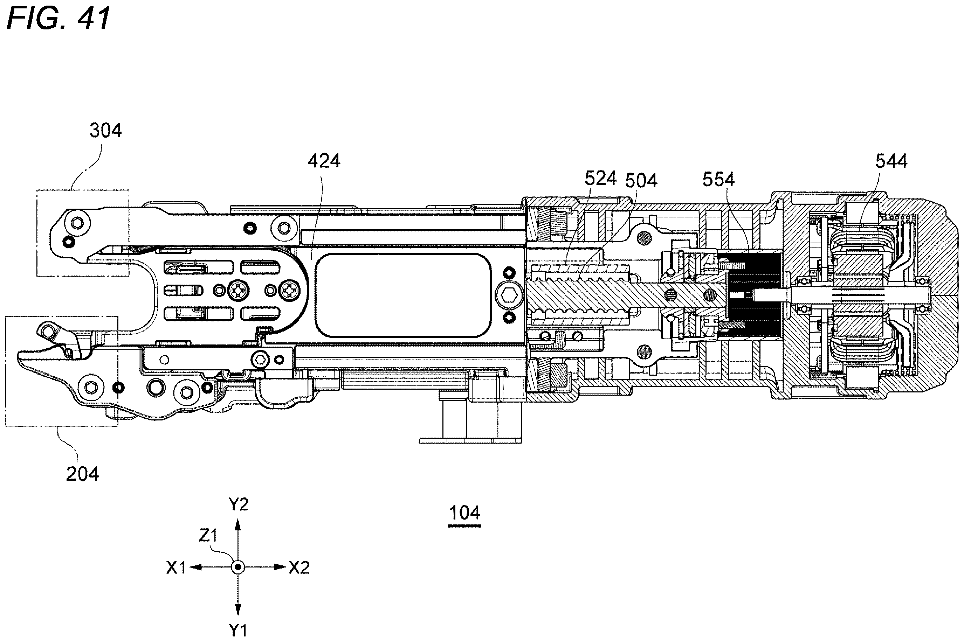

FIG. 40 is a right side view of the binding machine 104, and FIG. 41 is a cross-sectional view of the binding machine 104 in the top view. The binding machine 104 binds the first object G and the second object P by using the staple S4 having the formed opening. The binding machine 104 includes the first displacement portion 204 that displaces the first leg portion S14 of the staple S4 so as to be engageable with the first object G, and the second displacement portion 304 that displaces the second leg portion S24 of the staple S4 so as to be engageable with the first object G. The second displacement portion 304 can bind the first object G and the second object P by engaging the tip end portion S244 of the second leg portion S24 with the first object G in a state in which the second object P is surrounded by the first leg portion S14, the second leg portion S24, and the main body portion S34 of the staple S4.

Specifically, the binding machine 104 includes a grip 124 extending in an up-down direction so as to be gripped by the user and provided with a switch 124S for driving the binding machine 104, a magazine 144 (FIG. 40) that can hold a plurality of staples S4 stacked in the up-down direction, a pusher (not shown) for biasing the plurality of staples S4 accommodated in the magazine 144 toward the upward direction Z1, a driver 424 (FIG. 41) that pushes the staple S4 positioned at an upper end toward the forward direction X1 coinciding with the opening direction D1 to separate the staple S4 positioned at the upper end from another staple S4 and move the staple S4 in the forward direction X1, a movement mechanism for moving the driver 424, the first displacement portion 204 (FIG. 41. The first displacement portion 204 may be referred to as a clincher portion.) for displacing the first leg portion S 14 of the staple S4 by curving or bending the first leg portion S 14, and the second displacement portion 304 (FIG. 41) for displacing the second leg portion S24 of the staple S4 by curving or bending the second leg portion S24.

### Driver and Movement Mechanism for Driver

As described in Patent Literature 3, the binding machine 104 is configured such that a nut part 524 and the driver 424 fixed thereto can be moved in the forward direction or the rearward direction by rotating a ball screw 504, which is provided extending approximately at the center of the binding machine 104 in a front-rear direction, clockwise or counterclockwise by a built-in motor 544. The nut part 524 and the driver 424 can move in the forward direction X1 and the rearward direction X2, and thus the nut part 524 and the driver 424 may be referred to as movement portions. The binding machine 104 further includes a speed reducer 554 connected to an output shaft of the motor 544 and a printed wiring board on which a CPU corresponding to a control device of the motor 544 is mounted.

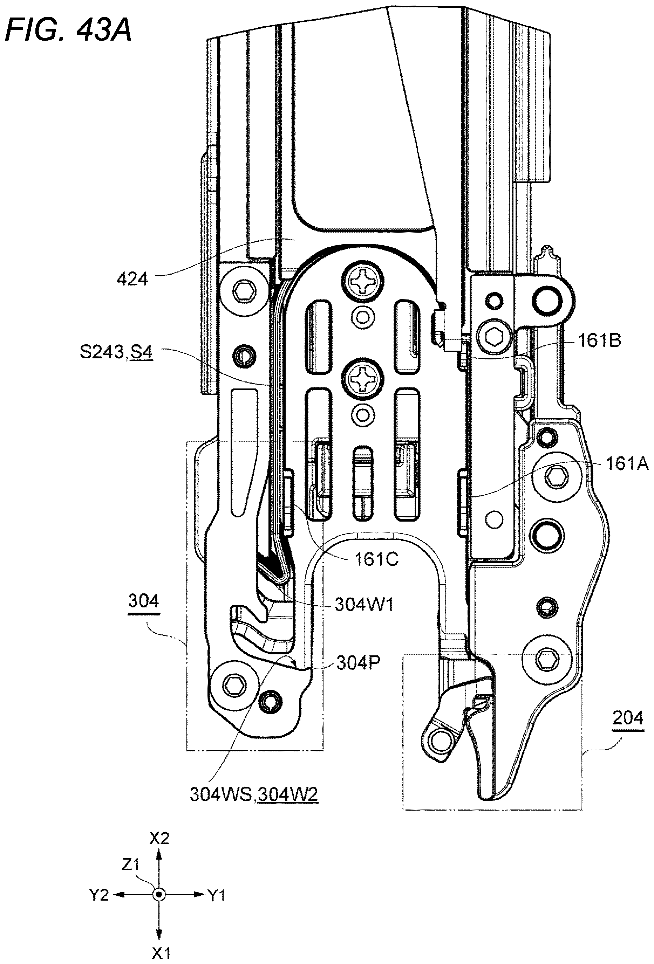

The driver 424 can move in the forward direction X1 to separate the staple S4 positioned at the upper end among the plurality of staples S4 held in the magazine 144 and stacked in the up-down direction from the another staple S4 and move the staple S4 positioned at the upper end in the forward direction X1 in a state of maintaining a front-rear relation in which the opening of the staple S4 is at the front and the main body portion S34 is at the rear. The driver 424 plastically deforms the first leg portion S14 by further moving the separated staple S4 in the forward direction X1 and bringing the first leg portion S14 into contact with the first displacement portion 204 (to be described later), and plastically deforms the second leg portion S24 by bringing the second leg portion S24 into contact with a first guiding wall 304W1 and a second guiding wall 304W2 (FIG. 43A and the like) provided in the second displacement portion 304 (to be described later).

### First Displacement Portion

The first displacement portion 204 (an example of a "displacement portion") has a function of displacing the first leg portion S 14 of the staple S4 that moves in the forward direction X1 by the driver 424 so as to be engageable with the first object G. However, the configuration for displacing the staple S4 that moves in the forward direction X1 by the driver 424 can be variously modified according to a binding object and the like, and may be modified to include the first displacement portion according to the other embodiments or other known configurations.

It can be easily carried out by a person skilled in the art based on the technical level at the time of the present application including Patent Literature 3, and thus the detailed description thereof will be omitted. The first displacement portion 204 according to the present embodiment includes a hole formed with a cylindrical inner wall surface on which the tip end portion of the first leg portion S 14 advances toward the downward direction Z2 while being curved in an arc shape or a spiral shape by a tip end of the second portion S 142 of the first leg portion S 14 of the staple S4 being inserted as advancing by the driver 424, and a groove portion for guiding the tip end portion of the first leg portion S14 to the hole (for example, corresponding to a hole 210 and a groove portion 211 disclosed in Patent Literature 3). Since the hole is provided in the forward direction X1 with respect to the first leg portion S14, it is possible to bring the tip end of the second portion S 142 into contact with the inner wall surface of the hole 214 as the staple S4 advances, and displace the second portion S 142 such that the tip end of the second portion S 142 advances in a spiral shape in accordance with a shape of the inner wall surface.

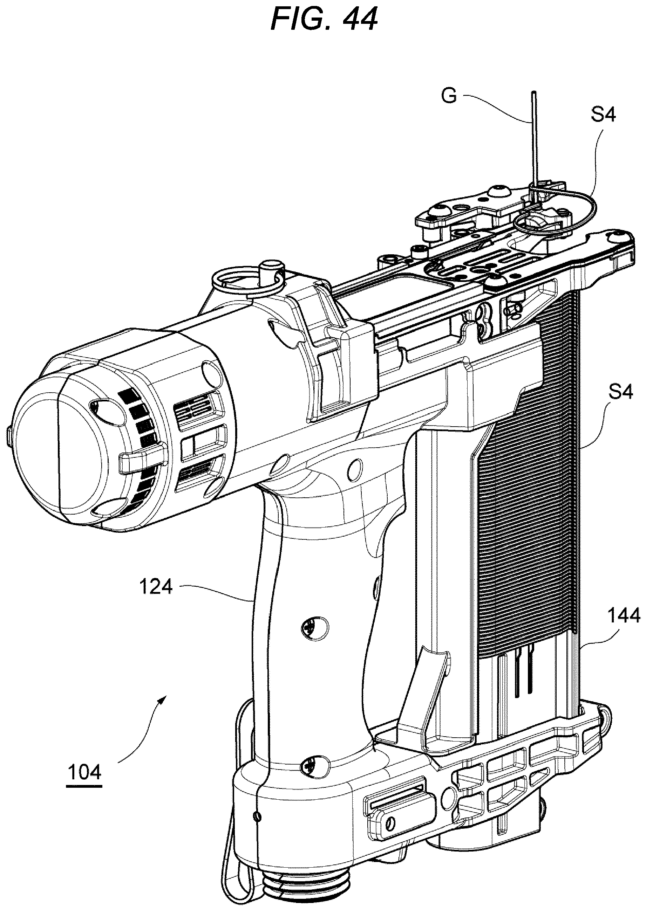

According to such a configuration, by inserting the tip end of the second portion S142 of the first leg portion S14 into the hole 214 in a state in which, for example, a guide string, which is the first object G (FIG. 44 and the like) as a guide element, is disposed along a central axis of the hole, the tip end of the second portion S142 can advance in the spiral shape to surround the first object G, and thus the first leg portion S14 can be engaged with the first object G. Since the first object G is inserted into the hole, the hole may be referred to as a first insertion portion. In order to strengthen the engagement between the first object G and the first leg portion S14, an inner diameter of the inner wall surface of the hole is preferably less than a total value of twice a wire diameter of the staple S4 and an outer diameter of the first object G. The first object G or a part of the staple S4 is crushed by setting the inner diameter in this manner, and thus it is possible to strengthen the engagement between the staple S4 and the first object G.

### Second Displacement Portion

The second displacement portion 304 (An example of the "displacement portion". FIG. 43A and the like) has a function of displacing the second leg portion S24 of the staple S4 that moves in the forward direction X1 by the driver 424 so as to be engageable with the first object G. It can be easily carried out by a person skilled in the art based on the technical level at the time of the present application including Patent Literature 3, and thus the detailed description thereof will be omitted. The second displacement portion 304 according to the present embodiment can displace the second leg portion S24 in an inward direction with respect to the staple S4 as the driver 424 moves in the forward direction X1. Specifically, the second displacement portion 304 includes the first guiding wall 304W1 that is provided outside the second leg portion S24 in an initial state before the start of displacement of the staple S4, and that comes into contact with the second leg portion S24 of the staple S4 moving in the opening direction D1 (Since the opening direction D1 coincides with the forward direction X1, and thus the opening direction D1 may be referred to as the forward direction X1. The same applies hereinafter) to curve the second leg portion S24. The first guiding wall 304W1 has a recessed portion recessed toward an outward direction with respect to the staple S4 (the leftward direction Y2).

The second displacement portion 304 further includes the second guiding wall 304W2 that is provided in the forward direction X1 with respect to the second leg portion S24 in the initial state before the start of displacement of the staple S4, and that comes into contact with the second leg portion S24 of the staple S4 moving in the opening direction D1 to curve the second leg portion S24. The second guiding wall 304W2 has a wall surface facing the rearward direction X2 and a protruded portion 304P protruding in the rearward direction X2. The protruded portion 304P is provided in the forward direction with respect to the second leg portion S24 in the front-rear direction and is provided in the inward direction with respect to the second leg portion S24 in a left-right direction in the initial state, and is provided at an inner end portion of the second guiding wall 304W2 such that a protruding amount toward the rearward direction X2 becomes large as advancing toward the rightward direction Y1 (the inward direction).

As described above, the first displacement portion 204 and the second displacement portion 304 can bind the second object P by displacing the first leg portion S 14 and the second leg portion S24 of the staple S4 that moves in the forward direction X1 by the driver 424 to engage with the first object G in a state in which the second object P is inserted into the opening of the staple S4.

### Guiding Portion

Similar to the staple S and the like, the staple S4 has a problem in that the tip end portion and the like do not advance in parallel to the forward direction and may be displaced in the inward direction or the outward direction. In particular, the staple S4 has a non-symmetrical shape similar to the staple S and the like, a force required for separating a staple is also non-symmetrical, and thus there is a possibility that the tip end portion and the like are displaced in the inward direction or the outward direction.

Therefore, the binding machine 104 according to the present embodiment includes the driver 424 that can move in the forward direction X1 such that the staple S4 positioned at the upper end is separated from the another staple S4 and the opening of the staple S4 is at the front (such that the main body portion S34 of the staple S4 is at the rear), and a guiding portion provided to guide an advancing direction of the staple S4 at a guide position inside the staple S4. The guiding portion may have a configuration for guiding the movement direction of the staple S4, and for example, is implemented by a wall portion. The guide position may be any position at which the movement direction of the staple S4 can be guided, and may be, for example, a position adjacent to and facing the staple S4 inside (in the inward direction with respect to) the staple S4. The guiding portion retracts from the guide position of the staple S4 when the staple S4 moves in the forward direction X1 by a predetermined distance.

The binding machine 104 according to the present embodiment includes, as the guiding portion, a movable wall 161A, a movable wall 161B, and a movable wall 161C (hereinafter, these three movable walls are collectively referred to as a movable wall 161), each of these movable walls is provided to face a surface facing the inside of (the inward direction with respect to) the staple S4, and can move in the downward direction and retract from the guide position when the movable wall is pushed toward the forward direction X1 by the staple S4 that moves in the forward direction X1 by the driver 424. Since the three movable walls 161 may be configured in the same manner as the movable walls 160 disclosed in the second embodiment, the detailed description thereof will be omitted as appropriate. The three movable walls 161 are provided in a region through which the staple S4 passes toward the forward direction, and can move (retract) in the downward direction Z2 and the like when a force toward the forward direction X1 is applied. According to such a configuration, it is possible to guide the movement of the staple S4 in the forward direction X1 without suppressing the movement of the staple S4 in the forward direction X1.

Similar to the movable wall 160A, the movable wall 161 may move and retract in the upward direction Z1. In addition, the movable wall 161 may retreat from the region through which the staple S4 passes in accordance with the movement of the staple S4 in the forward direction, and it is not necessary to retreat when the movable wall 161 comes into contact with the staple S4. For example, the movable wall 161 may move in the upward direction Z1 or the downward direction Z2 by coming into contact with the driver 424 (including a part integrated with the driver 424) moving in the forward direction X1.

A movement amount (may be referred to as the "predetermined distance") of the staple S4 toward the forward direction X1 from the staple S4 starts moving until the movable wall 161 moves and retracts from the guide position can be changed as appropriate according to the shape and the like of the staple S4.

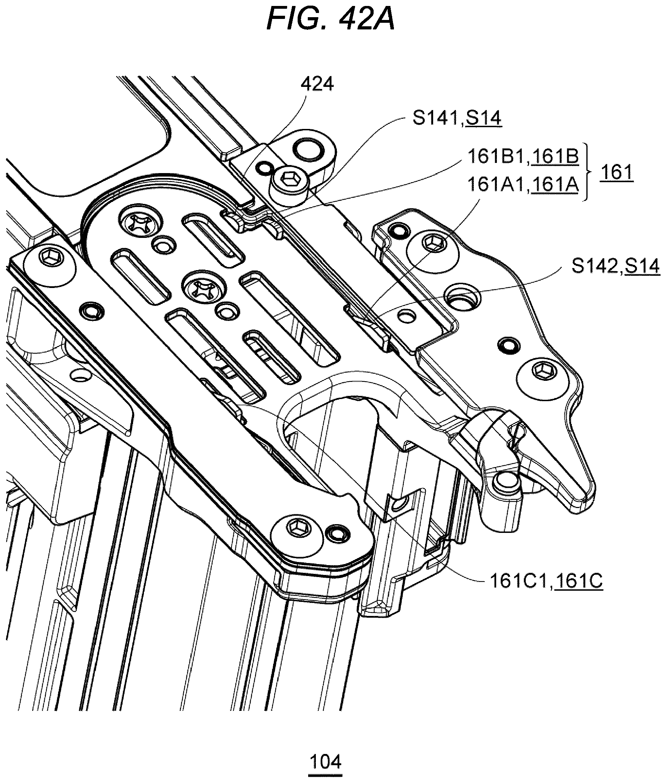

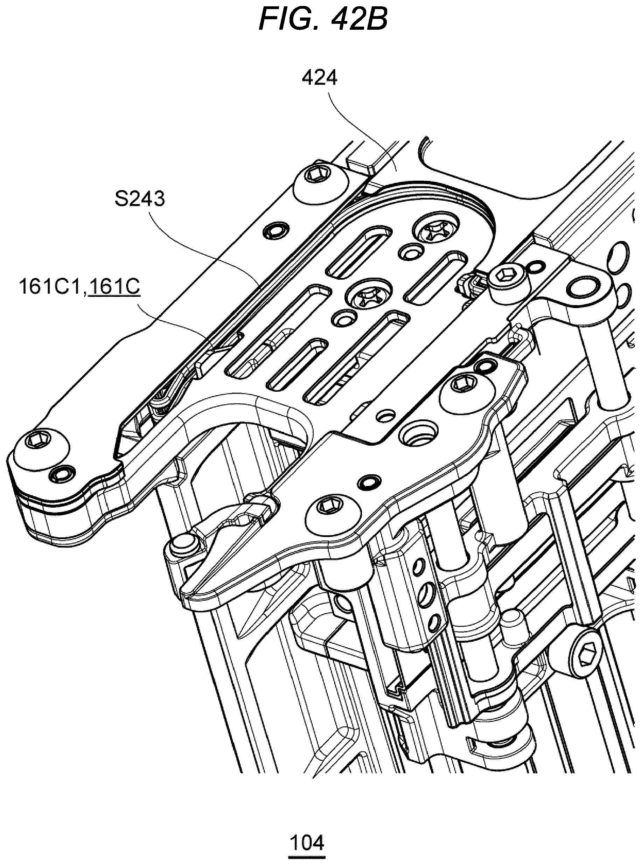

FIGS. 42A and 42B are perspective views of the front end portion of the binding machine 104 as viewed from an upper left side and an upper right side, respectively.

As illustrated in FIG. 42A, the movable wall 161A is provided inside (an example of the "guide position") the tip end portion (may be referred to as a front end portion) of the first leg portion S14. By providing the movable wall 161A inside the first leg portion S14, the first leg portion S14 can be inhibited from being displaced in the inward direction, and can be guided to the forward direction X1.

Specifically, the movable wall 161A includes a wall surface (surface) adjacent to and facing a surface facing the inside of (the inward direction with respect to) the first leg portion S14 and extending parallel to the forward direction X1, and thus the first leg portion S 14 displaced in the inward direction (or tries to be displaced in the inward direction) can be guided to the forward direction X1 by being brought into contact with the wall surface.

Further, the movable wall 161A includes an inclined surface (an inclined surface or a tapered surface inclined in the upward direction toward the rearward direction, and coming into contact with the staple S4) 161A1 inclined toward the rearward direction X2 and the upward direction Z1 (moving in the upward direction Z1 as advancing toward the forward direction X1). The inclined surface 161A1 is provided in a region through which the first portion S141 passes. Therefore, when the first portion S141 of the staple S4 moving in the forward direction X1 comes into contact with the inclined surface 161A1, a force toward the downward direction Z2 is applied to the movable wall 161A. Therefore, the movable wall 161A can move in the downward direction.

The movable wall 161A may be supported in a state of being biased toward the upward direction Z1 by a biasing member such as a spring provided below.

As illustrated in FIG. 42A, the movable wall 161B is provided in the crank portion of the first leg portion S14, that is, in the forward direction with respect to the first portion S141 and inside the second portion S142 (an example of the "guide position"). By providing the movable wall 161B in the crank portion, the second portion S142 of the crank portion can be inhibited from being displaced in the inward direction, and can be guided to the forward direction X1.

Specifically, the movable wall 161B includes a wall surface (surface) adjacent to and facing a surface facing the inside of (the inward direction with respect to) the second portion S 142 of the first leg portion S 14 and extending parallel to the forward direction X1, and an inclined surface (an inclined surface or a tapered surface inclined in the upward direction toward the rearward direction, and coming into contact with the staple S4) 161B1 inclined toward the rearward direction X2 and the upward direction Z1 (moving in the upward direction Z1 as advancing toward the forward direction X1). Therefore, the movable wall 161B can move in the downward direction as the first portion S 141 of the staple S4 moving in the forward direction X1 comes into contact with the movable wall 161B. Similar to the movable wall 161A, the movable wall 161B may be supported so as to be biased toward the upward direction Z1 by a biasing member provided below.

Since the movable wall 161B is provided at the guide position immediately before the first portion S141, a movement amount of the staple S4 toward the forward direction X1 (an example of the "predetermined distance") until the movable wall 161B retracts from the guide position, that is, a distance in the front-rear direction between the first portion S 141 of the staple S4 and the inclined surface 161B1 is relatively small.

On the other hand, since the movable wall 161A is provided at the guide position near the tip end of the first portion S141, a movement amount of the staple S4 toward the forward direction X1 (an example of the "predetermined distance") until the movable wall 161A retracts from the guide position, that is, a distance in the front-rear direction between the first portion S141 of the staple S4 and the inclined surface 161A1 is relatively large.

According to such a configuration, the movable wall 161B can effectively restrain the crank portion of the staple S4 from being displaced immediately after the staple S4 positioned at the upper end held in the magazine 144 is separated from the another staple S4. On the other hand, the movable wall 161A can effectively restrain the second portion S 142 of the staple S4 extending long in the front-rear direction from being displaced for a long period of time until the first portion S141 reaches and comes into contact with the inclined surface 161A1.

As illustrated in FIG. 42B, the movable wall 161C is provided inside (an example of the "guide position") the tip end portion of the third portion S243 of the second leg portion S24. By providing the movable wall 161C inside the second leg portion S24, the second leg portion S24 can be inhibited from being displaced in the inward direction, and can be guided to the forward direction X1. The movable wall 161C includes a wall surface (surface) adjacent to and facing a surface facing the inside of (the inward direction with respect to) the tip end of the third portion S243 of the second leg portion S24 and extending parallel to the forward direction X1, and an inclined surface (an inclined surface or a tapered surface inclined in the upward direction toward the rearward direction, and coming into contact with the staple S4) 161C1 inclined toward the rearward direction X2 and the upward direction Z1 (moving in the upward direction Z1 as advancing toward the forward direction X1). Therefore, the movable wall 161C can move in the downward direction as the main body portion S34 of the staple S4 moving in the forward direction X1 comes into contact with the movable wall 161C. Similar to the movable wall 161A, the movable wall 161C may be supported so as to be biased toward the upward direction Z1 by a biasing member provided below.

Here, the movable wall 161 according to the present embodiment includes guiding portions (the movable wall 161A and the movable wall 161B) that guide the inside of the first leg portion S14 and a guiding portion (the movable wall 161C) that guides the inside of the second leg portion S24. The second leg portion S24 is displaced in the inward direction when the first leg portion S14 tries to be displaced in the outward direction, and the first leg portion S14 is displaced in the inward direction when the second leg portion S24 tries to be displaced in the outward direction, and thus the binding machine 104 can also substantially restrain the displacement of the staple S4 in the outward direction by providing a guiding portion on each of the inside of the first leg portion S14 and the inside of the second leg portion S24.

The three movable walls 161A to 161C may be provided so as to retract at different timings. For example, the movable wall 161B, the movable wall 161A, and the movable wall 161C may retract in this order at different timings. By varying the retraction timing in this way, it is possible to disperse a reaction force applied to the staple S4 from the movable wall 161 toward the upward direction Z1.

### Binding Method

Hereinafter, a binding method using the binding machine 104 will be described. The first object G inserted into the hole and the second object P inserted into a recessed portion (may be referred to as a "second insertion portion") provided between the first displacement portion 204 and the second displacement portion 304 are omitted from the drawings for convenience of description. In addition, for convenience of description, a part of the configuration may be omitted from the drawings. For example, in FIG. 43A and the like, a cover and the like provided above the second displacement portion 304 and the like are omitted.

FIGS. 43A to 43F are cross-sectional views illustrating a process of engaging the staple S4 with the first object G by using the binding machine 104 in the top view. FIG. 43A is a plan view of the front end portion of the binding machine 104 in the initial state before the start of displacement (before the start of movement) of the staple S4. In FIG. 43A, the plurality of staples S4 are stacked in the up-down direction at the same position in the front-rear direction. When the driver 424 starts to move in the forward direction from this state, the staple S4 pushed toward the forward direction by the driver 424 starts to move in the forward direction X1. At this time, the movable walls 161A to 161C are positioned inside the first leg portion S14 or the second leg portion S24 of the staple S4, respectively, and thus the staple S4 is restrained from being displaced in an unintended direction and is guided to move in the forward direction X1. The driver 424 includes a roof portion provided to cover the main body portion S34 of the staple S4 from above, and thus a part of the main body portion S34 is covered with the roof portion of the driver 424 in FIG. 43A.

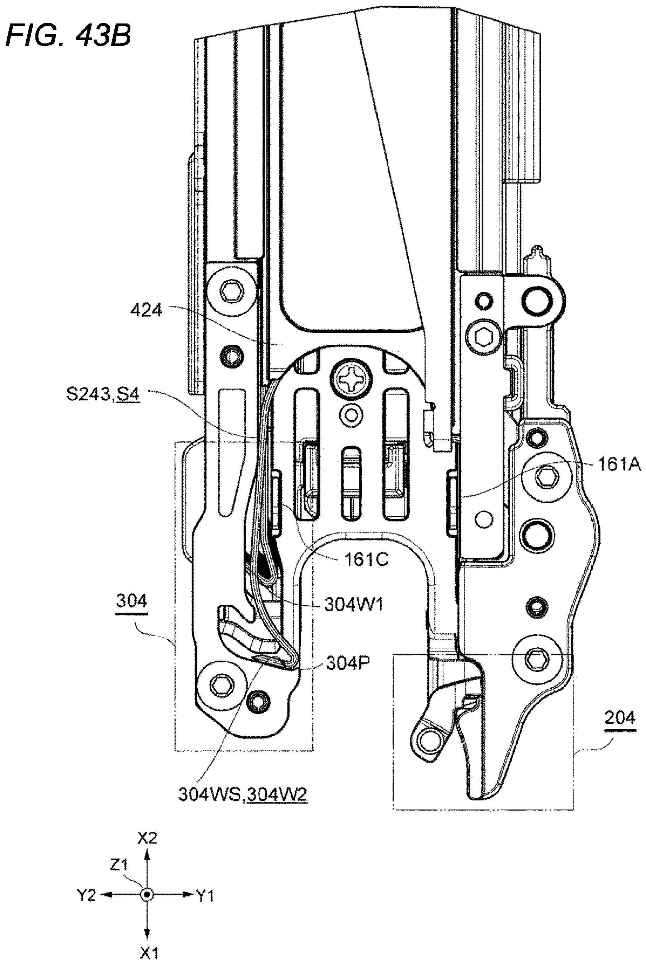

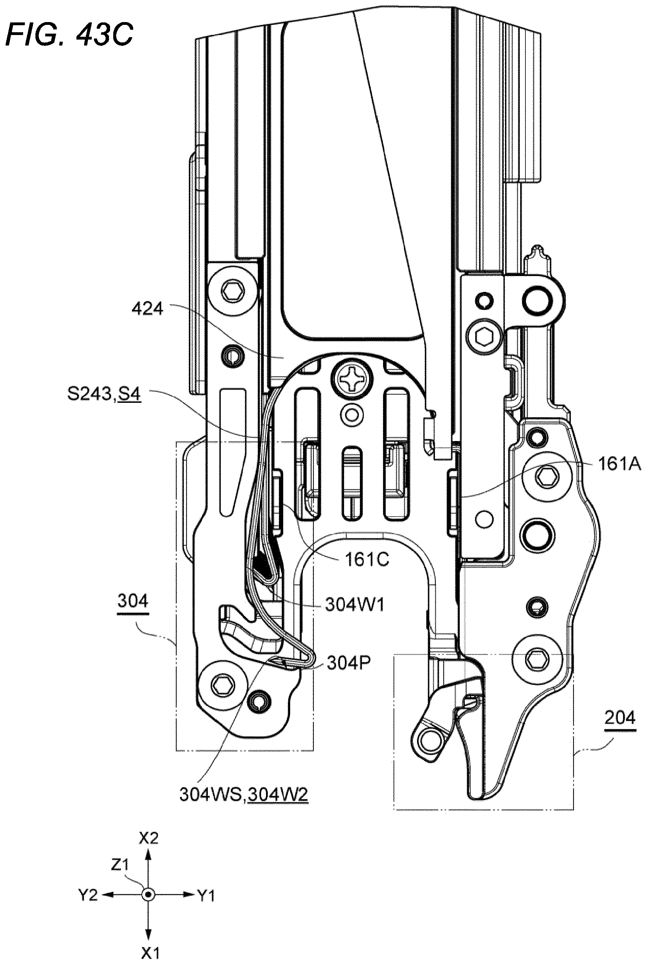

FIG. 43B is a plan view of the front end portion of the binding machine 104 in a state after the start of displacement of the staple S4 positioned at the upper end. As illustrated in FIG. 43B, the staple S4 positioned at the upper end is separated from the another staple S4 positioned in the downward direction and moves in the forward direction X1. At this time, the movable wall 161B has already retreated toward the downward direction as the first portion S141 of the staple S4 comes into contact with the inclined surface 161B1. On the other hand, the movable wall 161A and the movable wall 161C guide the first leg portion S14 and the second leg portion S24 of the staple S4 in the forward direction by being positioned at the guide positions in the inward direction with respect to the first leg portion S14 and the second leg portion S24, respectively. As illustrated in FIGS. 43B and 43C, the second guiding wall 304W2 is provided in the forward direction X1 with respect to the second leg portion S24, and thus when the driver 424 further advances, the hook portion S244 of the second leg portion S24 comes into contact with a wall surface 304WS of the second guiding wall 304W2 facing the rearward direction X2 and advances along the wall surface 304WS while being deformed. The wall surface 304WS has a portion facing the rearward direction X2 and formed substantially parallel to the left-right direction, and thus the hook portion S244 cannot advance toward the forward direction X1, and the third portion S243 that tries to move in the forward direction X1 is curved so as to bulge to the outward direction. The first guiding wall 304W1 has a recessed surface that is provided in the outward direction with respect to the second leg portion S24 (the rightward direction Y1), and that is formed to face the inward direction with respect to the staple S4 and to be recessed to the outward direction (the rightward direction Y1), and thus the third portion S243 bulges to the outward direction and is curved such that at least a part thereof comes into contact with the recessed surface of the recessed portion.

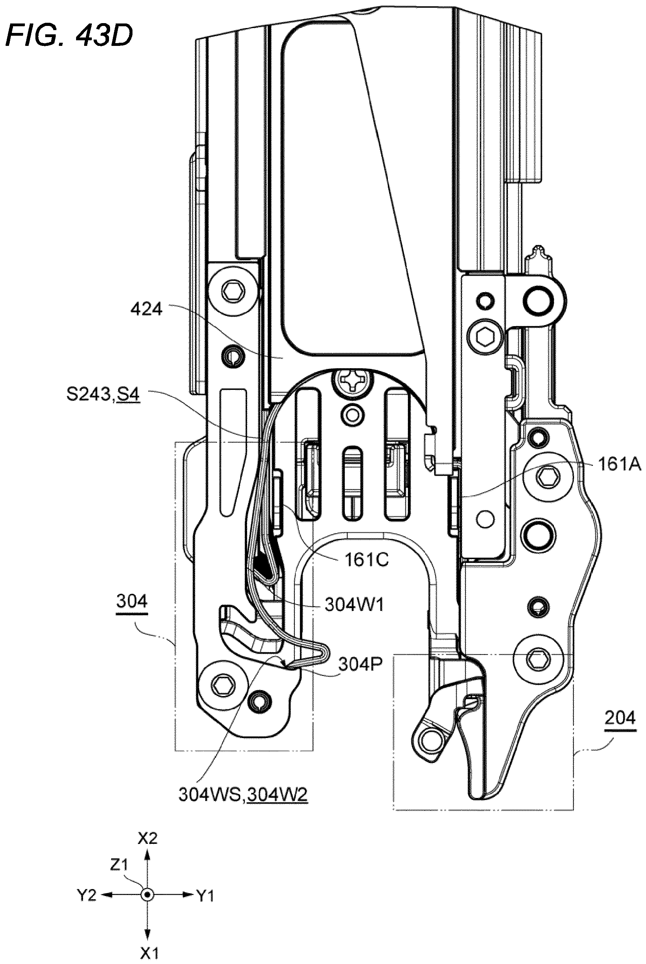

As illustrated in FIGS. 43C and 43D, the second guiding wall 304W2 includes the protruded portion 304P whose protruding amount toward the rearward direction X2 becomes large as advancing toward the inward direction (the leftward direction Y2), and thus the hook portion S244 is guided to advance toward the rearward direction X2 while coming into contact with the protruded portion 304P. When the hook portion S244 moves over the second guiding wall 304W2, the hook portion S244 advances toward the forward direction X1 due to the elasticity of the second leg portion S24, and the third portion S243 of the second leg portion S24 comes into contact with the protruded portion 304P. Through the process described above, the second leg portion S24 is curved substantially counterclockwise in the paper surface and is bent in a direction approaching the first leg portion S14 in the top view.

After the hook portion S244 moves over the second guiding wall 304W2, a tip end of the first leg portion S14 starts to enter the hole of the first displacement portion 204. Since the staple S4 has flexibility and plasticity, when the staple S4 moves in the opening direction D 1, the tip end of the first leg portion S14 advances along an inner wall of the hole while being curved in a spiral shape. Accordingly, by moving the staple S4 in the forward direction in a state in which the first object G is disposed on an axis of the spiral shape, it is possible to engage the tip end portion of the first leg portion S 14 of the staple S4 with the first object G in a spiral shape surrounding the outer periphery of the first object G with the first object G as an axis.

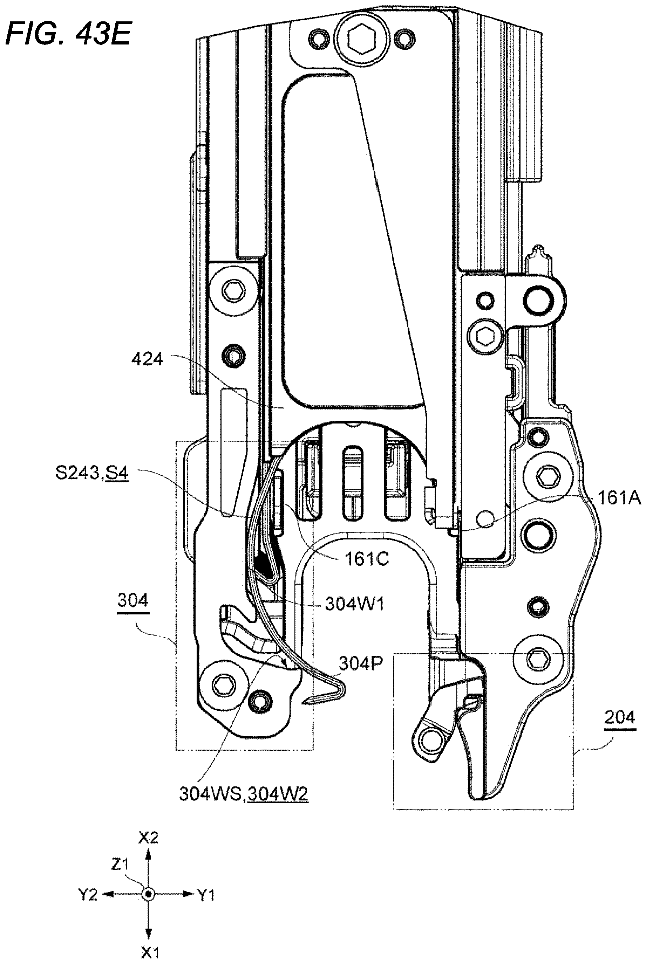

When the driver 424 further causes the staple S4 to advance, the hook portion S244 comes into contact with an inclined surface of the second displacement portion 304, which is inclined toward the upward direction Z1 and the rearward direction X2, and moves in the upward direction Z1. As illustrated in FIG. 43E, the hook portion S244 passes through a region between the first object G and the second object P in the top view and advances to a position intersecting the first leg portion S14. The second leg portion S24 including the hook portion S244 moves in the upward direction Z1 by coming into contact with the inclined surface moving in the upward direction, and thus the second leg portion S24 does not interfere with the first leg portion S14.

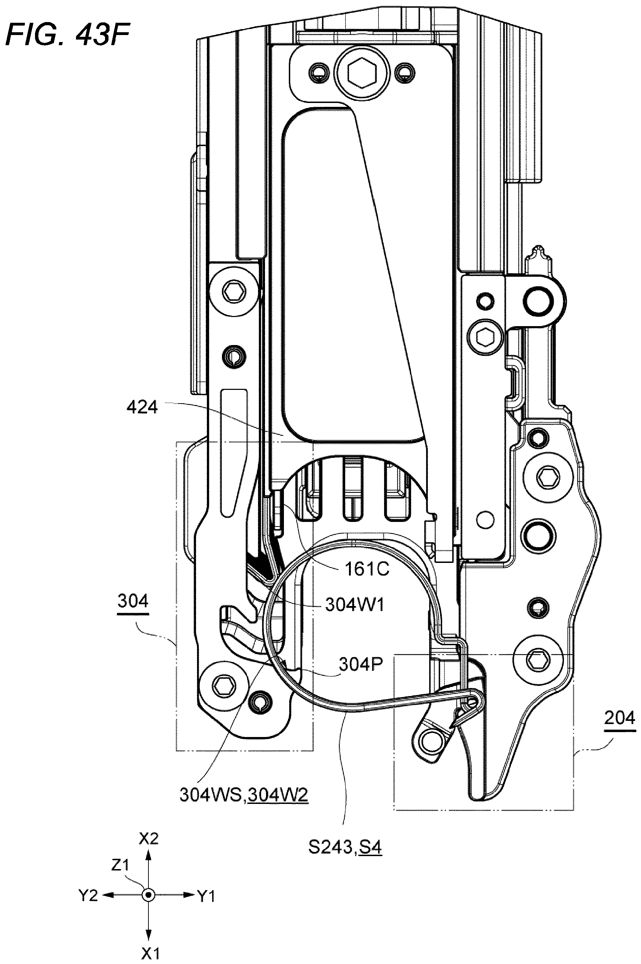

FIG. 43F illustrates a state in which the driver 424 is retracting. Since the second leg portion S24 of the staple S4 exhibits an elastic force so as to restore as the driver 424 retracts, the second leg portion S24 is displaced in a clockwise direction in the paper surface, approaches the first object G, and is engaged with the first object G. The first guiding wall 304W1 may also form an inclined surface facing the upward direction on a surface that comes into contact with the second leg portion S24 so as to promote the movement of the hook portion S244 toward the upward direction Z1.

According to the binding method described above, it is possible to engage the first leg portion S14 and the second leg portion S24 with the first object G so as to surround and bind the second object P by the first leg portion S14, the second leg portion S24, and the main body portion S34. by providing the movable wall 161 as the guiding portion, the binding machine 104 can guide the movement of the staple S4 in the forward direction X1 without suppressing the movement of the staple S4 in the forward direction X1. FIG. 44 is a rear perspective view illustrating a state in which the staple S4 is engaged with the first object G (however, the second object P disposed at a position at which the second object P is surrounded by the staple S4 is omitted in FIG. 44).

Further, various modifications can be made without departing from the gist of the present disclosure. For example, it is possible to add other known configurations to a part of constituent elements of an embodiment within the scope of the ordinary creativity of a person skilled in the art. For example, a binding machine may include the first displacement portion of the first embodiment and the second displacement portion of the fourth embodiment, and another binding machine may include the first displacement portion of the fourth embodiment and the second displacement portion of the first embodiment. In addition, a part of constituent elements of an embodiment may be replaced with other known constituent elements. The constituent elements disclosed in the present application can be reasonably combined or replaced with other known constituent elements by the exhibition of the ordinary creativity of a person skilled in the art.

The invention according to the present application can be implemented as a binding machine or a binding method described as the following notes in addition to the invention including the above embodiments.

That is, the present application further discloses binding machines described below. As will be understood by a person skilled in the art, the respective configurations described in the above embodiments can be adopted in the binding machines described below.

### (Note 1)

A binding machine includes
a driver configured to separate a staple connected to another staple, and configured to move the staple in a predetermined direction;
a movable wall provided in a region through which the staple moved by the driver passes, and configured to move in a direction intersecting the predetermined direction; and
a displacement portion configured to bind a first object and a second object by displacing the staple after the movable wall moves.

### (Note 2)

A binding machine for binding a guide element and a plant includes:
a driver configured to separate a staple positioned at an upper end from another staple, and configured to move the staple in a forward direction;
a movable wall provided to face a surface facing an inward direction of the staple, and configured to move by the staple moving in the forward direction by the driver; and
a displacement portion configured to bind the guide element and the plant by displacing the separated staple.

### (Note 3)

A binding machine includes
a magazine configured to hold a staple that includes a first leg portion and a second leg portion, and that has an opening between the first leg portion and the second leg portion;
a driver configured to move the staple held by the magazine in a forward direction with the opening at the front;
a guiding portion configured to move in the forward direction together with the driver, and guide an inside of at least one of the first leg portion and the second leg portion; and
a displacement portion configured to bind an object to be bound inserted into the opening by displacing at least one of the first leg portion and the second leg portion of the staple moved by the driver.

The present application discloses a binding machine, the binding machine includes: a magazine configured to hold a staple that includes a first leg portion and a second leg portion, and that has an opening between the first leg portion and the second leg portion; a driver configured to move the staple held by the magazine in a forward direction with the opening at the front; a guiding portion configured to guide the first leg portion to a guide position inside the first leg portion when the staple is moved by the driver; and a displacement portion configured to bind an object to be bound inserted into the opening by displacing the first leg portion of the staple moved by the driver, in which the guiding portion retracts from the guide position when the staple moves by a predetermined distance.

Here, the guiding portion may be configured to move in a downward direction and configured to retract from the guide position when the staple moves in the forward direction by the predetermined distance.

Further, the guiding portion may be configured to come into contact with the staple and configured to move in the downward direction when the staple moves in the forward direction by the predetermined distance.

The guiding portion may have an inclined surface that is inclined in an upward direction toward a rearward direction and that is configured to be in contact with the staple.

The guiding portion may be configured to move in an upward direction and configured to retract from the guide position when the staple moves in the forward direction by the predetermined distance.

The guiding portion may be configured to come into contact with the staple and configured to move in the upward direction when the staple moves toward the forward direction by the predetermined distance.

The guiding portion may have an inclined surface that is inclined in a downward direction toward a rearward direction and that is configured to be in contact with the staple.

The guiding portion may be provided above the magazine.

The guiding portion may have a wall surface that is parallel to the forward direction.

In the binding machine, the displacement portion may include a fulcrum portion positioned in an inward direction of the first leg portion, and a bending portion positioned in an outward direction of the first leg portion and configured to bend the first leg portion in the inward direction with the fulcrum portion as a fulcrum, and the predetermined distance may be at least a distance by which a tip end of the first leg portion passes through the fulcrum (a distance from a position of the tip end of the first leg portion in the staple held by the magazine to a position at which the tip end passes through the fulcrum).

Further, the displacement portion may include a fulcrum portion positioned in an inward direction of the first leg portion, and a bending portion positioned in an outward direction of the first leg portion and configured to bend the first leg portion in the inward direction with the fulcrum portion as a fulcrum, the bending portion may include an engagement portion that is configured to be engaged with the first leg portion and that is configured to bend back the first leg portion bent in the inward direction, and the predetermined distance may be at least a distance by which a tip end of the first leg portion passes through the engagement portion (a distance from a position of the tip end of the first leg portion in the staple held by the magazine to a position at which the tip end passes through the fulcrum).

The binding machine according to the present application may further include a second guiding portion configured to move in the forward direction together with the driver and configured to guide an inside of the second leg portion.

The binding machine may include a slider configured to move in the forward direction together with the driver and configured to cause the displacement portion to operate. Here, the second guiding portion may be provided in the slider and may move in the forward direction as the slider moves in the forward direction.

The binding machine may further include a movable support wall configured to move to a position in a rearward direction with respect to the second guiding portion moved in the forward direction, and configured to guide the inside of the second leg portion by the movement thereof.

The present application discloses a binding machine binding a first object and a second object by using a staple that includes a first leg portion, a second leg portion, and a main body portion connecting the first leg portion and the second leg portion, and that has an opening formed between the first leg portion and the second leg portion. The binding machine includes a first displacement portion that is configure to displace the first leg portion so as to be engageable with the first object, and a second displacement portion that is configured to displace the second leg portion so as to surround the second object by using the first leg portion, the second leg portion, and the main body portion, and to be engageable with the first object.

In a top view, the second displacement portion may be able to displace the second leg portion to a position at which the second leg portion intersects the first leg portion.

The binding machine may include a first insertion portion into which the first object is to be inserted and a second insertion portion into which the second object is to be inserted. Further, the first displacement portion may be configured to displace a tip end portion of the first leg portion so as to engage with the first object inserted into the first insertion portion, and the second displacement portion may be configured to displace the second leg portion so as to surround the second object inserted into the second insertion portion.

The binding machine may include a movement portion that is configured to move the staple in an opening direction of the staple. Further, the second displacement portion may displace the second leg portion in the inward direction of the staple as the movement portion moves in the opening direction.

The movement portion may include a driver movable in the opening direction.

The movement portion may include a slider movable in the opening direction.

The movement portion may include the driver and the slider that are movable in the opening direction.

The second displacement portion may curve the second leg portion in the inward direction of the staple as the movement portion moves in the opening direction.

The second displacement portion may bend the second leg portion in the inward direction of the staple as the slider of the movement portion moves in the opening direction.

The second displacement portion may include an arm that is provided outside the second leg portion and that is configured to bend the second leg portion by being in contact with the movement portion moving in the opening direction.

The first displacement portion may be engaged with the first object by curving the tip end portion of the first leg portion in an arc shape as the movement portion moves in the opening direction.

The first displacement portion may include a first insertion portion into which the first object and the first leg portion are to be inserted.

The first insertion portion may include an inner wall configured to be engaged with the inserted first object by bending the tip end portion of the inserted first leg portion in an arc shape.

The first displacement portion may be configured to fold back the tip end portion of the first leg portion to sandwich the first object.

The present application discloses a binding method. This binding method is a binding method binding a first object and a second object by using a staple that includes a first leg portion, a second leg portion, and a main body portion connecting the first leg portion and the second leg portion, and that has an opening formed between the first leg portion and the second leg portion. The binding method includes a step of displacing the first leg portion and engaging the first object with the first leg portion; and a step of displacing the second leg portion so as to surround the second object by using the first leg portion, the second leg portion, and the main body portion, and engaging the first object with the second leg portion.

The step of displacing the first leg portion and engaging the first object with the first leg portion may include a step of advancing a tip end of the first leg portion in a downward direction separated from a plane penetrating through the first leg portion, the second leg portion, and the main body portion.

The step of displacing the second leg portion so as to surround the second object by using the first leg portion, the second leg portion, and the main body portion, and engaging the first object with the second leg portion may include a step of advancing a tip end of the second leg portion in an upward direction separated from the plane.

The step of displacing the first leg portion and engaging the first object with the first leg portion may include a step of displacing a portion that is within a first distance from a tip end of the first leg portion and engaging the first object with the first leg portion.

The step of displacing the second leg portion so as to surround the second object by using the first leg portion, the second leg portion, and the main body portion, and engaging the first object with the second leg portion may include a step of displacing a portion that is within a second distance larger than the first distance from a tip end of the second leg portion and engaging the first object with the second leg portion.

The step of displacing the second leg portion so as to surround the second object by using the first leg portion, the second leg portion, and the main body portion, and engaging the first object with the second leg portion may include a step of displacing, in a top view, the second leg portion in a first rotation direction to a position at which the second leg portion intersects the first leg portion, and allowing a tip end portion of the second leg portion to pass through a gap between the first object and the second object, and a step of displacing the second leg portion in a second rotation direction opposite to the first rotation direction, and engaging, with the first object, the tip end portion of the second leg portion passing through the gap between the first object and the second object.

The step of displacing, in the top view, the second leg portion in the first rotation direction to the position at which the second leg portion intersects the first leg portion, and allowing the tip end portion of the second leg portion to pass through the gap between the first object and the second object may include a step of bending the tip end portion of the second leg portion in the second rotation direction opposite to the first rotation direction while bending the second leg portion in the first rotation direction.

The step of displacing the first leg portion and engaging the first object with the first leg portion may include a step of bending the tip end portion of the first leg portion in the first rotation direction and engaging the first object with the tip end portion of the first leg portion.

Here, the top view refers to a viewpoint viewed from a direction perpendicular to a plane penetrating through the first leg portion, the second leg portion, and the main body portion before the binding, and may be referred to as a plan view.

In the present disclosure, the description "binding a first object and a second object" refers to restricting the movement of the second object with respect to the first object. Here, the staple used for binding does not necessarily come into contact with the first object or the second object. For example, even when the staple does not come into contact with the second object, it is possible to restrict the movement of the second object with respect to the first object by engaging with the first object in a state in which the staple surrounds the second object, and thus the description "binding a first object and a second object" includes such a state.

In the present disclosure, the description "bend" or the description "fold" refers to local bending. Therefore, in a case of bending, a portion other than a locally bent portion substantially maintains an original shape. For example, when a linearly extending member is bent, a portion other than the locally bent portion substantially maintains a linearly extending shape.

In the present disclosure, the description "curve" refers to bending in a bow shape within a predetermined range. Therefore, in a case of curving, the curved member is deformed smoothly within a predetermined range.

In the present disclosure, the description "bend" includes bending and curving.

In the present disclosure, the "first leg portion" refers to a portion including one end portion of the staple, and the "second leg portion" refers to a portion including the other end portion of the staple. The "first leg portion" according to the present disclosure is not limited to the first leg portion described in embodiments, and the "second leg portion" according to the present disclosure is not limited to the second leg portion described in the embodiments. For example, the "first leg portion" according to the present disclosure may have a shape of the second leg portion described in the embodiments, and the "second leg portion" according to the present disclosure may have a shape of the first leg portion described in the embodiments.

In the present disclosure, in addition to a form of accommodating the entire staple and holding the staple, the description "hold a staple" includes a form of holding the staple such that a part of the staple (for example, one or both end portions of a leg portion of the staple) is exposed to the outside. The staples held by the magazine may be connected to each other by using an adhesive or the like.

## Claims

1. A binding machine, comprising:
a magazine configured to hold a staple that includes a first leg portion and a second leg portion, and that has an opening between the first leg portion and the second leg portion;
a driver configured to move the staple held by the magazine in a forward direction with the opening at the front;
a guiding portion configured to guide an inside of the first leg portion when the staple is moved by the driver; and
a displacement portion configured to bind an object to be bound inserted into the opening by displacing the first leg portion of the staple moved by the driver, wherein
the guiding portion retracts from a guide position for guiding the inside of the first leg portion when the staple moves by a predetermined distance.

2. The binding machine according to claim 1, wherein
the guiding portion is configured to move in a downward direction and configured to retract from the guide position.

3. The binding machine according to claim 2, wherein
the guiding portion is configured to come into contact with the staple and configured to move in the downward direction.

4. The binding machine according to claim 3, wherein
the guiding portion has an inclined surface that is inclined in an upward direction toward a rearward direction and that is configured to be in contact with the staple.

5. The binding machine according to claim 1, wherein
the guiding portion is configured to move in an upward direction and configured to retract from the guide position.

6. The binding machine according to claim 5, wherein
the guiding portion is configured to come into contact with the staple and configured to move in the upward direction.

7. The binding machine according to claim 6, wherein
the guiding portion has an inclined surface that is inclined in a downward direction toward a rearward direction and that is configured to be in contact with the staple.

8. The binding machine according to claim 1, wherein
the guiding portion is provided above the magazine.

9. The binding machine according to claim 1, wherein
the guiding portion has a wall surface that is configured to guide the inside of the first leg portion and that is parallel to a forward-rearward direction.

10. The binding machine according to claim 1, wherein
the displacement portion includes a fulcrum portion positioned in an inward direction of the first leg portion, and a bending portion positioned in an outward direction of the first leg portion and configured to bend the first leg portion in the inward direction with the fulcrum portion as a fulcrum, and
the predetermined distance is at least a distance by which a tip end of the first leg portion passes through the fulcrum portion.

11. The binding machine according to claim 1, wherein
the displacement portion includes a fulcrum portion positioned in an inward direction of the first leg portion, and a bending portion positioned in an outward direction of the first leg portion and configured to bend the first leg portion in the inward direction with the fulcrum portion as a fulcrum,
the bending portion includes an engagement portion that is configured to be engaged with the first leg portion and that is configured to bend back the first leg portion bent in the inward direction, and
the predetermined distance is at least a distance by which a tip end of the first leg portion passes through the engagement portion.

12. The binding machine according to claim 1, further comprising:
a second guiding portion configured to move in the forward direction together with the driver and configured to guide an inside of the second leg portion.

13. The binding machine according to claim 12, further comprising:
a slider configured to move in the forward direction together with the driver and configured to cause the displacement portion to operate, wherein
the second guiding portion is provided in the slider and moves in the forward direction as the slider moves in the forward direction.

14. The binding machine according to claim 13, further comprising:
a movable support wall configured to move to a position in a rearward direction with respect to the second guiding portion moved in the forward direction, and configured to guide the inside of the second leg portion by the movement thereof.

15. The binding machine according to claim 1, wherein
the guiding portion is positioned at a front of a main body portion of the staple, the main body portion connecting the first leg portion and the second leg portion.

16. The binding machine according to claim 1, further comprising:
a biasing member configured to bias the guiding portion in a direction opposite to a direction in which the guiding portion retracts.
